(19) Europäisches Patentamt
European Patent Office
Office européen des brevets

(11) **EP 4 617 808 A1**

(12) **EUROPEAN PATENT APPLICATION**
published in accordance with Art. 153(4) EPC

(43) Date of publication:
**17.09.2025   Bulletin 2025/38**

(21) Application number: **23945678.3**

(22) Date of filing: **27.11.2023**

(51) International Patent Classification (IPC):
***G05D 1/00*** (2024.01)

(52) Cooperative Patent Classification (CPC):
**B62D 57/032; G05D 1/00; G05D 1/43**

(86) International application number:
**PCT/CN2023/134493**

(87) International publication number:
**WO 2025/015799 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **14.07.2023   CN 202310876039**

(71) Applicant: **Tencent Technology (Shenzhen)
Company Limited
Shenzhen, Guangdong 518057 (CN)**

(72) Inventors:
- **WANG, Shuai
  Shenzhen, Guangdong 518057 (CN)**
- **ZHOU, Qinqin
  Shenzhen, Guangdong 518057 (CN)**
- **ZHENG, Yu
  Shenzhen, Guangdong 518057 (CN)**

(74) Representative: **Nederlandsch Octrooibureau
P.O. Box 29720
2502 LS The Hague (NL)**

(54) **BALANCE CONTROL METHOD AND APPARATUS FOR WHEEL-LEGGED ROBOT, DEVICE AND STORAGE MEDIUM**

(57)    A balance control method and apparatus for a wheel-legged robot, a device, and a storage medium, relating to the technical field of robots. A wheel-legged robot comprises: a moving wheel, n connecting rods, and n rotating joins; the moving wheel is connected to a first connecting rod among the n connecting rods by means of a first rotating joint among the n rotating joints; the n connecting rods are connected in series by means of n-1 rotating joints other than the first rotating joint; and n is a positive integer greater than or equal to 2. The method comprises: obtaining a state variable of the wheel-legged robot at a first moment; on the basis of a kinetic equation and the state variable at the first moment of the wheel-legged robot, determining kinetic model parameters; on the basis of the state variable at the first moment, establishing a sliding mode surface; on the basis of the sliding mode surface and the kinetic model parameters, calculating the rotating torque of the n rotating joins; and on the basis of the rotating torque of the n rotating joints, controlling the rotating joints. The postures of the n connecting rods in the robot during balance adjustment are adjustable, and the robustness during balance adjustment is improved.

FIG. 11

**Description**

RELATED APPLICATION

This application claims priority to Chinese Patent Application No. 202310876039.9, entitled "BALANCE CONTROL METHOD AND APPARATUS FOR WHEEL-LEGGED ROBOT, DEVICE, AND STORAGE MEDIUM" filed on July 14, 2023, which is incorporated herein by reference in its entirety.

FIELD OF THE TECHNOLOGY

The present disclosure relates to the technical field of artificial intelligence, and in particular, to a balance control method and apparatus for a wheel-legged robot, a device, and a storage medium.

BACKGROUND OF THE DISCLOSURE

With the continuous development of robot technology, wheel-legged robots have emerged, in which moving wheels and leg mechanisms are connected through joints. The wheel-legged robots combine the mobility advantages of both wheeled robots and legged robots.

In related arts, to improve the balance ability of the wheel-legged robots during movement, the leg mechanisms and a torso mechanism of each wheel-legged robot are regarded as a whole, and the rotation torque of a joint motor between the moving wheel and each leg mechanism is calculated. An angle between the moving wheel and each leg mechanism is changed through the rotation of the joint motor to maintain the balance ability of the wheel-legged robot.

However, in the balance control process in the related arts, the attitude change flexibility of the wheel-legged robots is poor, making it difficult to maintain balance under various disturbances. The robustness of balance control for the wheel-legged robots still needs to be further improved.

SUMMARY

Embodiments of the present disclosure provide a balance control method and apparatus for a wheel-legged robot, a device, and a storage medium. The technical solutions are as follows.

According to an aspect, an embodiment of the present disclosure provides a balance control method for a wheel-legged robot. The method is executed by a computer device. The wheel-legged robot includes: a moving wheel, $n$ links, and $n$ rotating joints, the moving wheel being connected to a first link of the $n$ links through a first rotating joint of the $n$ rotating joints, and the $n$ links being connected in series through $n-1$ rotating joints other than the first rotating joint, where $n$ being a positive integer greater than or equal to 2; the method includes:

acquiring a state parameter value of the wheel-legged robot at a first time point, the state parameter value at the first time point indicating a motion state of the wheel-legged robot at the first time point;
determining dynamics model parameters according to a dynamics equation of the wheel-legged robot and the state parameter value at the first time point, the dynamics model parameters being configured for defining a mapping relationship between an angular acceleration at the first time point and a rotation torque at a second time point, the angular acceleration at the first time point including angular accelerations of the $n$ links and an angular acceleration of the moving wheel, and the rotation torque at the second time point including rotation torques of the $n$ rotating joints;
establishing a sliding surface according to the state parameter value at the first time point, the state parameter value of the wheel-legged robot gradually approaching a stable value on the sliding surface;
calculating the rotation torques of the $n$ rotating joints according to the sliding surface and the dynamics model parameters; and
controlling the $n$ rotating joints according to the rotation torques of the $n$ rotating joints at the second time point.

According to an aspect, an embodiment of the present disclosure provides a balance control apparatus for a wheel-legged robot. The wheel-legged robot includes: a moving wheel, $n$ links, and $n$ rotating joints, the moving wheel being connected to a first link of the $n$ links through a first rotating joint of the $n$ rotating joints, and the $n$ links being connected in series through $n-1$ rotating joints other than the first rotating joint, where $n$ being a positive integer greater than or equal to 2; the apparatus includes:

a state acquisition module configured to acquire a state parameter value of the wheel-legged robot at a first time point, the state parameter value at the first time point indicating a motion state of the wheel-legged robot at the first time point;
a parameter determination module configured to determine dynamics model parameters according to a dynamics equation of the wheel-legged robot and the state parameter value at the first time point, the dynamics model parameters being configured for defining a mapping relationship between an angular acceleration at the first time point and a rotation torque at a second time point, the angular acceleration at the first time point including angular accelerations of the n links and an angular acceleration of the moving wheel, and the rotation torque at the second time point including rotation torques of the n rotating joints;

a sliding surface establishment module configured to establish a sliding surface according to the state parameter value at the first time point, the state parameter value of the wheel-legged robot gradually approaching a stable value on the sliding surface;

a torque calculation module configured to calculate the rotation torques of the n rotating joints according to the sliding surface and the dynamics model parameters; and

a joint rotation module configured to control the n rotating joints according to the rotation torques of the n rotating joints at the second time point.

According to an aspect, an embodiment of the present disclosure provides a computer device. The computer device includes a processor and a memory. The memory has a computer program stored therein. The computer program is loaded and executed by the processor to implement the balance control method for the wheel-legged robot described above.

According to an aspect, an embodiment of the present disclosure provides a computer-readable storage medium. The computer-readable storage medium has a computer program stored therein. The computer program is loaded and executed by a processor to implement the balance control method for the wheel-legged robot described above.

According to an aspect, an embodiment of the present disclosure provides a computer program product. The computer program product includes a computer program. The computer program is loaded and executed by a processor to implement the balance control method for the wheel-legged robot described above.

The technical solutions provided in the embodiments of the present disclosure may bring the following beneficial effects:

To sum up, by abstracting the wheel-legged robot into a multi-level inverted pendulum model, the deflection angles of multiple links of the wheel-legged robot can be adjusted in the balance control process, thereby changing the attitude of the wheel-legged robot. Compared with the related arts in which the included angle between the moving wheel and each leg link can only be adjusted in the balance control process, this solution makes the attitudes of multiple links of the wheel-legged robot changeable in the balance adjustment process, thereby greatly enriching the attitudes of the robot, helping to quickly adjust the robot to a balanced state, also improving the robot's ability to restore to a balanced state under different disturbance forces, and improving the robustness of the balance control process of the robot.

BRIEF DESCRIPTION OF THE DRAWINGS

FIG. 1 is a schematic diagram of an implementation environment of a solution according to an embodiment of the present disclosure.

FIG. 2 is a schematic diagram of a quadruped wheel-legged robot according to an embodiment of the present disclosure.

FIG. 3 is a schematic diagram of a quadruped wheel-legged robot according to an embodiment of the present disclosure.

FIG. 4 is a schematic diagram of a quadruped wheel-legged robot in a double wheel mode according to an embodiment of the present disclosure.

FIG. 5 is a schematic diagram of a quadruped wheel-legged robot when climbing stairs according to an embodiment of the present disclosure.

FIG. 6 is a schematic planar diagram of motions of a robot when going upstairs according to an embodiment of the present disclosure.

FIG. 7 is a schematic diagram of a motion sequence of a robot when going upstairs and downstairs according to an embodiment of the present disclosure.

FIG. 8 is a block diagram of a robot control system according to an embodiment of the present disclosure.

FIG. 9 is a schematic diagram of a double inverted pendulum according to an embodiment of the present disclosure.

FIG. 10 is a schematic diagram of an n-level inverted pendulum according to an embodiment of the present disclosure.

FIG. 11 is a flowchart of a balance control method for a wheel-legged robot according to an embodiment of the present disclosure.

FIG. 12 is a schematic diagram of an equivalent process according to an embodiment of the present disclosure.

FIG. 13 is a schematic diagram of an inverted pendulum related to a mass center according to an exemplary embodiment of the present disclosure.

FIG. 14 is a schematic simulation diagram of a double-wheel balance control method according to an exemplary embodiment of the present disclosure.

FIG. 15 is a schematic simulation diagram of a double-wheel balance control method according to another exemplary embodiment of the present disclosure.

FIG. 16 is a block diagram of a balance control apparatus for a wheel-legged robot according to an embodiment of the present disclosure.

FIG. 17 is a structural block diagram of a computer device according to an embodiment of the present disclosure.

DESCRIPTION OF EMBODIMENTS

Artificial intelligence (AI) involves a theory, a method, a technology, and an application system that use a digital computer or a machine controlled by the digital computer to simulate, extend, and expand human intelligence, perceive an environment, obtain knowledge, and use the knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The technical solution of the present disclosure mainly involves a robot technology in artificial intelligence, and mainly involves intelligent control of robots. Robots are mechanical and electronic devices that combine mechanical transmission and modern microelectronics technology to mimic certain human skills. Robots have been developed based on electronic, mechanical, and information technologies. Robots do not necessarily have to look like humans. As long as they can autonomously complete tasks and instructions assigned to them by humans, they belong to the family of robots. Robots are automated machines that possess some intelligent abilities similar to humans or organisms, such as abilities of perception, planning, motion, and collaboration, and are highly flexible automated machines. With the development of the computer technology and the artificial intelligence technology, robots have greatly improved in terms of functionality and technical level, and mobile robots and robot vision and touch technologies are typical representatives.

In the technical solution provided in the embodiment of the present disclosure, each operation may be performed by a computer device. The computer device refers to an electronic device having data computing, processing, and storage capabilities.

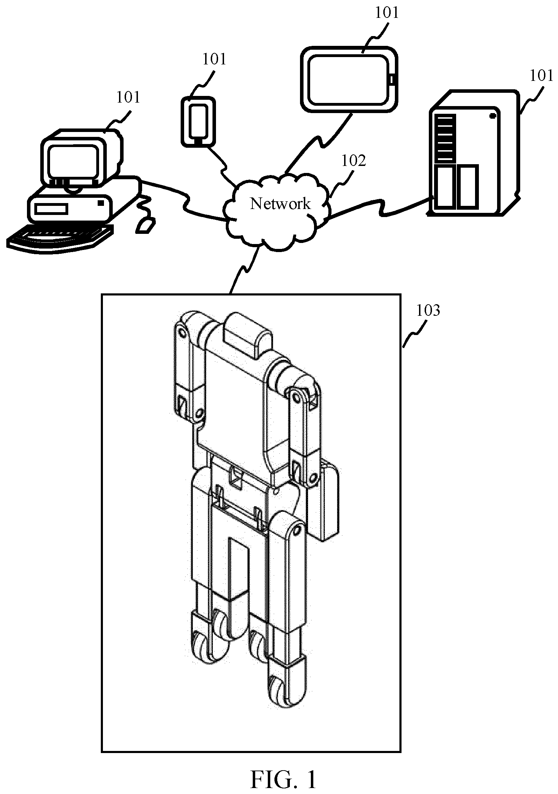

In some embodiments, the computer device may be a Personal Computer (PC) device configured for controlling a robot, such as a desktop computer or a laptop; and it may also be a server configured for controlling a robot. The server may be an independent physical server, or may be a server cluster composed of a plurality of physical servers or a distributed system, and may further be a cloud server providing a cloud computing service. The computer device and the robot may be connected through a physical line, a network, or the like. For example, referring to FIG. 1, the computer device 101 may calculate a rotation torque of a first rotating joint (equivalent to an ankle joint) connecting a moving wheel and a leg mechanism (corresponding to a first link) according to a current state parameter value of a robot 103, as well as rotation torques of other n-1 rotating joints that can be abstracted into an n-level inverted pendulum model together with the first link and the moving wheel. The attitude of the robot 103 can be adjusted by adjusting the rotation torques of the n rotating joints, so that the robot 103 is in a balanced state.

In some embodiments, the computer device may also be the robot itself, that is, each operation in the technical solution provided in the embodiment of the present disclosure is executed by the robot. For example, referring to FIG. 1, the computer device 101 may transmit the state parameter value of the robot 103 at the first time point to the robot 103 through a network 102. The robot 103 calculates the rotation torques of the n rotating joints according to the state parameter value at the first time point, and adjusts the attitude of the robot 103 by controlling rotating motors of the n rotating joints through the rotation torques of the n rotating joints, so that the robot 103 maintains a balanced state.

In the embodiment of the present disclosure, the robot may refer to a wheel-legged robot, a footed robot, etc., the wheel-legged robot refers to a robot that has a wheeled structure and leg capabilities at the same time, and the footed robot refers to a robot that uses feet as foot parts. This is not limited in the embodiment of the present disclosure.

In an example, the robot 103 may include at least one moving wheel. For each moving wheel of the at least one moving wheel, the moving wheel is connected to a corresponding leg mechanism through a first rotating joint.

In the embodiment of the present disclosure, the wheel-legged robot includes a moving wheel and at least two links. The at least two links can be equivalent to links in an n-level inverted pendulum model. That is to say, the wheel-legged robot includes a moving wheel and n links. The n links are connected in series through n-1 rotating joints. A first link of the n links is connected to the moving wheel through a first rotating joint.

The wheel-legged robot includes at least one leg mechanism. Any leg mechanism of the at least one leg mechanism is provided with a corresponding moving wheel. For example, a leg mechanism 1 corresponds to a moving wheel 1, and the leg mechanism 1 is connected to the moving wheel 1 through a first rotating joint 1.

In some embodiments, the at least one leg mechanism may be divided into an outer leg group and an inner leg group, the outer leg group includes at least two leg mechanisms, and the inner leg group includes at least one leg mechanism.

Exemplarily, the robot in the embodiment of the present disclosure will be described by taking the wheel-legged robot as an example.

The at least one leg mechanism is divided into an outer leg mechanism and an inner leg mechanism. The outer leg mechanism includes at least two leg mechanisms. The inner leg mechanism may also include at least two leg mechanisms. The at least two leg mechanisms included in the outer leg mechanism are respectively located on two sides of a central axis (i.e., sagittal plane) of the wheel-legged robot. The at least two leg mechanisms included in the inner leg mechanism are respectively located on the two sides of the central axis of the wheel-legged robot. The outer leg mechanisms and the inner leg mechanisms, i.e., rotation centers of hip joints corresponding to the outer leg mechanisms and rotation centers of hip joints corresponding to the inner leg mechanisms, are located on the same vertical plane.

Exemplarily, the wheel-legged robot is a quadruped wheel-legged robot, that is, the wheel-legged robot includes two outer leg mechanisms and two inner leg mechanisms. The wheel-legged robot may also be a tripedal wheel-legged robot, that is, the wheel-legged robot includes two outer leg mechanisms and one inner leg mechanism. The hip joint corresponding to at least one inner leg mechanism in the inner leg mechanism group is located between the hip joints corresponding to the two outer leg mechanisms in the outer leg mechanism group. The rotation centers of the hip joints corresponding to the outer leg mechanisms and the rotation center of the hip joint corresponding to the inner leg mechanism are located in the same vertical plane. The wheel-legged robot can stand on a support surface through the outer leg mechanisms or the inner leg mechanisms, can also slide on the support surface through foot wheels on the outer leg mechanisms or foot wheels on the inner leg mechanisms, and can also move (i.e., walk) on the support surface by controlling the alternating swing of the outer leg mechanism group and the inner leg mechanism group.

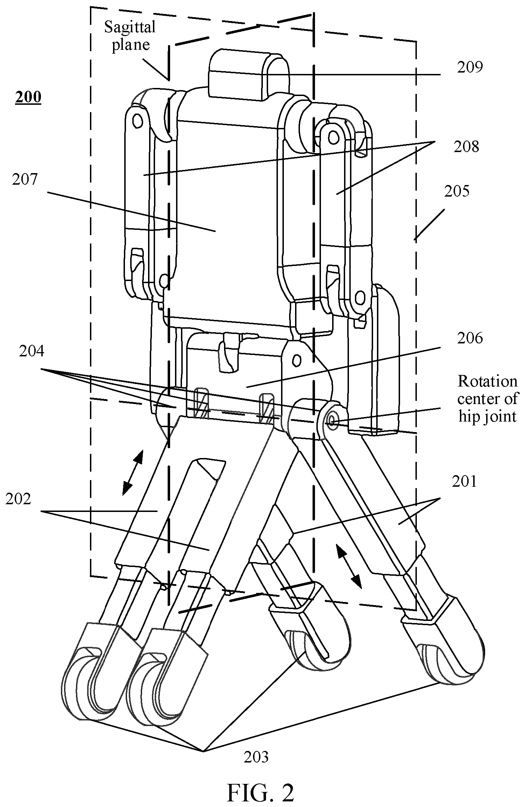

Exemplarily, referring to FIG. 2, it exemplarily shows a schematic structural diagram of a quadruped wheel-legged robot. The quadruped wheel-legged robot 200 may include a torso structure, leg mechanisms, and moving wheels.

The quadruped wheel-legged robot 200 includes four leg mechanism, including two outer leg mechanisms 201 (i.e., first leg mechanism group) and two inner leg mechanisms 202 (i.e., second leg mechanism group). The two inner leg mechanisms 202 are located between the two outer leg mechanisms 201. Four leg mechanisms may be separately extended and retracted along a direction shown. A foot wheel 203 is mounted at one end of each of the four leg mechanisms. Each foot wheel 203 may be separately driven. The quadruped wheel-legged robot 200 may stand through the two inner leg mechanisms 202 or the two outer leg mechanisms 201 to enter a two-foot-wheel support state. The quadruped wheel-legged robot 200 can stand through the two inner leg mechanisms 202 and the two outer leg mechanisms 201 to enter a four-foot-wheel support state. This is not limited in the embodiment of the present disclosure.

In some embodiments, the two inner leg mechanisms 202 may be implemented as a whole, that is, the quadruped wheel-legged robot 200 may be implemented as a tripedal wheel-legged robot with only one inner leg mechanism.

The other end of each of the four leg mechanisms is connected to a hip joint 204. Each leg mechanism may rotate around its respective hip joint 204 and maintain linkage. In the embodiment of the present disclosure, the rotation centers of the hip joints 204 corresponding to the quadruped wheel-legged robot 200 are located on the same vertical plane 205, and the rotation planes of the leg mechanisms corresponding to the quadruped wheel-legged robot 200 are parallel. The hip joints 204 corresponding to the two inner leg mechanisms 202 are located between the hip joints 204 corresponding to the two outer leg mechanisms 201.

In some embodiments, the hip joints 204 corresponding to the quadruped wheel-legged robot 200 may be coaxial, that is, the rotation centers of the hip joints 204 are located on the same straight line. The hip joints 204 corresponding to the quadruped wheel-legged robot 200 may also be non-coaxial. For example, the hip joints 204 corresponding to the two inner leg mechanisms 202 are coaxial, and the hip joints 204 corresponding to the two outer leg mechanisms 201 are coaxial, but the hip joints 204 corresponding to the two inner leg mechanisms 202 are non-coaxial with the hip joints 204 corresponding to the two outer leg mechanisms 201. Each hip joint 204 may be used as the rotating joint connected to the first link of the n rotating joints in the embodiment of the present disclosure. One end of the first link is connected to the first rotating joint, and the other end is connected to hip joint 204.

In some embodiments, the hip joints 204 corresponding to the two outer leg mechanisms 201 may share a driving motor, so that the two outer leg mechanisms 201 move synchronously; and the hip joints 204 corresponding to the two inner leg mechanisms 202 may share a driving motor, so that the two inner leg mechanisms 202 move synchronously. In a feasible example, each hip joint 204 corresponding to the quadruped wheel-legged robot 200 may also be independently driven by its respective driving motor. This is not limited in the embodiment of the present disclosure.

A body of the quadruped wheel-legged robot 200 may include a waist 206, a body 207, upper limbs 208, and a head 209.

The hip joints 204 corresponding to the quadruped wheel-legged robot 200 are connected to the same end of the waist 206, and the other end of the waist 206 is connected to one end of the body (torso mechanism) 207. The waist 206 has two rotation centers, including a pitch rotation center that can allow the body 207 to pitch, and a lateral swing rotation center that can allow the body 207 to swing laterally. The lateral swing rotation center is designed to be in series with the pitch rotation center, is located at an upper end of the pitch rotation center, and is connected to the body 207.

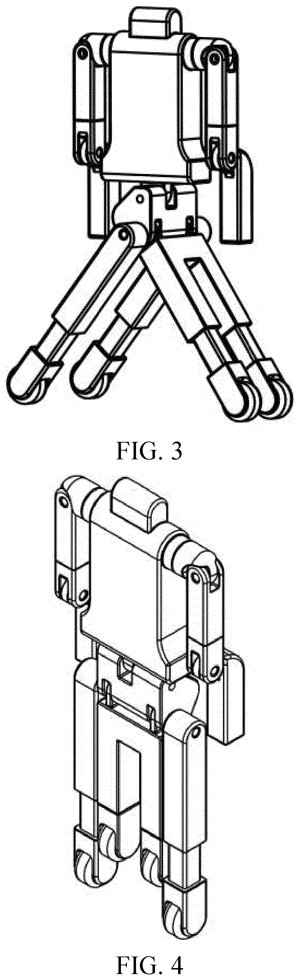

Exemplarily, if the body 207 in FIG. 2 rotates 90 degrees along the lateral swing rotation center, the robot will transition from the robot shown in FIG. 2 to the robot shown in FIG. 3.

The other end of the body 207 is connected to the upper limbs (robotic arm links) 208 and the head 209, and the upper limb 208 can be a multi degree of freedom upper limb. In some embodiments, end effectors such as robotic claws or suction cups are deployed on the upper limbs 208. Data acquisition devices, such as an image acquisition device, a video capture device and an Inertial Measurement Unit (IMU), may be deployed in the head 209 to perceive a real environment. The IMU may be placed at a geometric center of the body 207, a center point of the hip joint (i.e., the rotation center of the hip joint), or the like. It may be configured to measure the actual acceleration, actual attitude angular velocity, actual Euler angle, and the like of the body 207.

In the technical solution provided in the embodiment of the present disclosure, the moving wheels, leg mechanisms, hip joints, waist and torso mechanism (including IMU) of the quadruped wheel-legged robot 200 are necessary hardware for a control algorithm, while other components are non-necessary hardware.

The quadruped wheel-legged robot has a more stable structure and stronger resistance to external impact disturbances than a bipedal wheel-legged robot, and has fewer redundant joints and lower design complexity than a hexapedal wheel-legged robot. In addition, it can bear large loads, travel in narrow spaces, and perform tasks on objects of different heights. The quadruped wheel-legged robot has strong adaptability to the environment.

The balance control method for the wheel-legged robot provided in the embodiment of the present disclosure is applicable to various scenarios, such as the balance of the wheel-legged robot during movement. The balance control method for the wheel-legged robot provided in the embodiment of the present disclosure can flexibly control the rotation of multiple joints of the wheel-legged robot in the balance control process, thereby enriching the attitudes of the robot in the balance control process and helping to control the robot to quickly reach a balanced state.

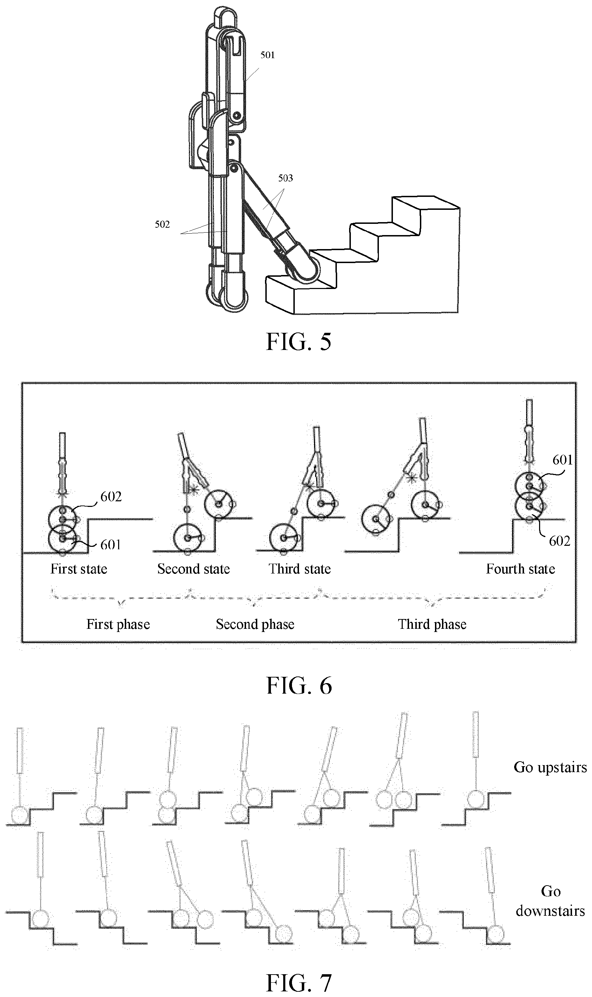

When moving on a flat ground, the robot may maintain a four-wheel motion mode as shown in FIG. 2, or form a double-wheel dynamic smooth motion mode as shown in FIG. 4 through the rotation centers of the hip joints. In the four-wheel motion mode, the robot is always in a steady state (it does not fall), helping the upper limbs to follow the operation instructions and perform some operation tasks. However, when moving on the flat ground, switching from the four-wheel motion mode to the double-wheel motion mode can reduce the area occupied by the robot and make it match with the bipedal robot. When moving on a non-flat ground, for example, when going upstairs or crossing a threshold, the robot can dynamically cross obstacles through the double-wheel alternating mode shown in FIG. 5.

In some embodiments, referring to FIG. 5, when the wheel-legged robot 501 needs to go upstairs, it may first construct an objective function corresponding to a stair climbing task to be executed, and then control an outer leg mechanism group 502 (i.e., first leg mechanism group) and an inner leg mechanism group 503 (i.e., second leg mechanism group) of the robot 501 to alternately swing according to the joint torque information of the robot 501 when the value of the objective function is minimized, so as to perform the stair climbing task. For example, first, the outer leg mechanism group 502 is used as a support leg mechanism group and the inner leg mechanism group 503 is used as a swing leg mechanism group, so that the robot 501 climbs a first step; then, the inner leg mechanism group 503 is used as the support leg mechanism group and the outer leg mechanism group 502 is used as the swing leg mechanism group, so that the robot 501 climbs a second step. The outer leg mechanism group 502 and the inner leg mechanism group 503 swing alternately in sequence to complete the stair climbing task.

FIG. 6 is a schematic planar diagram of motions of a robot when going upstairs according to an exemplary embodiment of the present disclosure. In FIG. 6, a left leg mechanism and a right leg mechanism of the robot completely overlap. Therefore, in FIG. 6, the leg mechanisms respectively connected to the two wheels of the robot represent the first leg mechanism and the second leg mechanism of the robot. Considering the specific form in the process of going upstairs, the robot shown in FIG. 6 will be not in contact with the same support surface at the same time when the wheels are on the ground, so as to conform to the actual motion state when going upstairs. The entire motion process of the robot may also be divided into a Single Support Phase (SSP) and a Double Support Phase (DSP).

A first state shown in FIG. 6 is the single support phase, at which the first leg mechanism 601 of the robot is in contact with the support surface, the second leg mechanism 602 is not in contact with the support surface, and the first leg mechanism 601 is collaboratively controlled by using the wheels and the joints of the body to maintain the balance of the robot. At a first phase, the robot swings the second leg mechanism 602, and gradually lifts it up from a vertically downward gravity direction at the beginning until it rests on an upper step, entering a second state, which is a double support phase. In the process of the first phase, the first leg mechanism 601 is a support wheel leg, and the second leg mechanism 602 is a swing wheel leg. At a second phase, the robot always maintains two contact points between the wheels and the support surface in this plane. In this process, the robot changes the angles of all joints of the body. While keeping the contact points between the two wheels and the support surface unchanged, the projection of the mass center of the body on the support surface is gradually moved from a position close to a center of a rear wheel on the next step to near a center of a front wheel on the previous step, entering a third state, which is a double support phase. At a third phase, the robot lifts the first leg mechanism 601 from a lower step and uses the second leg mechanism 602 to maintain the balance of the robot until the first leg mechanism 601 and the second leg mechanism 602 overlap in a vertical direction, entering a fourth state, which is a single support phase. In the process of the third phase, the second leg mechanism 602 is a support wheel leg, and the first leg mechanism 601 is a swing wheel leg.

In a process that the robot moves up another step, the support leg mechanism and the swing leg mechanism will exchange. In the periodic motion of going upstairs, the support leg mechanism and the swing leg mechanism periodically exchange. Similarly, the division of a phase of a task that the robot goes downstairs is the same as the division of the phase of the task of going upstairs described above, except that the motion direction of each leg mechanism is opposite to the motion direction of each leg mechanism in the task of going upstairs. Therefore, the task that the robot goes downstairs will not be repeated here. For the specific process, a reference may be made to the schematic diagram of the motion sequence of the robot when going upstairs and downstairs shown in FIG. 7, which will not be described in detail.

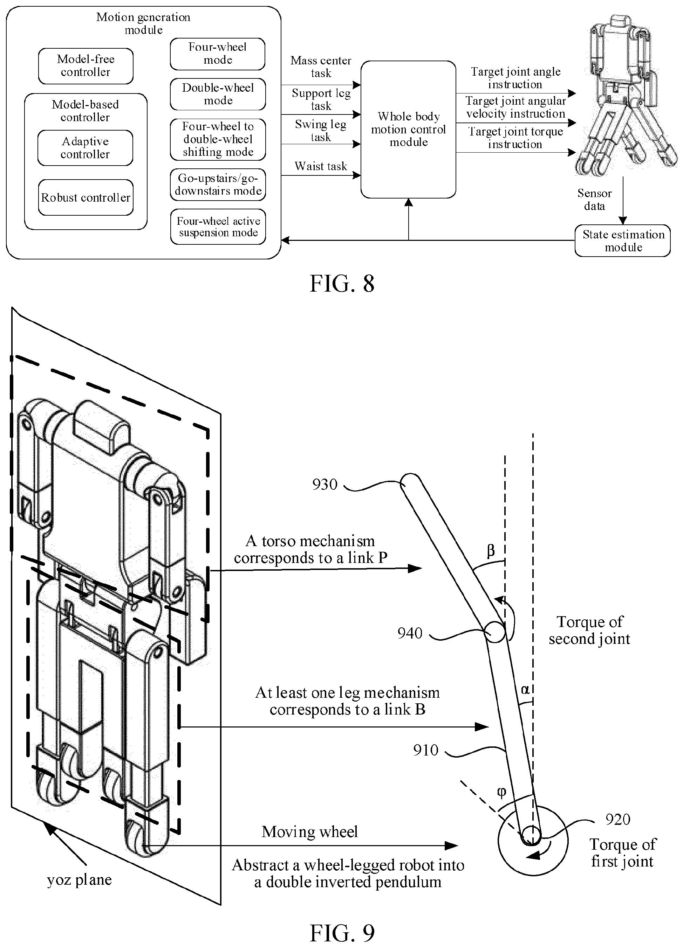

Please refer to FIG. 8. It shows a block diagram of a robot control system according to an embodiment of the present disclosure. For a body of a robot, a reference may be made to FIG. 2. Four moving wheels of the robot are driven separately by four rotating motors. The lengths of four moving leg mechanisms are driven separately by four linear motors. Generally, the driving modes of the linear motors of two outer moving legs are the same, and the driving modes of the linear motors of two inner moving legs are the same.

In some embodiments, the lengths of the two outer moving legs are equal, and the lengths of the two inner moving legs are equal. The changing speeds of the lengths of the two outer moving legs are equal, and the changing speeds of the lengths of the two inner moving legs are equal.

The two outer moving legs are driven by the same rotating motor. The rotating motor is configured to adjust included angles between the outer moving legs and a straight line L1 perpendicular to the direction of the contact surface, that is, the included angles between the two outer moving legs and the straight line L1 are equal. The two inner moving legs are driven by the same rotating motor. The rotating motor is configured to adjust included angles between the inner moving legs and the straight line L1, that is, the included angles between the two inner moving legs and the straight line L1 are equal.

In addition, each joint of a torso mechanism of the wheel-legged robot is provided with a rotating motor, and the rotation of each joint can be actively driven by the rotating motor.

For all rotating motors mentioned above, each rotating motor may receive a rotation angle instruction, a rotation speed instruction, a rotation torque instruction, etc. The rotation angle instruction is configured for indicating a rotation angle of the rotating motor, the rotation speed instruction is configured for indicating a rotation speed and direction of the rotating motor, and the rotation torque instruction is configured for indicating a torque that needs to be reached in the rotation process of the rotating motor.

After the rotating motor receives any one of the above-mentioned rotation angle instruction, rotation speed instruction, and rotation torque instruction, a low-level driver board for the rotating motor will drive the motor to rotate according to the received instruction, so as to drive each joint to move.

For all linear motors mentioned above, each linear motor may receive a linear movement position instruction, a linear movement speed instruction, a driving force instruction, etc. A low-level driver board for the linear motor will drive the motor to move linearly according to the received instruction, so as to drive each leg mechanism to extend and retract.

The rotation and movement of the rotating motors and linear motors change the attitude and position of the robot in three-dimensional space, thereby achieving the balance control of the wheel-legged robot. Rapidly changing joint angle instructions may also control the attitude of the robot to change dynamically, so as to change the contact situation between the robot and the environment.

Since the attitudes and states (such as motion states) of the wheel-legged robot at different moments are different, it is necessary to acquire the attitude information and motion state information of the wheel-legged robot through sensors arranged on the wheel-legged robot, so as to generate instruction signals and achieve the balance control and motion state of the wheel-legged robot.

In some embodiments, the state of the wheel-legged robot may be acquired by different sensors mounted on the body of the wheel-legged robot. The sensors include at least one of the following sensors:

an IMU sensor, configured to determine an attitude of the wheel-legged robot, including position information and attitude information of the wheel-legged robot;
a motor encoder, configured to determine a rotation speed of each joint of the wheel-legged robot in a current state, position information related to movement, and speed information of rotation and movement;
a force/torque sensor, configured to determine a magnitude of a force acting on a joint where the force/torque sensor is located at a current moment, and a magnitude and direction of a torque;
a tactile sensor, configured to determine a magnitude of a pressure at a contact position between the moving wheel of the wheel-legged robot and the contact surface, on a body surface, inside a hand, on a fingertip, or on any other body part, and change characteristics of the pressure in a period of time; and

a visual sensor (such as camera or infrared sensor), configured to identify an obstacle within a field of view of the wheel-legged robot, and determine position information of the mass center of the wheel-legged robot and speed information corresponding to the mass center of the wheel-legged robot.

In some embodiments, a control system for the wheel-legged robot includes the following modules:

1. A state estimation module, configured to fuse various attitude and state information obtained by the wheel-legged robot, for example, fuse the current attitude of the wheel-legged robot obtained by the IMU sensor, the mileage information obtained from the rotation of the moving wheel, and the visual positioning information, so that the position of the wheel-legged robot in the world coordinate system can be obtained; fuse the information obtained by the force/torque sensor and the tactile sensor to obtain the contact situation between the robot and the external environment; fuse the current attitude of the wheel-legged robot obtained by the IMU sensor and the angle information of each motor joint encoder, and combine with the model parameters of the wheel-legged robot itself, so that the position of the mass center of the wheel-legged robot can be estimated. The state information of the wheel-legged robot obtained through fusion will be used as a feedback quantity for motion generation, planning, and control of the wheel-legged robot.

2. A motion generation module, configured to adopt a motion generation policy corresponding to a working mode that the wheel-legged robot is in when completing a motion. The working mode of the robot includes, but not limited to, a four-wheel motion mode, a double-wheel motion mode, a four-wheel to double-wheel shifting mode, a go-upstairs/go-downstairs mode, a four-wheel active suspension mode (the four-wheel active suspension mode refers to a mode in which the contact surface is uneven in a four-wheel traveling process, and the robot adjusts the attitude of the upper body by relying on the four wheels to maintain the attitude of the upper body to be relatively stable), a folding mode, etc. Considering the complexity of the upper body, which may be configured for completing various tasks, the motion modes of the robot may be more, which will not be listed here one by one.

The ways of motion generation vary in different modes. In these modes, some common basic technologies and algorithm modules will be invoked, including, but not limited to, a model-free controller, a model-based controller such as a Linear Quadratic Regulator (LQR) or a Model Predictive Control (MPC) controller, an adaptive controller, a robust controller, etc. In some embodiments, the robust controller in the present disclosure is implemented based on sliding mode control, and the robust controller may also be referred to as a sliding mode controller.

For example, when the wheel-legged robot is in the double-wheel mode and needs to control the balance of the moving wheels, Proportional Integral Derivative Control (PID control) of the model-free controller may be used to generate reference trajectories for the foot wheels and the mass center of the robot. Exemplarily, the specific method is to invoke one or more of the model-free controller, the model-based controller (LQR or MPC), the adaptive controller, and the robust controller.

For another example, when the wheel-legged robot is in the double-wheel control phase of the four-wheel to double-wheel shifting mode, the model-free controller, the model-based controller (LQR or MPC), the adaptive controller, and the robust controller may also be used to control the balance of the moving wheels.

For another example, when the wheel-legged robot is in the four-wheel mode, if the leg mechanisms of the wheel-legged robot that extend forward and the leg mechanisms that extend backward are made equivalent, an equivalent leg mechanism is obtained, a dynamics system composed of the equivalent leg mechanism and the torso mechanism is described by using an n-level inverted pendulum, and control trajectories obtained in this way can maintain the balance of the robot in the four-wheel state. Through this method, the wheel-legged robot can maintain the body of the wheel-legged robot to be relatively stable in case of uneven contact surfaces, potholes, or obstacles. Exemplarily, when the wheel-legged robot is in the four-wheel active suspension mode, the above module may also be used to control the body of the wheel-legged robot to be relatively stable.

The input of the motion generation module is a series of task information for the wheel-legged robot, including, but not limited to, a mass center task, tasks for support legs, tasks for swing legs, tasks for a waist, etc. Similarly, considering the complexity of the upper body of the wheel-legged robot, which can independently complete various motions and tasks, the types of task information may be more, which will not be listed here one by one.

Exemplarily, these tasks may also be used as inputs of a whole body controller (WBC) (also known as a whole body dynamics controller). In the whole body controller, the wheel-legged robot is modeled and calibrated in detail, and the dynamics model and the external force situation of the wheel-legged robot are used as optimization constraints. Through the optimization process, a target joint angle instruction, a target joint angular velocity instruction, a target joint torque instruction and the like for a target joint of at least one rotating joint of the wheel-legged robot are calculated. Finally, the whole body controller will transmit the determined target joint angle instruction, target joint angular velocity instruction, target joint torque instruction and the like to the driver of each joint of the robot, thereby completing the control loop of the wheel-legged robot.

The balance control method for the wheel-legged robot provided in the present disclosure is mainly completed by the robust controller in the control system shown in FIG. 8. In some embodiments, the balance control method is jointly completed by the robust controller and the whole body controller. For the specific content of this process, please refer to the following embodiments.

Before introducing the specific operations of the balance control method provided in the present disclosure, the method for establishing a dynamics model corresponding to the balance control method provided in the present disclosure is introduced first. To facilitate the understanding of the principle of the n-level inverted pendulum model involved in the present disclosure, a double inverted pendulum model that is relatively easy to understand is introduced first.

Please refer to FIG. 9. It shows a schematic diagram of a double inverted pendulum according to an embodiment of the present disclosure.

To achieve the balance control method for the wheel-legged robot, it is necessary to perform dynamics modeling on the wheel-legged robot to obtain a dynamics model of the wheel-legged robot in the balance control process. For the sake of clarity, conciseness, and ease of understanding, discussion is first made on the case where the length of at least one leg mechanism of the wheel-legged robot is equal, the included angle between the at least one leg mechanism and the ground is equal, and the rotation speeds and positions of moving wheels are the same. The specific details are as follows.

A world coordinate system is established, with a forward direction of the wheel-legged robot as a positive x-axis direction, a rightward movement direction as a positive y-axis direction, and an upward direction perpendicular to the contact surface as a positive z-axis direction. When observing the wheel-legged robot from the y-axis direction, it will be observed that at least one leg mechanism of the wheel-legged robot overlaps. The at least one leg mechanism may be outer leg mechanisms of the wheel-legged robot, or may be all leg mechanisms of the wheel-legged robot.

Exemplarily, the lengths of the four leg mechanisms of the wheel-legged robot change synchronously, and the angles between the four leg mechanisms and a base of the wheel-legged robot are synchronized. When observing from the direction corresponding to the y-axis, the four leg mechanisms overlap together, and the four moving wheels also overlap together. In this case, an abstract two-dimensional model of the wheel-legged robot on a yoz plane of the world coordinate system is shown in FIG. 9. This two-dimensional model is a double inverted pendulum model. The double inverted pendulum model includes a moving wheel, a link B (corresponding to at least one moving leg of the wheel-legged robot), and a link P (corresponding to a torso mechanism of the wheel-legged robot).

Referring to FIG. 9, in the two-dimensional model, a direction in which the moving wheel rotates to a left side of a contact surface is regarded as a positive direction, a traveling distance is x, an angle that the moving wheel rotates relative to the world coordinate system is defined as $\varphi$, and an anticlockwise direction is regarded as a positive direction of the rotation angle of the moving wheel. An angle that a link 910 (link B) formed after four leg mechanisms overlap rotates relative to the world coordinate system is defined as $\alpha$, and the anticlockwise direction is positive. An angle that a link 930 (link P) corresponding to the torso mechanism rotates relative to the world coordinate system is defined as $\beta$, and the anticlockwise direction is regarded as the positive direction of the rotation angle of the moving wheel.

$\dot{\varphi}, \dot{\alpha}$, and $\dot{\beta}$ are respectively defined as derivatives of $\varphi, \alpha$, and $\beta$ with respect to time, where $\dot{\varphi}$ represents a rotation speed of the moving wheel (also known as an angle of the moving wheel), $\dot{\alpha}$ represents an angular velocity of the leg mechanism, and $\dot{\beta}$ represents an angular velocity of the torso mechanism. $\ddot{\varphi}, \ddot{\alpha}$, and $\ddot{\beta}$ are respectively defined as second derivatives of $\varphi, \alpha$, and $\beta$ with respect to time, where $\ddot{\varphi}$ represents an angular acceleration of the moving wheel, $\ddot{\alpha}$ represents an angular acceleration of the leg mechanism, and $\ddot{\beta}$ represents an angular acceleration of the torso mechanism.

The angle that the moving wheel rotates relative to the world coordinate system is driven by a joint motor on a first rotating joint (equivalent to 920 in FIG. 9). A rotation torque of the first rotating joint is represented by $\tau_1$. A clockwise direction is regarded as a positive direction of the rotation torque of the first rotating joint.

The angle that the torso mechanism rotates relative to the world coordinate system is driven by a joint motor on a second rotating joint (equivalent to 940 in FIG. 9). A rotation torque of the second rotating joint is represented by $\tau_2$. The anticlockwise direction is regarded as a positive direction of the rotation torque of the second rotating joint.

Masses of the moving wheel, the link B (equivalent to at least one leg mechanism that overlaps), and the link P (equivalent to the torso mechanism) are respectively expressed as $m_W$, $m_B$, and $m_P$. Moments of inertia of the moving wheel, the link B, and the link P are respectively expressed as $J_W$, $J_B$, and $J_P$. A radius of the moving wheel is represented by $r$, a length of the link is represented by $L_B$, A length of a connecting line from an intersection point of the link B and the moving wheel to a geometric center of the link B is represented by $l_B$. A length of a connecting line from an intersection point of the link B and the wheel to a geometric center of the link P is represented by $l_P$.

(1) Based on defining the above physical quantities, expressions for total kinetic energy $T_W$ of the moving wheel, total kinetic energy $T_B$ of the link B, and total kinetic energy $T_P$ of the link P are respectively derived, and system total kinetic energy $T$ of the wheel-legged robot is obtained, where in the calculation of the total kinetic energy $T_W$ of the moving wheel, total kinetic energy $T_B$ of the link B, and total kinetic energy $T_P$ of the link P, both translational kinetic energy and rotational kinetic energy are included.

$$T_W = \frac{1}{2}m_W\, r^2\dot{\varphi}^2 + \frac{1}{2}J_W\dot{\varphi}^2$$

$$T_B = \frac{1}{2}m_B(r\dot{\varphi} + l_B\dot{\alpha}\cos\alpha)^2 + \frac{1}{2}m_B(l_B\dot{\alpha}\sin\alpha)^2 + \frac{1}{2}J_B\dot{\alpha}^2$$

$$= \frac{1}{2}m_B r^2\dot{\varphi}^2 + \frac{1}{2}m_B l_B{}^2\dot{\alpha}^2 + m_B l_B r\cos\alpha\dot{\varphi}\,\dot{\alpha} + \frac{1}{2}J_B\dot{\alpha}^2$$

$$T_P = \frac{1}{2}m_P\big(r\dot{\varphi} + L_B\dot{\alpha}\cos\alpha + l_P\dot{\beta}\cos\beta\big)^2 + \frac{1}{2}m_P\big(L_B\dot{\alpha}\sin\alpha + l_P\dot{\beta}\sin\beta\big)^2 + \frac{1}{2}J_P\big(\dot{\alpha} + \dot{\beta}\big)^2$$

$$= \frac{1}{2}m_P r^2\dot{\varphi}^2 + \frac{1}{2}m_P L_B{}^2\dot{\alpha}^2 + \frac{1}{2}m_P l_P{}^2\dot{\beta}^2 + \frac{1}{2}J_P\dot{\alpha}^2$$

$$+ \frac{1}{2}J_P\dot{\beta}^2 + m_P r L_B\cos\alpha\,\dot{\alpha}\dot{\varphi} + m_P r l_P\cos\beta\,\dot{\beta}\dot{\varphi} + m_P L_B l_P\cos\alpha\cos\beta\,\dot{\alpha}\dot{\beta}$$

$$+ m_P L_B l_P\sin\alpha\sin\beta\,\dot{\alpha}\dot{\beta} + J_P\dot{\alpha}\dot{\beta}$$

$$T = T_W + T_B + T_P$$

(2) Partial derivatives of the system total kinetic energy T with respect to each degree of freedom ($\alpha$, $\beta$, $\varphi$) in a generalized coordinate system and with respect to a derivative of each degree of freedom are respectively calculated, and derivatives of partial derivative results for the derivative of each degree of freedom with respect to time are respectively calculated. The specific process is as follows.

A partial derivative $\dfrac{\partial T}{\partial \dot{\varphi}}$ of the system total kinetic energy $T$ with respect to the angular velocity $\dot{\varphi}$ of the moving wheel is expressed as:

$$\frac{\partial T}{\partial \dot{\varphi}} = (m_W r^2 + J_W + m_B r^2 + m_P r^2)\dot{\varphi} + m_B l_B r\cos\alpha\,\dot{\alpha} + m_P r L_B\cos\alpha\,\dot{\alpha} + m_P r l_P\cos\beta\,\dot{\beta}$$

A derivative $\dfrac{d}{dt}\left(\dfrac{\partial T}{\partial \dot{\varphi}}\right)$ of the partial derivative $\dfrac{\partial T}{\partial \dot{\varphi}}$ with respect to time is expressed as:

$$\frac{d}{dt}\left(\frac{\partial T}{\partial \dot{\varphi}}\right) = (m_W r^2 + J_W + m_B r^2 + m_P r^2)\ddot{\varphi} + m_B l_B r\cos\alpha\,\ddot{\alpha} + m_P r L_B\cos\alpha\,\ddot{\alpha}$$

$$+ m_P r l_P\cos\beta\,\ddot{\beta} - m_B l_B r\sin\alpha\dot{\alpha}^2 - m_P r L_B\sin\alpha\dot{\alpha}^2 - m_P r l_P\sin\beta\dot{\beta}^2$$

A partial derivative $\dfrac{\partial T}{\partial \dot{\alpha}}$ of the system total kinetic energy $T$ with respect to the angular velocity $\dot{\alpha}$ of the leg mechanism is expressed as:

$$\frac{\partial T}{\partial \dot{\alpha}} = \big(m_B l_B{}^2 + J_B + m_P L_B{}^2 + J_P\big)\dot{\alpha} + m_B l_B r\cos\alpha\,\dot{\varphi} + m_P r L_B\cos\alpha\,\dot{\varphi}$$

$$+ m_P L_B l_P\cos\alpha\cos\beta\,\dot{\beta} + m_P L_B l_P\sin\alpha\sin\beta\,\dot{\beta} + J_P\dot{\beta}$$

A derivative $\frac{d}{dt}\left(\frac{\partial T}{\partial \dot{\alpha}}\right)$ of the partial derivative $\frac{\partial T}{\partial \dot{\alpha}}$ with respect to time is expressed as:

$$\frac{d}{dt}\left(\frac{\partial T}{\partial \dot{\alpha}}\right) = \left(m_B {l_B}^2 + J_B + m_p {L_B}^2 + J_P\right)\ddot{\alpha} + m_P l_B r \cos\alpha\,\ddot{\varphi} + m_P r L_B \cos\alpha\,\ddot{\varphi}$$

$$+ m_P L_B l_P \cos\alpha \cos\beta\,\ddot{\beta} + m_P L_B l_P \sin\alpha \sin\beta\,\ddot{\beta} + J_B\ddot{\beta} - m_B l_B r \sin\alpha\dot{\varphi}\,\dot{\alpha} - m_P r L_B \sin\alpha\dot{\varphi}\,\dot{\alpha}$$

$$- m_P L_B l_P \sin\alpha \cos\beta\,\dot{\beta}\dot{\alpha} + m_P L_B l_P \cos\alpha \sin\beta\,\dot{\beta}\dot{\alpha} - m_P L_B l_P \cos\alpha \sin\beta\,\dot{\beta}^2$$

$$+ m_P L_B l_P \sin\alpha \cos\beta\,\dot{\beta}^2$$

A partial derivative $\frac{\partial T}{\partial \dot{\beta}}$ of the system total kinetic energy T with respect to the angular velocity $\dot{\beta}$ of the torso mechanism is expressed as:

$$\frac{\partial T}{\partial \dot{\beta}} = \left(m_P {l_P}^2 + J_P\right)\dot{\beta} + m_P r l_P \cos\beta\,\dot{\varphi} + m_P L_B l_P \cos\alpha \cos\beta\,\dot{\alpha} + m_P L_B l_P \sin\alpha \sin\beta\,\dot{\alpha}$$

$$+ J_P\dot{\alpha}$$

A derivative of the partial derivative $\frac{\partial T}{\partial \dot{\beta}}$ with respect to time is expressed as:

$$\frac{d}{dt}\left(\frac{\partial T}{\partial \dot{\beta}}\right) = \left(m_P {l_P}^2 + J_P\right)\ddot{\beta} + m_P r l_P \cos\beta\,\ddot{\varphi} + m_P L_B l_P \cos\alpha \cos\beta\,\ddot{\alpha}$$

$$+ m_P L_B l_P \sin\alpha \sin\beta\,\ddot{\alpha} + J_P\ddot{\alpha} - m_P r l_P \sin\beta\dot{\varphi}\,\dot{\beta} + m_P L_B l_P \sin\alpha \cos\beta\,\dot{\alpha}^2$$

$$+ m_P L_B l_P \cos\alpha \sin\beta\,\dot{\alpha}^2 - m_P L_B l_P \cos\alpha \sin\beta\,\dot{\alpha}\dot{\beta} + m_P L_B l_P \sin\alpha \cos\beta\,\dot{\alpha}\dot{\beta}$$

A partial derivative $\frac{\partial T}{\partial \varphi}$ of the system total kinetic energy *T* with respect to the deflection angle $\varphi$ of the moving wheel is expressed as:

$$\frac{\partial T}{\partial \varphi} = 0$$

A partial derivative $\frac{\partial T}{\partial \alpha}$ of the system total kinetic energy *T* with respect to the deflection angle $\alpha$ of the leg mechanism is expressed as:

$$\frac{\partial T}{\partial \alpha} = -m_B l_B r \sin\alpha\,\dot{\varphi}\dot{\alpha} - m_P r L_B \sin\alpha\,\dot{\alpha}\dot{\varphi} + m_P L_B l_P \sin\alpha \cos\beta\,\dot{\alpha}\dot{\beta}$$

$$+ m_P L_B l_P \cos\alpha \sin\beta\,\dot{\alpha}\dot{\beta}$$

A partial derivative $\frac{\partial T}{\partial \beta}$ of the system total kinetic energy ***T*** with respect to the deflection angle $\beta$ of the torso mechanism is expressed as:

$$\frac{\partial T}{\partial \beta} = -m_P r l_P \sin \beta \, \dot{\beta} \dot{\varphi} - m_P L_B l_P \cos \alpha \sin \beta \, \dot{\alpha} \dot{\beta} + m_P L_B l_P \sin \alpha \cos \beta \dot{\alpha} \dot{\beta}$$

(3) System total potential energy U is calculated:

$$U = m_B g l_B \cos \alpha + m_P g (L_B \cos \alpha + l_P \cos \beta)$$

In the above formula, a plane where the moving wheel is located is regarded as a zero potential energy surface, that is, the potential energy of the moving wheel is considered to be 0. Therefore, the formula for the system total potential energy $U$ does not include the potential energy of the moving wheel. Of course, other potential energy surfaces may also be selected, which will not influence the implementation of the balance control method. The present disclosure does not limit the potential energy surface used in calculating the system total potential energy.

(4) Partial derivative results of the system total potential energy $U$ with respect to each degree of freedom in the generalized coordinate system are respectively calculated:

A partial derivative $\frac{\partial U}{\partial \varphi}$ of the system total potential energy $U$ with respect to the deflection angle $\varphi$ of the moving wheel is expressed as:

$$\frac{\partial U}{\partial \varphi} = 0$$

A partial derivative $\frac{\partial U}{\partial \alpha}$ of the system total potential energy $U$ with respect to the deflection angle $\alpha$ of the leg mechanism is expressed as:

$$\frac{\partial U}{\partial \alpha} = -(m_B g l_B + m_P g l_B) \sin \alpha$$

A partial derivative $\frac{\partial U}{\partial \beta}$ of the system total potential energy $U$ with respect to the deflection angle $\beta$ of the torso mechanism is expressed as:

$$\frac{\partial U}{\partial \beta} = -m_P g l_P \sin \beta$$

(5) Using the above formulas, based on an Euler-Lagrange equation, the following may be derived: a dynamics equation (dynamics motion model) of the wheel-legged robot under the double inverted pendulum model:

$$m_{\varphi\varphi} = (m_W r^2 + J_W + m_B r^2 + m_P r^2)$$

$$m_{\varphi\alpha} = m_B l_B r \sin \alpha + m_P r L_B \cos \alpha$$

$$m_{\varphi\beta} = m_P r l_P \cos \beta$$

$$m_{\alpha\alpha} = (m_B l_B{}^2 + J_B + m_P L_B{}^2 + J_P)$$

$$m_{\alpha\beta} = m_P L_B l_P \cos \alpha \cos \beta + m_P L_B l_P \sin \alpha \sin \beta + J_P$$

$$m_{\beta\beta} = (m_P l_P{}^2 + J_P)$$

$$c_\varphi = -m_B l_B r \sin\alpha\, \dot{\alpha}^2 - m_P r L_B \sin\alpha\, \dot{\alpha}^2 - m_p r l_P \sin\beta\, \dot{\beta}^2$$

$$c_\alpha = -m_P L_B l_P \cos\alpha \sin\beta\, \dot{\beta}^2 + m_P L_B l_P \sin\alpha \cos\beta\, \dot{\beta}^2$$

$$c_\beta = -m_P L_B l_P \sin\alpha \cos\beta\, \dot{\alpha}^2 + m_P L_B l_P \cos\alpha \sin\beta\, \dot{\alpha}^2$$

$$g_\varphi = 0$$

$$g_\alpha = -(m_B g l_B + m_P g L_B) \sin\alpha$$

$$g_\beta = -m_P g l_P \sin\beta$$

The dynamics equation may be written in a polynomial form:

$$m_{\varphi\varphi}\ddot{\varphi} + m_{\varphi\alpha}\ddot{\alpha} + m_{\varphi\beta}\ddot{\beta} + c_\varphi = \tau_1$$

$$m_{\varphi\alpha}\ddot{\varphi} + m_{\alpha\alpha}\ddot{\alpha} + m_{\alpha\beta}\ddot{\beta} + c_\alpha + g_\alpha = -\tau_1 - \tau_2$$

$$m_{\varphi\beta}\ddot{\varphi} + m_{\alpha\beta}\ddot{\alpha} + m_{\beta\beta}\ddot{\beta} + c_\beta + g_\beta = \tau_2$$

The dynamics equation in the polynomial form is written as a dynamics equation in a matrix form:

$$M(\alpha, \beta)\begin{bmatrix}\ddot{\varphi}\\\ddot{\alpha}\\\ddot{\beta}\end{bmatrix} + C\left(\alpha, \beta, \dot{\alpha}, \dot{\beta}\right) + G(\alpha, \beta) = \begin{bmatrix}\tau_1\\-\tau_1 - \tau_2\\\tau_2\end{bmatrix}$$

where $M(\alpha, \beta)$ is a 3*3 inertia matrix, and specifically includes $\begin{bmatrix}m_{\varphi\varphi} & m_{\varphi\alpha} & m_{\varphi\beta}\\ m_{\varphi\alpha} & m_{\alpha\alpha} & m_{\alpha\beta}\\ m_{\varphi\beta} & m_{\alpha\beta} & m_{\beta\beta}\end{bmatrix}$.

Each element $m_{ij}$ ($i \in \{\varphi, \alpha, \beta\}, j \in \{\varphi, \alpha, \beta\}$) in $M(\alpha, \beta)$ is each element in the inertia matrix, and indicates a mass and moment of inertia of each joint rigid body that composes the wheel-legged robot when the deflection angle of the leg mechanism is $\alpha$ and the deflection angle of the torso mechanism is $\beta$, and an equivalent inertial physical quantity of each mechanism under mutual influence. $C(\alpha, \beta, \dot{\alpha}, \dot{\beta})$ is a 3*1 bias force matrix, also known as a bias force vector, specifically includes $[c_\varphi\, c_\alpha\, c\beta]^T$, and indicates a Coriolis force and a centripetal force acting on each mechanism of wheel-legged robot. $G(\alpha, \beta)$ represents a 3*1 gravity matrix, also known as a gravity vector, and specifically includes $[0\, g_\alpha\, g_\beta]^T$. $\tau_1$ represents the rotation torque of the first rotating joint, and $\tau_2$ represents the rotation torque of the second rotating joint.

After deriving the dynamics equation in the matrix form through the above process, the subsequent balance control process may directly use the dynamics equation in the matrix form, without repeating the above derivation process in the balance control process.

Next, an n-level inverted pendulum model will be introduced and described.

For ease of understanding, situations that at least one leg mechanism of the wheel-legged robot overlaps in the y-axis direction, the length of the at least one leg mechanism changes synchronously, the included angle between the at least one leg mechanism and the torso mechanism is the same, and the movement speed of the at least one moving wheel is equal are considered first.

A world coordinate system adopted in this example has the same definition as the world coordinate system adopted in FIG. 9. Of course, other ways may also be adopted to define the world coordinate system, which is not limited in the present disclosure.

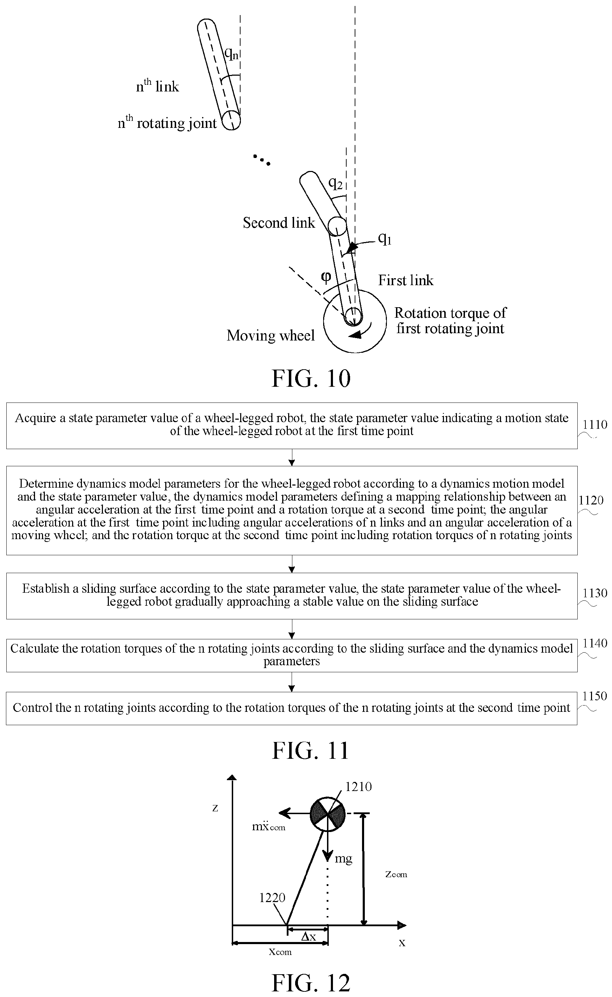

Referring to FIG. 10, the n-level inverted pendulum is composed of n links (corresponding to the n links in the claims) and a moving wheel. The moving wheel is connected to a first link of the n links, and the n links are connected in series, where n is a positive integer greater than or equal to 2. Exemplarily, the moving wheel in the n-level inverted pendulum corresponds to the moving wheel of the wheel-legged robot. In a case that the wheel-legged robot is provided with multiple moving wheels, the above assumption assumes that the motion states of the multiple moving wheels are synchronized. Therefore, the multiple moving wheels may be equivalent to the same moving wheel in the n-level inverted pendulum model. A rotation angle of the moving wheel is expressed as $\varphi$.

The n links of the n-level inverted pendulum model correspond to the n links of the wheel-legged robot. Every two adjacent links of the n links are connected through a rotating joint. Deflection angles of the n links are respectively $q_1, q_2, \ldots, q_n$, where $q_1$ is a deflection angle of a first link, $q_2$ is a deflection angle of a second link, and so on, $q_n$ is a deflection angle of an $n^{th}$ link. The deflection angle of the link will be described by taking the first link as an example. Referring to FIG. 10, in this derivation process, the deflection angle of the first link refers to the deflection angle of the first link relative to the z-axis in the world coordinate system. Of course, other ways may also be used to define the deflection angle of the first link, in which case the derivation process of the n-level inverted pendulum model is similar to the process in this embodiment.

Exemplarily, when the wheel-legged robot is in a standing attitude, the distance between the first link and the contact surface $l_1$ < the distance between the second link and the contact surface $l_2$ < $\cdots$ < the distance between the n$^{th}$ link and the contact surface $l_n$, and the first link of the n links (the first link may be the leg mechanism of the wheel-legged robot) is connected to the moving wheel through a first rotating joint. In some embodiments, the link refers to a simplified model of each mechanism included in the wheel-legged robot, the wheel-legged robot may have multiple components, each component may be referred to as a "mechanism", and each mechanism may be simplified as a link. In some cases, the wheel-legged robot is in an attitude where multiple moving wheels are in contact with the contact surface, and each moving wheel corresponds to its respective leg mechanism. For any one of the multiple moving wheels, a rotating joint that connects the moving wheel to its corresponding leg mechanism is referred to as a first rotating joint.

After understanding the n-level inverted pendulum model, a dynamics equation of the n-level inverted pendulum model is constructed in a way similar to the way of constructing the dynamics equation corresponding to the double inverted pendulum model. Specifically, total kinetic energy and potential energy corresponding to the n links and the moving wheel (the total kinetic energy includes translational kinetic energy and rotational kinetic energy) are determined, including: adding up the kinetic energy of the n links and the moving wheel to obtain system total kinetic energy of the wheel-legged robot; adding up the potential energy of the n links and the moving wheel to obtain system total potential energy of the wheel-legged robot.

For any one of the multiple degrees of freedom in the generalized coordinate system (including the deflection angle of each link, the angular velocity of each link, the rotation angle of the moving wheel, and the angular velocity of the moving wheel), partial derivative of the system total kinetic energy with respect to the degree of freedom is determined, and a derivative of the partial derivative of the degree of freedom with respect to time is determined.

For any one of the multiple degrees of freedom in the generalized coordinate system, a partial derivative of the system total potential energy with respect to that degree of freedom is determined. According to the partial derivative of the system total potential energy with respect to each degree of freedom, the partial derivative of each degree of freedom with respect to time, and the partial derivative of each degree of freedom with respect to time, a system dynamics equation of the n-level inverted pendulum is determined through an Euler-Lagrange equation:

$$\begin{pmatrix} m_{\varphi\varphi} & m_{\varphi q} \\ m_{q\varphi} & m_{qq} \end{pmatrix}\begin{pmatrix} \ddot{\varphi} \\ \ddot{q} \end{pmatrix} + \begin{pmatrix} C_\varphi(\varphi, \dot{\varphi}, q, \dot{q}) \\ C_q(\varphi, \dot{\varphi}, q, \dot{q}) \end{pmatrix} + \begin{pmatrix} 0 \\ G_q(q) \end{pmatrix} = \begin{pmatrix} -1\ 0\ \ldots\ 0 \\ I_n \end{pmatrix}\tau$$

where $\mathrm{M} = \begin{pmatrix} m_{\varphi\varphi} & m_{\varphi q} \\ m_{q\varphi} & m_{qq} \end{pmatrix}$ refers to an inertia matrix, including masses and moments of inertia of n rotating joints (the rotating joints are regarded as joint rigid bodies) of the wheel-legged robot involved in the n-level inverted pendulum model, $q$ is a vector, and a transpose vector of q is $q^T = [q_1\ q_2 \ldots q_n]$, $m_{\varphi\varphi} \in \mathbb{R}_{1\times 1},\ m_{\varphi q} \in \mathbb{R}_{1\times n},\ m_{q\varphi} \in \mathbb{R}_{n\times 1}$, $m_{qq} \in \mathbb{R}_{n\times n}$. $\dot{\varphi}$ refers to the angular velocity of the moving wheel, $\ddot{\varphi}$ refers to the angular acceleration of the moving wheel, $\dot{q}$ represents the angular velocities of the n links, $\dot{q}$ is a vector, a transpose vector of $\dot{q}$ is $\dot{q}^T = [\dot{q}_1\ \dot{q}_2 \ldots \dot{q}_n]$, $\ddot{q}$ represents

the angular acceleration of the n links, $\ddot{q}$ is a vector, a transpose matrix of $\ddot{q}$ is $\ddot{q}^T = [\ddot{q}_1 \ \ddot{q}_2 \ldots \ddot{q}_n]$, $C = \begin{pmatrix} C_\varphi(\varphi, \dot{\varphi}, q, \dot{q}) \\ C_q(\varphi, \dot{\varphi}, q, \dot{q}) \end{pmatrix}$

refers to a bias force matrix and indicates a bias force of each link when the wheel-legged robot is in an attitude that the angle of the moving wheel is $\varphi$ and the deflection angles of the n links are respectively $q_1$, $q_2$, ... , $q_n$, and the bias force includes a centripetal force and a Coriolis force. $G = \begin{pmatrix} 0 \\ G_q(q) \end{pmatrix}$ is a gravity matrix and indicates gravities respectively acting on the n links when the wheel-legged robot is an attitude that the angle of the moving wheel is $\varphi$ and the deflection angles of the n links are $q_1$, $q_2$, ... , $q_n$.

Since the plane where the moving wheel is located is determined as a zero potential energy surface, and a first term in the *G* matrix is zero, it represents that the gravity of the moving wheel on this zero potential energy surface is zero. Of course, other zero potential energy surfaces may also be selected, which is not limited in the present disclosure. $I_n$ represents a unit matrix of $n \times n$, and $\tau^T = [\tau_1 \ \tau_2 \ldots \tau_n]$ represents rotation torques corresponding to the n rotating joints.

A balance control method after abstracting the wheel-legged robot into the n-level inverted pendulum will be introduced and described below. This method may be achieved through a robust controller in a control system for the wheel-legged robot based on observation results of sensors, or may be achieved through the cooperation between the robust controller and other control modules such as a whole body dynamics controller in the control system. For details, please refer to the following implementation embodiments.

Please refer to FIG. 11. It shows a flowchart of a balance control method for a wheel-legged robot according to an embodiment of the present disclosure. The method is executed by a computer device. The wheel-legged robot includes a moving wheel, n links, and n rotating joints. The moving wheel is connected to a first link of the n links through a first rotating joint of the n rotating joints, and the n links are connected in series through n-1 rotating joints other than the first rotating joint, where n is a positive integer greater than or equal to 2. The method may include at least one of the following operations (1110-1150).

Operation 1110: Acquire a state parameter value of the wheel-legged robot, where the state parameter value indicates a motion state of the wheel-legged robot at the first time point.

In some embodiments, the moving wheel is configured to be in contact with a contact surface, the rotating joint refers to a joint driven by a joint motor, and the n links refer to links connected to at least one of the n rotating joints. In some embodiments, the n rotating joints connect the n links in series into a linear shape, and the first link of the n links is connected to the moving wheel through the first rotating joint, that is, the moving wheel, the n links, and the n rotating joints of the wheel-legged robot may be abstracted into the n-level inverted pendulum introduced above. The balance control method provided in this embodiment of the present disclosure is designed based on the n-level inverted pendulum.

In some embodiments, the wheel-legged robot includes multiple components, each component (excluding an active joint) may be referred to as a mechanism, and the mechanism may be simplified as a link.

In some embodiments, any one of the n links is equivalent to a link in the n-level inverted pendulum, that is, in an ideal state, the link will not undergo bending deformation. Exemplarily, any one of the n links is an independent link (for example, in the wheel-legged robot, a leg mechanism is regarded as a link and a torso mechanism is regarded as a link).

Exemplarily, the n links include at least one combined link composed of m independent links connected through joints, where m is a positive integer greater than 1. In this case, the joints configured for connecting the m independent links do not undergo rotational or linear motion in the balance control process. For example, these joints are locked in balance control, so that a link combination composed of the m independent links is regarded as one link included in the n links.

In some embodiments, the first link refers to a link connected to the moving wheel of the wheel-legged robot through the first rotating joint. In some embodiments, in a direction perpendicular to the contact surface (i.e., the z-axis direction in the world coordinate system), among the n links, the distance between the first link and the moving wheel is the shortest.

In some embodiments, if the leg mechanism of the wheel-legged robot is a linear leg, then the first link refers to the leg mechanism of the wheel-legged robot; if the leg mechanism of the wheel-legged robot is a joint leg, that is, the leg mechanism includes two sub-mechanisms connected by a knee joint and the knee joint is configured to control a joint angle between the two sub-mechanisms, then the first link refers to a sub-mechanism directly connected to the first rotating joint in the leg mechanism.

In the present disclosure, n is a positive integer greater than 1. For example, n is equal to 2, 3, 4, 5.... The maximum value of n is related to the construction of the wheel-legged robot, which is not limited in the present disclosure.

Exemplarily, in a case that n is equal to 2, the n links include a leg mechanism and a torso mechanism of the wheel-legged robot. Exemplarily, in a case that n is equal to 3, the n links include a leg mechanism (the leg mechanism is a linear leg), a torso mechanism, and a head mechanism of the wheel-legged robot. Exemplarily, in a case that n is equal to 3, the n links include a leg mechanism (the leg mechanism is a linear leg), a torso mechanism, and a robotic arm mechanism of the wheel-legged robot. Exemplarily, in a case that n is equal to 4, the n links include a leg mechanism (the leg mechanism is a linear leg), a torso mechanism, a first robotic arm link connected to the torso mechanism, and a second robotic arm link connected to the first robotic arm link, or a manipulator of the wheel-legged robot. Exemplarily, in a case that n is equal to 4, the n links include a first sub-mechanism of a leg mechanism (the leg mechanism is a linear leg), a second sub-mechanism connected to the first sub-mechanism through a knee joint, a torso mechanism, and a first robotic arm link connected to the torso mechanism.

In some embodiments, the n rotating joints are configured to connect the n links in series. Exemplarily, any one of the n rotating joints refers to a rotating joint with the same function. For example, in a case that the wheel-legged robot includes multiple moving wheels, there are multiple rotating joints configured to connect each moving wheel to its corresponding first link, and the multiple rotating joints are first rotating joints.

The value of n is related to the configuration of the wheel-legged robot, the computing power of the computer device, the power consumption, and other practical requirements, which is not limited in the present disclosure. The larger the value of n, the more the links that can be configured for adjusting the attitude in the balance control process, making the attitudes of the wheel-legged robot richer in the balance adjustment process, which helps to improve the balance ability of the wheel-legged robot to cope with external disturbances.

In some embodiments, the first time point is any moment in the motion process of the wheel-legged robot.

In some embodiments, at the first time point, the attitude of the wheel-legged robot may be as follows. Included angles between all first links and the direction perpendicular to the contact surface are equal, angular velocities of the moving wheels corresponding to each first link are equal, and at least one first rotating joint that connects the first link to the moving wheel rotates synchronously. That is to say, when observed from a side surface of the wheel-legged robot, at least one first link overlaps together, and at least one moving wheel overlaps together. Exemplarily, the wheel-legged robot is provided with four moving wheels, and at the first time point, the wheel-legged robot is in a double-wheel balance mode (it rolls and moves on the contact surface through two moving wheels, while the other two moving wheels are retracted).

In some embodiments, the state parameter value is configured for describing a motion state of the wheel-legged robot at the first time point. According to the state parameter value at the first time point, the attitude and motion state of the wheel-legged robot may be determined. In some embodiments, the state parameter value at the first time point is obtained through observation by sensors of the wheel-legged robot.

In some embodiments, the state parameter value at the first time point includes at least one of the following: deflection angles $q_1, q_2, ... , q_n$ of the n links, an angular velocity $\dot{\varphi}$ of the moving wheel, and angular velocities $\dot{q}_1, \dot{q}_2, ... , \dot{q}_n$ of the n links.

Exemplarily, each physical quantity included in the state parameter value is obtained through observation in the world coordinate system. The deflection angle $q_i (i \in [1, n])$ of an $i^{th}$ link of the n links refers to the deflection angle of the $i^{th}$ link relative to the z-axis in the world coordinate system. The angular velocity $\dot{\varphi}$ of the moving wheel refers to the rotation speed of the moving wheel in the clockwise direction of the x-axis in the world coordinate system. The angular velocity $\dot{q}_i (i \in [1, n])$ of the $i^{th}$ link indicates the angular velocity of the $i^{th}$ link, i.e., the changing speed of the deflection angle of the $i^{th}$ link.

Each physical quantity in the state parameter value may also be expressed by the relative positions of the links of the wheel-legged robot. For example, a deflection angle $q_j' (i \in [2, n])$ of a $j^{th}$ link refers to the deflection angle of the $j^{th}$ link relative to a $(j-1)^{th}$ link. The $(j-1)^{th}$ link is connected to the $j^{th}$ link through a rotating joint. In some embodiments, the distance between the $j^{th}$ link and the contact surface is greater than the distance between the $(j-1)^{th}$ link and the contact surface. An observation coordinate system corresponding to each physical quantity in the state parameter value may be determined according to the actual needs, which is not limited in the present disclosure.

In the present disclosure, the physical quantities in each formula are obtained through observation based on the world coordinate system. Of course, the balance control method can also be achieved by using physical quantities determined by other observation coordinate systems. Relevant formulas may be obtained through equivalent replacement based on the formulas provided in the present disclosure, which will not be mentioned here one by one.

In a case that the moving wheels of the wheel-legged robot in contact with the contact surface overlap in the y-axis direction in the world coordinate system, the angular velocities of the n moving wheels are the same, and the deflection angles of the first links connected to at least one moving wheel are the same. For the method of acquiring the state parameter value at the first time point, please refer to the following embodiments.

Exemplarily, the state parameter value is composed of deflection angles $q_1, q_2, ... , q_n$ of the n links, an angular velocity $\dot{\varphi}$ of the moving wheel, and angular velocities $\dot{q}_1, \dot{q}_2, ... \dot{q}_n ... ,$ of the n links. The state parameter value may be represented by using a symbol $\xi$. The state parameter value $\xi$ may be expressed as:

$$\xi = \begin{bmatrix} q & \dot{\varphi} & \dot{q} \end{bmatrix}^T$$

where $q^T$ represents a transpose vector of a vector $q$, $q^T = [q_1 \, q_2 \, ... \, q_n]$, and $\dot{q}^T$ represents a transpose vector of a vector $\dot{q}$, $\dot{q}^T = [\dot{q}_1 \, \dot{q}_2 \, ... \, \dot{q}_n]$.

In some embodiments, acquiring a state parameter value of the wheel-legged robot at a first time point includes: determining the deflection angles $q_1, q_2, ..., q_n$ of the n links through an IMU sensor and a motor encoder; and determining an angular velocity $\dot{\varphi}$ of the moving wheel and angular velocities $\dot{q}_1, \dot{q}_2, ... , \dot{q}_n$ of the n links through the motor encoder. Exemplarily, clock cycles of IMU sensors and motor encoders in the wheel-legged robot are the same or in a multiple relationship, so that the physical quantities included in the state parameter value are physical quantities at the first time point. For the specific content of the IMU encoder and the motor encoder, please refer to the above introduction, which will not be repeated here.

In some embodiments, the robust controller takes the state parameter value at the first time point as input information and performs the balance control process through the state parameter value at the first time point.

Operation 1120: Determine dynamics model parameters for the wheel-legged robot according to a dynamics motion model and the state parameter value, where the dynamics model parameters are configured for defining a mapping relationship between an angular acceleration at the first time point and a rotation torque at a second time point. The angular acceleration at the first time point includes angular accelerations of the n links and an angular acceleration of the moving wheel. The rotation torque at the second time point includes rotation torques of the n rotating joints.

In some embodiments, the angular acceleration at the first time point refers to rotation accelerations of the n links (also understood as angular accelerations of joint motors corresponding to the n rotating joints) after abstracting the wheel-legged robot into the n-level inverted pendulum model. The angular acceleration at the first time point may be represented by $\ddot{q}$.

As can be seen from the above content, after abstracting the wheel-legged robot into the n-level inverted pendulum model, a dynamics equation in a matrix form can be obtained.

$$\begin{pmatrix} m_{\varphi\varphi} & m_{\varphi q} \\ m_{q\varphi} & m_{qq} \end{pmatrix} \begin{pmatrix} \ddot{\varphi} \\ \ddot{q} \end{pmatrix} + \begin{pmatrix} C_\varphi(\varphi, \dot{\varphi}, q, \dot{q}) \\ C_q(\varphi, \dot{\varphi}, q, \dot{q}) \end{pmatrix} + \begin{pmatrix} 0 \\ G_q(q) \end{pmatrix} = \begin{pmatrix} -1\ 0\ ...\ 0 \\ I_n \end{pmatrix} \tau$$

In this embodiment of this method, the robust controller in the control system of the wheel-legged robot is determined based on the dynamics equation, so that the robust controller can implement the balance control method provided in the embodiment of the present disclosure.

From a physical relationship among acceleration, velocity, and position, it can be seen that the angular velocities of the n links of the wheel-legged robot at a next moment after the first time point and the attitude of the wheel-legged robot in the subsequent moment can be predicted through the acceleration at the first time point. The rotation torque of the joint can change the speed and attitude of the wheel-legged robot. In the design of the robust controller in this solution, the focus is to establish a mapping relationship between the acceleration of the wheel-legged robot and the rotation torque of the joint based on the dynamics equation in the matrix form.

Exemplarily, partial feedback linearization is performed on the dynamics equation in the matrix form, so that the matrix related to the acceleration of the wheel-legged robot is on one side of the dynamics equation and the matrix related to the rotation torque of the rotating joint is on the other side, thereby determining the mapping relationship between the acceleration at the first time point and the rotation torque of the rotating joint. The mapping relationship between the acceleration at the first time point and the rotation torque of the rotating joint is represented by dynamics parameters. This process may be completed in the design process of the robust controller and saved in the robust controller. The relevant formulas do not need to be repeatedly derived during the actual balance control.

In some embodiments, the dynamics model parameters are configured for characterizing the linear mapping relationship between the acceleration and the rotation torque at the first time point. That is to say, through dynamics model parameters, it is ensured that the acceleration and the rotation torque at the first time point satisfy an equal relationship in the formula obtained through conversion based on the dynamics formula. Since there is more than one acceleration and rotation torque at the first time point, the dynamics model parameters may be expressed in a matrix form.

Exemplarily, the dynamics model parameters include a proportion parameter matrix g[] and an offset parameter matrix f[]. The proportion parameter matrix g[] indicates a proportional relationship between the angular acceleration and the rotation torque at the first time point. The offset parameter matrix f[] indicates an offset between the angular acceleration and the rotation torque at the first time point. For the calculation methods of the two dynamics model parameter matrices described above, please refer to the following embodiments.

In some embodiments, in the design process of the robust controller, the representation form of the dynamics model parameters (i.e., the calculation formula of the dynamics model parameters) is predetermined and stored in the robust controller. In the actual balance control, after acquiring the state parameter value at the first time point, the robust controller will substitute the state parameter value at the first time point into the representation form of the dynamics model parameters to determine the value of each element included in the dynamics model parameters.

Operation 1130: Establish a sliding surface according to the state parameter value, where the state parameter value of the wheel-legged robot gradually approaches a stable value on the sliding surface.

In some embodiments, the sliding surface is an imaginary vector plane in sliding mode control, and the state parameter value of the wheel-legged robot gradually approaches a stable value on the sliding surface. In some embodiments, the stable value is 0, that is, the state parameter value of the wheel-legged robot gradually approaches 0 on the sliding surface. By introducing the sliding surface into the balance process of the wheel-legged robot, and limiting the calculated values of the rotation torques of the n rotating joints through the sliding surface, the wheel-legged robot can maintain or gradually restore to a balanced state after adjusting the attitude based on the rotation torques of the n rotating joints. That is to say, the state of the wheel-legged robot can gradually approach a balance on the sliding surface. The sliding surface may be represented by a symbol s. In some embodiments, the sliding surface is a rational number, and the value of the sliding surface may be greater than 0, equal to 0, or less than 0.

In some embodiments, the sliding surface is a linear sliding surface that has a linear relationship with the state parameter value, or the sliding surface is a sliding surface that has a high-order mapping relationship with the stable quantity. To reduce the computation pressure of the robust controller and lower the energy consumption of the wheel-legged robot, the method of determining the sliding surface according to the state parameter value is mainly introduced and described in this embodiment by taking establishing the linear sliding surface as an example.

In some embodiments, the number of the sliding surfaces that the robust controller needs to establish is related to the number of the rotation torques to be determined. In some embodiments, the number of the sliding surfaces that the robust controller needs to establish is equal to the number of the rotation torques to be determined. In the present disclosure, abstracting the wheel-legged robot into the n-level inverted pendulum totally involves n rotating joints. Each of the n rotating joints has an independent rotation torque. Therefore, the rotation torque at the second time point includes rotation torques of the n rotating joints. Therefore, n sliding surfaces need to be established. Any two sliding surfaces of the n sliding surfaces are different sliding surfaces. For the specific operation of establishing the sliding surfaces, please refer to the following embodiments.

Operation 1140: Calculate rotation torques of the n rotating joints according to the sliding surfaces and the dynamics model parameters.

In some embodiments, for any one of the n rotating joints, the rotation torque of the rotating joint is configured for controlling a joint motor of the rotating joint to rotate. In some embodiments, the joint motor of the rotating joint can rotate according to a certain angular velocity, velocity, or torque, so that the rotating joint reaches a corresponding rotation torque.

In some embodiments, the robust controller is designed with an equation for calculating rotation torques of the n rotating joints according to the sliding surfaces and the dynamics model parameters. By substituting the sliding surfaces and the dynamics model parameters into the equation, the rotation torques of the n rotating joints can be calculated. The corresponding rotating motors of the rotating joints are controlled through the rotation torques of the n rotating joints, so as to adjust the attitude of the wheel-legged robot and help the wheel-legged robot reach or maintain a balanced state.

In some embodiments, in the process of calculating the rotation torques of the n rotating joints according to the sliding surfaces and the dynamics model parameters, a system stability criterion also needs to be considered. The system stability criterion is configured for constraining the balanced state of the robot. For the specific process of this part, please refer to the following embodiments. Exemplarily, operation 1110 to operation 1140 are completed by the robust controller.

Operation 1150: Control the n rotating joints according to the rotation torques of the n rotating joints at the second time point.

In some embodiments, the second time point refers to any moment after the first time point. In some embodiments, the second time point refers to a moment after calculating the rotation torques of the n rotating joints.

In some embodiments, the purpose of controlling the n rotating joints is to change the attitude of the wheel-legged robot. The rotation of the rotating joint drives the deflection angle of the link connected to the rotating joint to change, so that the joint angle between the two links connected to the rotating joint changes, the attitude of the wheel-legged robot changes, and the mass center of the wheel-legged robot changes, thereby helping the wheel-legged robot adjust the balanced state.

In some embodiments, after determining the rotation torques of the n rotating joints, s rotating joints may be controlled, where s is a positive integer less than or equal to n.

In some embodiments, the implementation methods for controlling the n rotating joints according to the rotation torques of the n rotating joints include the following:

1. The torques of the n rotating joints are transmitted to the respective joint motors of the n rotating joints through the robust controller, so that the joint motors of the n rotating joints rotate to the corresponding rotation torques.
2. A task acceleration of the wheel-legged robot is calculated according to the rotation torques of the n rotating joints. Force and torque instructions corresponding to whole body joints of the wheel-legged robot are calculated according to the task acceleration of the wheel-legged robot through a whole body dynamics controller in the control system of the wheel-legged robot, thereby determining force and torque instructions corresponding to the n rotating joints in the n-level inverted pendulum model. The force and torque instructions respectively corresponding to the n rotating joints are transmitted to the n rotating joints through the whole body dynamics controller, so that the n rotating joints rotate according to the respective force and torque instructions.

The whole body joints refer to active joints in the wheel-legged robots. After determining the force and torque instructions for the whole body joints, not only can the rotating motors of the n rotating joints be controlled, but also the joint motors corresponding to other joints except for the n rotating joints can be controlled according to the force and torque instructions corresponding to the whole body joints, thereby enriching the attitudes of the wheel-legged robot. Since the whole body dynamics controller is configured to control the robot to perform motion tasks, this method can integrate the balance control method with the motion process of the wheel-legged robot, thereby helping to improve the adaptability of the balance control method to different scenarios.

In some embodiments, the operation of calculating the task acceleration of the wheel-legged robot through the rotation torques of the n rotating joints is performed by an observation module in the control system of the wheel-legged robot. The observation module is connected to the robust controller. The observation module is also connected to the whole body dynamics controller. The observation module acquires the rotation torques of the n rotating joints from the robust controller, calculates a task acceleration according to the rotation torques of the rotating joints, and transmits the task acceleration to the whole body dynamics controller. The whole body dynamics controller determines force and torque instructions respectively corresponding to the whole body joint motors according to the task acceleration. For the specific process of this operation, please refer to the following embodiments.

By associating the control results (the n rotation torques described above) of the robust controller with the whole body dynamics controller, the whole body dynamics controller can receive information related to balance control, thereby helping the whole body dynamics controller to optimize reasonably according to the received input information (including the n rotation torques and the parameters related to the motion process), generate optimized joint instructions (i.e., force and torque instructions), and transmit these joint instructions to the corresponding joints, so that more links of the wheel-legged robot can rotate in the balance control process, thereby helping to improve the balance control ability of the wheel-legged robot in the motion process. Moreover, this method enables the wheel-legged robot to be able to complete the balance adjustment in the motion process.

To sum up, by abstracting the wheel-legged robot into a multi-level inverted pendulum model, the deflection angles of multiple links of the wheel-legged robot can be adjusted in the balance control process, thereby changing the attitude of the wheel-legged robot. Compared with the related arts in which the included angle between the moving wheel and each leg mechanism can only be adjusted in the balance control process, this solution makes the attitudes of multiple links of the wheel-legged robot changeable in the balance adjustment process, thereby greatly enriching the attitudes of the robot, helping to quickly adjust the robot to a balanced state, also improving the robot's ability to restore to a balanced state under different disturbance forces, and improving the robustness of the balance control process of the robot.

A method of acquiring the state parameter value at the first time point will be introduced and described below through several embodiments.

In some embodiments, the state parameter value of the wheel-legged robot at the first time point is determined through sensors included in the wheel-legged robot. The state parameter value at the first time point includes deflection angles of the n links, angular velocities of the n links, and an angular velocity of the moving wheel.

In some embodiments, the method of acquiring the state parameter value at the first time point is related to the attitude of the wheel-legged robot at the first time point. In a possible implementation, the state parameter value at the first time point is obtained through observation by the sensors of the wheel-legged robot. In another possible implementation, the observation results obtained through observation by the sensors of the wheel-legged robot need to be processed to obtain the state parameter value at the first time point.

The moving wheels of the wheel-legged robot in contact with the contact surface overlap in the y-axis direction of the world coordinate system, and the first links overlap in the y-axis direction of the world coordinate system. In some embodiments, the wheel-legged robot is in a double-wheel balanced state, and operation 1110 further includes the following sub-operations:

Sub-operation 1110-a: Determine the deflection angles of the n links through an inertial measurement unit and a motor encoder of the wheel-legged robot.

Sub-operation 1110-b: Determine the angular velocities of the n links and the angular velocity of the moving wheel through the motor encoder.

Through the inertial measurement unit and the motor encoder, the state parameter value at the first time point is determined, so that the attitude and motion trend of the wheel-legged robot at the first time point can be known, making it possible to adjust the balance of the wheel-legged robot according to the state parameter value at the first time point.

For the content about the inertial measurement unit and the motor encoder, please refer to the above introduction. In some embodiments, the robust controller acquires the state parameter value related to each rotating joint from the IMUs and the motor encoders respectively corresponding to the n rotating joints, and combines the state quantities related to the n rotating joints to obtain the state parameter value at the first time point.

A process of determining dynamics model parameters will be introduced and described below through several embodiments. Operations of this process may be executed by a computer device.

Operation 1120 in the above embodiment, i.e., determining dynamics model parameters according to a dynamics equation of the wheel-legged robot and the state parameter value at the first time point may include the following several operations:

Operation 1123 (not shown): Substitute the state parameter value at the first time point into the dynamics equation to determine an inertia matrix, a bias force matrix, and a gravity matrix at the first time point. The inertia matrix indicates masses and moments of inertia of the n rotating joints at the first time point. The bias force matrix indicates a bias force of the wheel-legged robot at the first time point. The gravity matrix indicates a gravity of the wheel-legged robot at the first time point.

In some embodiments, the inertia matrix indicates inertia quantities of joint rigid bodies respectively corresponding to the n rotating joints that compose the wheel-legged robot in the attitude at the first time point. The inertia quantities include at least one of the following: mass and moment of inertia. In some embodiments, the inertia matrix may be calculated according to the dynamics equation. In a case that the wheel-legged robot is abstracted into an n-level inverted pendulum model, the inertia matrix is a $(n+1)*(n+1)$ matrix.

In some embodiments, the bias force matrix indicates a Coriolis force and a centripetal force acting on each link. In some embodiments, the bias force matrix includes a bias force caused by the deflection angle of the moving wheel and bias forces caused by the deflection angles of the n links.

In some embodiments, the gravity matrix indicates a gravity acting on each link. In some embodiments, the gravity matrix includes a gravity acting on the moving wheel and gravities respectively acting on the n links. In some embodiments, the moving wheel (such as the moving wheel of the outer leg mechanism) is always in contact with the contact surface. In the balance control process, the height of the moving wheel remains unchanged, and the gravity acting on the moving wheel remains unchanged. Taking a plane where the mass center of the moving wheel is located as a zero potential energy surface, the gravity acting on the moving wheel is zero, which reduces the computation overhead of the balance control process.

For the content related to the inertia matrix, the bias force matrix, and the gravity matrix, please refer to the content of the description corresponding FIG. 10, which will not be repeated here. Expressions for each element in the inertia matrix, the bias force matrix, and the gravity matrix described above are also derived in advance from the dynamics formula. Exemplarily, after determining the state parameter value at the first time point, the robust controller calculates the specific values of each element included in the inertia matrix, the bias force matrix, and the gravity matrix according to the state parameter value at the first time point and the representation forms of each element in the inertia matrix, the bias force matrix, and the gravity matrix. Then, the inertia matrix, the bias force matrix, and the gravity matrix at the first time point are obtained.

Operation 1126 (not shown): Determine the dynamics model parameters according to the inertia matrix, the bias force matrix, and the gravity matrix.

In some embodiments, the dynamics model parameters include a proportion parameter matrix and an offset parameter matrix. The proportion parameter matrix indicates a proportional relationship between the angular acceleration and the rotation torque at the first time point. The offset parameter matrix indicates an offset relationship between the angular acceleration and the rotation torque at the first time point. In some embodiments, the robust controller calculates the offset parameter matrix according to the inertia matrix, the bias force matrix, and the gravity matrix; and calculates the proportion parameter matrix according to the inertia matrix.

Through the dynamics model parameters, the rotational relationship between the acceleration of the wheel-legged robot and the rotation torques of the n rotating joints can be determined. Subsequently, according to the dynamics model parameters and the sliding surfaces, the rotation torques of the n rotating joints can be quickly determined, thereby helping to reduce unnecessary conversions in the process of determining the rotation torques of the rotating joints and alleviate the computation pressure of the computer device.

In some embodiments, operation 1126 further includes the following sub-operations:

Sub-operation 1126-a (not shown): Process a product of an inverse matrix of the inertia matrix and the bias force matrix by using a selection matrix. The selection matrix is configured for extracting the rotation torques of the n rotating joints from the dynamics equation.

Sub-operation 1126-b (not shown): Process a product of the inverse matrix of the inertia matrix and the gravity matrix by using the selection matrix to obtain the offset parameter matrix.

In some embodiments, elements in the selection matrix include three values, i.e., (0, 1, -1). The selection matrix is configured for making each rotation torque in $\tau$ exist independently in the dynamics equation. That is, the dynamics equation is processed by using the selection matrix, so that the coefficients of the rotation torques of rotating joints in the dynamics equation have the same sign, and basic operations (such as $\tau_1 - \tau_2$) between rotation matrices of any two rotating joints are not included in the dynamics equation. Operation 1126-a may be executed before operation 1126-b, or operation 1126-b may be executed before operation 1126-a. Operation 1126-a and operation 1126-b may also be executed in parallel. The execution sequence of these two operations is not limited in the present disclosure.

Sub-operation 1126-c (not shown): Process the inverse matrix of the inertia matrix by using the selection matrix to obtain the proportion parameter matrix.

Continuing with the content about operation 1120 in the above embodiment, the two sub-operations included in operation 1126 will be introduced and described below. Partial feedback linearization is performed on the dynamics equation in the matrix form to obtain formula 1:

$$\begin{pmatrix}\ddot{\varphi}\\\ddot{q}\end{pmatrix} = -M^{-1}(q)\begin{pmatrix}C_\varphi(\varphi,\dot{\varphi},q,\dot{q})\\C_q(\varphi,\dot{\varphi},q,\dot{q})\end{pmatrix} - M^{-1}(q)\begin{pmatrix}0\\G_q(q)\end{pmatrix} + M^{-1}(q)\begin{pmatrix}-1\ 0\ ...\ 0\\I_n\end{pmatrix}\tau$$

where $M^{-1}(q)$ is the inverse matrix of the inertia matrix, $M^{-1}(q) * M(q) = E$, and $E$ is a unit matrix. For physical meanings of other parameters in formula 1, please refer to the above embodiment, which will not be repeated here.

Further, to simplify the execution logic in the balance control process and reduce the computation amount of the robust controller, it is necessary to adjust formula 1 in the design process of the robust controller. Formula 1 is processed by using the selection matrix to obtain formula 2:

$$\begin{pmatrix}\ddot{\varphi}\\\ddot{q}\end{pmatrix} = \begin{pmatrix}f_\varphi(\varphi,\dot{\varphi},q,\dot{q})\\f_q(\varphi,\dot{\varphi},q,\dot{q})\end{pmatrix} + \begin{pmatrix}g_\varphi(\varphi,\dot{\varphi},q,\dot{q})\\g_q(\varphi,\dot{\varphi},q,\dot{q})\end{pmatrix}\tau$$

where $\quad f[] = \begin{pmatrix}f_\varphi(\varphi,\dot{\varphi},q,\dot{q})\\f_q(\varphi,\dot{\varphi},q,\dot{q})\end{pmatrix}\quad$ represents the offset parameter matrix,

$$\begin{pmatrix}f_\varphi(\varphi,\dot{\varphi},q,\dot{q})\\f_q(\varphi,\dot{\varphi},q,\dot{q})\end{pmatrix} = \left[-M^{-1}(q)\begin{pmatrix}C_\varphi(\varphi,\dot{\varphi},q,\dot{q})\\C_q(\varphi,\dot{\varphi},q,\dot{q})\end{pmatrix} - M^{-1}(q)\begin{pmatrix}0\\G_q(q)\end{pmatrix}\right]\ ;\quad G[]=\begin{pmatrix}g_\varphi(\varphi,\dot{\varphi},q,\dot{q})\\g_q(\varphi,\dot{\varphi},q,\dot{q})\end{pmatrix}$$

represents the proportion parameter matrix, $\quad g_\varphi(\varphi,\dot{\varphi},q,\dot{q}) \in \mathbb{R}^{1\times n},\ g_q(\varphi,\dot{\varphi},q,\dot{q}) \in \mathbb{R}^{n\times n}$ ,

$$\begin{pmatrix}g_\varphi(\varphi,\dot{\varphi},q,\dot{q})\\g_q(\varphi,\dot{\varphi},q,\dot{q})\end{pmatrix} = M^{-1}(q)\begin{pmatrix}-1\ 0\ ...\ 0\\I_n\end{pmatrix}S^T$$ , and $S^T$ is the selection matrix.

In some embodiments, formula 2 is derived after modeling by abstracting the wheel-legged robot into an n-level inverted pendulum model. In the balance control process, after acquiring the state parameter value at the first time point, the robust controller may calculate the proportion parameter matrix and the dynamics model parameter matrix according to formula 2 and the expressions of each element in the inertia matrix, the bias force matrix, and the gravity matrix obtained in the derivation process of the dynamics equation of the n-level inverted pendulum model.

In some embodiments, the dynamics equation of the robot is obtained by abstracting the wheel-legged robot into an n-level inverted pendulum model and performing derivation based on an Euler-Lagrange equation. The moving wheel of the wheel-legged robot corresponds to the wheel in the n-level inverted pendulum model, and the at least one link of the wheel-legged robot corresponds to the n links in the n-level inverted pendulum model. For the derivation process of the dynamics equation, please refer to the above embodiment, which will not be repeated here. After abstracting the wheel-legged robot into the n-level inverted pendulum model, the dynamics equation includes the rotation torques of the n rotating joints, so that the balance control process can control the rotation modes of the n rotating joints. The rotation of the rotating joints drives the attitudes and motion states of the links connected to the rotating joints to change, so that all n mechanisms can participate in the balance control process, thereby making the attitude of the wheel-legged robot more flexible in the balance control process, helping to adapt to different balance control requirements in different scenarios, and improving the robustness of the balance control method.

A method of establishing a sliding surface will be introduced and described below through several embodiments.

In some embodiments, the sliding surface includes n sliding surfaces; the n sliding surfaces are configured for constraining the rotation torques of the n rotating joints. In some embodiments, there are no identical sliding surfaces among the n sliding surfaces, and the n sliding surfaces are configured for jointly participating in the calculation process of the rotation torques.

Operation 1130 in the above embodiment, i.e., establishing a sliding surface according to the state parameter value at the first time point, may include the following operations:

Operation 1133 (not shown): Determine two sliding mode parameters for an i$^{th}$ sliding surface of the n sliding surfaces, where i is a positive integer less than or equal to n.

In some embodiments, the sliding surface is related to at least one element in the state parameter value, and each element in the state parameter value may also be referred to as a state parameter. For example, $q_1, q_2, ..., q_n, \dot{\varphi}$, and $\dot{q}_1, \dot{q}_2, ..., \dot{q}_n$ included in the state parameter value $\xi = [q\ \dot{\varphi}\ \dot{q}]^T$ are state parameters.

For example, a certain sliding surface is related to the deflection angle and acceleration of the first link in the state parameter value. For another example, a certain sliding surface is related to the deflection angle of the i$^{th}$ link and the acceleration of the i$^{th}$ link. In some embodiments, the n sliding surfaces are respectively related to a first state parameter in the state parameter value. For example, the first state parameter is the angular velocity of the moving wheel, that is, the n sliding surfaces are related to the angular velocity of the moving wheel.

In some embodiments, the sliding mode parameters are real numbers. The sliding mode parameters are configured for characterizing a proportional relationship between the state parameters in the state parameter value and the sliding surfaces. Exemplarily, the sliding mode parameters between different sliding surfaces are not shared, that is, there are at least two sliding surfaces in the n sliding surfaces, and the sliding mode parameters respectively corresponding to the at least two sliding surfaces are not equal.

In some embodiments, the number of the state parameters configured for establishing the sliding surface is greater than the number of sliding mode parameters. In some embodiments, for each sliding surface of the n sliding surfaces, the number of the state parameters used in the process of establishing the sliding surface is greater than the number of the sliding mode parameters used, which helps to ensure that the determined rotation torque can be calculated according to the sliding surface and the dynamics model parameters, thereby helping the wheel-legged robot to make balance adjustment according to the determined rotation torque.

For example, when establishing a certain sliding surface, it is necessary to use three state parameters in the state parameter value and two sliding mode parameters. For another example, when establishing a certain sliding surface, it is necessary to use four state parameters in the state parameter value and three sliding mode parameters.

Since the number of the sliding mode parameters used in the process of establishing the sliding surface is less than the number of the state parameters, the coefficient of at least one state parameter in the sliding surface is equal to 1, that is, there is no corresponding state parameter for these sliding mode parameters, and the remaining state parameters that need to be used in establishing a certain sliding surface correspond to the sliding mode parameters one to one.

In some embodiments, for the i$^{th}$ sliding surface of the n sliding surfaces, the i$^{th}$ sliding surface includes at least two sliding mode parameters. In some embodiments, the state parameters included in different sliding surfaces are not exactly the same, and the number of the state parameters required to establish each sliding surface is equal. For example, the number of the sliding mode parameters respectively included in the n sliding surfaces is equal, assuming that three state parameters are configured for establishing an i$^{th}$ sliding surface and three state parameters are also configured for establishing an (i+k)$^{th}$ sliding surface.

In some embodiments, the number of the sliding mode parameters included in the i$^{th}$ sliding surface is related to the number of the state parameters configured for establishing the i$^{th}$ sliding surface. In some embodiments, the number of the state parameters configured for establishing the i$^{th}$ sliding surface is one more than the number of the sliding mode parameters configured for establishing the i$^{th}$ sliding surface. To ensure that exact solutions of the rotation torques of the n rotating joints can be calculated through the sliding surface and the dynamics model parameters, the i$^{th}$ sliding surface is related to at least three state parameters in the state parameter value at the first time point. In some embodiments, at least three state parameters related to the i$^{th}$ sliding surface are not completely the same as at least three state parameters related to an l$^{th}$ sliding surface, where l is a positive integer less than or equal to n.

To improve the reliability of the determined rotation torques, the sliding mode parameters need to meet a system stability condition. For the specific details about this part, please refer to the following embodiments.

In some embodiments, the number of the state parameters respectively configured for establishing the n sliding surfaces is equal. For example, any one sliding surface of the n sliding surfaces includes three state parameters.

A method of establishing a sliding surface will be introduced and described below by taking establishing the i$^{th}$ sliding surface as an example.

Generally speaking, the more the state parameters related to a certain sliding surface in the state parameter value at the first time point, the more the reference information used in calculating the rotation torques of the n rotating joints. The mutual constraint between various state quantities helps to improve the accuracy of the rotation torques of the n rotating joints determined according to the n sliding surfaces and the dynamics model parameters, and helps to improve the effect of balance adjustment.

In some embodiments, at least three state parameters and at least two sliding mode parameters are configured for establishing the i$^{th}$ sliding surface.

Exemplarily, the state parameters configured for establishing the i$^{th}$ sliding surface include a deflection angle of the i$^{th}$ link, an angular velocity of the moving wheel, and an angular velocity of the i$^{th}$ link. In this case, the two sliding mode parameters configured for establishing the $i^{th}$ sliding surface are respectively a sliding mode parameter corresponding to the deflection angle of the $i^{th}$ link and a sliding mode parameter corresponding to the angular velocity of the moving wheel. Exemplarily, the $i^{th}$ sliding surface is related to four state parameters in the state parameter value, the $i^{th}$ sliding surface is related to the deflection angle of the $i^{th}$ link, the angular velocity of the moving wheel, the angular velocity of the $i^{th}$ link, and a deflection angle of a $[(i+m)\%n]^{th}$ link, m is a positive integer that cannot be divided by n, and % represents a remainder obtained by division. In this case, the three sliding mode parameters included in the $i^{th}$ sliding surface are respectively a sliding mode parameter corresponding to the deflection angle of the $i^{th}$ link, a sliding mode parameter corresponding to the angular velocity of the moving wheel, and a sliding mode parameter corresponding to the deflection angle of the $[(i+m)\%n]^{th}$ link. The number of the state parameters and number of the sliding mode parameters related to the sliding surface are designed according to the actual needs, which are not limited in the present disclosure.

In some embodiments, multiple sets of sliding surface establishment schemes are designed in the robust controller, and the number of the sliding mode parameters and the state parameters configured for establishing the $i^{th}$ sliding surface are not completely the same in different sliding surface establishment schemes. For example, in a first sliding surface establishment scheme, two sliding mode parameters and three state parameters need to be configured for establishing the $i^{th}$ sliding surface. In a second sliding surface establishment scheme, five sliding mode parameters and six state parameters need to be configured for establishing the $i^{th}$ sliding surface, that is, the number of the sliding mode parameters configured for establishing the sliding surface in the first sliding surface establishment scheme is not equal to the number of the sliding mode parameters required for establishing the sliding surface in the second sliding surface establishment scheme. The number of the state parameters configured for establishing the sliding surface in the first sliding surface establishment scheme is not equal to the number of the state parameters required for establishing the sliding surface in the second sliding surface establishment scheme.

In some embodiments, in the balance control process, the robust controller selects a target establishment scheme from the multiple sets of sliding surface establishment schemes according to the actual situation, and determines the number of the sliding mode parameters required for establishing the $i^{th}$ sliding surface according to the target establishment scheme.

Exemplarily, in a case that the computation performance of the robust controller is high, the robust controller selects from the multiple sets of sliding surface establishment schemes, and uses a sliding surface establishment scheme involving more sliding mode parameters as the target establishment scheme. Exemplarily, the robust controller determines the target establishment scheme according to a task currently executed by the wheel-legged robot. If the task currently executed by the wheel-legged robot has a high requirement on the balance and the robust controller has good computation ability, then the robust controller will select a sliding surface establishment scheme involving more sliding mode parameters from the multiple sets of sliding surface establishment schemes as the target establishment scheme. Exemplarily, in a case that the computation performance of the robust controller is common or there is a power consumption demand, the robust controller selects a sliding surface establishment scheme including fewer sliding mode parameters from at least one set of sliding surface establishment schemes as the target establishment scheme. Exemplarily, the robust controller receives a control instruction from a remote controller, and the control instruction is configured for indicating the target establishment scheme selected from the multiple sliding surface establishment schemes.

Operation 1136 (not shown): Establish the $i^{th}$ sliding surface according to the at least two sliding mode parameters and the state parameter value at the first time point.

In some embodiments, the state parameter value includes deflection angles of the n links, an angular velocity of the moving wheel, and angular velocities of the n links. In some embodiments, the robust controller establishes the $i^{th}$ sliding surface according to at least three state parameters in the state parameter value at the first time point and at least two sliding mode parameters.

In some embodiments, operation 1136, i.e., establishing the $i^{th}$ sliding surface according to the at least two sliding mode parameters and the state parameter value at the first time point, includes the following sub-operations:

Sub-operation 1136-a: Process the deflection angle of an $i^{th}$ link according to the first sliding mode parameter of the at least two sliding mode parameters to obtain a processing result of the $i^{th}$ link.

In some embodiments, the first sliding mode parameter is a coefficient corresponding to the deflection angle of the $i^{th}$ link and the second sliding mode parameter is a coefficient corresponding to the angular velocity of the moving wheel link.

In some embodiments, the processing result of the $i^{th}$ link refers to a result obtained by using the first sliding mode parameter to process the deflection angle of the $i^{th}$ link in the process of establishing the $i^{th}$ sliding surface. Exemplarily, a method of processing the deflection angle of the $i^{th}$ link by using the first sliding mode parameter includes, but not limited to, performing basic calculations (such as addition, subtraction, multiplication, and division) by using the first sliding mode parameter and the deflection angle of the $i^{th}$ mechanism to obtain a processing result of the $i^{th}$ link. For example, the first sliding mode parameter is multiplied by the angular velocity of the $i^{th}$ link to obtain the processing result of the first link.

Sub-operation 1136-b: Process the angular velocity of the moving wheel according to the second sliding mode parameter of the at least two sliding mode parameters to obtain a processing result of the moving wheel. In some embodiments, in the process of establishing the $i^{th}$ sliding surface, the processing result of the moving wheel refers to a result obtained by processing the angular velocity of the moving wheel by using the second sliding mode parameter. Exemplarily, a method of processing the angular velocity of the moving wheel by using the first sliding mode parameter includes, but not limited to, performing basic calculations by using the second sliding mode parameter and the angular velocity of the moving wheel. For example, the second sliding mode parameter is multiplied by the angular velocity of the moving wheel to obtain the processing result of the moving wheel.

The second sliding mode parameters corresponding to different sliding surfaces are different, that is, for the processes of establishing different sliding surfaces, the processing results of the moving wheel obtained by processing the angular velocity of the moving wheel by using the second sliding mode parameters are different.

Sub-operation 1136-c: Establish the $i^{th}$ sliding surface according to the processing result of the $i^{th}$ link, the processing result of the moving wheel, and the angular velocity of the $i^{th}$ link.

In some embodiments, the $i^{th}$ sliding surface is proportional to the processing result of the $i^{th}$ link, the $i^{th}$ sliding surface is proportional to the processing result of the moving wheel, and the first sliding surface is proportional to the angular velocity of the $i^{th}$ link. Exemplarily, the robust controller adds up the processing result of the $i^{th}$ link, the processing result of the moving wheel, and the angular velocity of the $i^{th}$ link to obtain the $i^{th}$ sliding surface.

In some embodiments, the robust controller establishes the $i^{th}$ sliding surface according to the processing result of the $i^{th}$ link, the processing result of the moving wheel, the angular velocity of the $i^{th}$ link, and a sliding mode constant. The sliding mode constant may be a preset value.

The robust controller respectively determines the n sliding surfaces through the method of establishing the $i^{th}$ sliding surface described above.

The n sliding surface may be expressed through the following formula:

$$\mathrm{s} = \emptyset q + \Lambda \dot{\varphi} + \dot{q}$$

where s represents a sliding surface matrix including the n sliding surfaces; $\emptyset \in \mathbb{R}^{n \times n}$ , including first sliding mode parameters respectively corresponding to the deflection angles of the n links, $\Lambda \in \mathbb{R}^{n \times 1}$ , including the second sliding mode parameters respectively corresponding to the angular velocity of the moving wheel in the n sliding surfaces. For the explanations of the other parameters, please refer to the introduction above, which will not be repeated here.

By establishing the n sliding surfaces in this way, on the premise of ensuring that the rotation torques of the n rotating joints can be calculated according to the sliding surfaces and the dynamics model parameters, the number of the sliding mode parameters and the state parameters used in the process of establishing the sliding surfaces is controlled, thereby helping to control the computation overhead in calculating the rotation torques of the n rotating joints, accelerate the speed of determining the rotation torques, reduce the power consumption, and achieve the balance control of the robot.

After describing the design method of the dynamics model parameters and the n sliding surfaces in the robust controller, the content related to the design of the robust controller corresponding to operation 1140, i.e., calculating rotation torques of the n rotating joints according to the sliding surface and the dynamics model parameters, will be introduced and described below.

After establishing the n sliding surfaces according to the state parameter value, the robust controller determines first-order derivatives formula of the n sliding surfaces with respect to time, and uses torques to represent the angular accelerations of the n links according to the dynamics equation (formula 2). After sorting, the following formula 3 is obtained:

$$\dot{\mathrm{s}} = \emptyset \dot{q} + \Lambda \ddot{\varphi} + \ddot{q} = \emptyset \dot{q} + \Lambda f_{\varphi} + \Lambda g_{\varphi} \tau + f_q + g_q \tau = \left( \emptyset \dot{q} + \Lambda f_{\varphi} + f_q \right) + (\Lambda g_{\varphi} + g_q) \tau$$

where $\dot{s}$ represents first-order derivatives of the n sliding surfaces respectively with respect to time, $f_{\varphi}$ is $f_{\varphi}(\varphi, \dot{\varphi}, q, q)$ in the offset parameter matrix f[] in formula 2 described above, $f_q$ is $f_q(\varphi, \dot{\varphi}, q, \dot{q})$ in the offset parameter matrix f[] in formula 2 described above, $g_{\varphi}$ is $g_{\varphi}(\varphi, \dot{\varphi}, q, \dot{q})$ in the proportion parameter matrix g[] in formula 2 described above, and $g_q$ is $g_q(\varphi, \dot{\varphi}, q, \dot{q})$ in the proportion parameter matrix g[] in formula 2 described above. For other parameters, please refer to the above introduction, which will not be repeated here.

Transposition processing is performed on formula 3 to obtain formula 4:

$$\tau = \left( \Lambda g_{\varphi} + g_q \right)^{-1} \left( -\emptyset \dot{q} - \Lambda f_{\varphi} - f_q - k_{\eta} sgn(s) \right)$$

$$\dot{s} = -k_\eta sgn(s)$$

$$s^T \dot{s} = -k_\eta |s|$$

where s$gn$() is a symbol function, $k_\eta \in \mathbb{R}^{n \times n}$ is a constant matrix, $s^T$ is a transpose matrix of the sliding surface matrix s including the n sliding surfaces, |s| represents absolute values of the n sliding surfaces, $|s| = \begin{Vmatrix} |s_1| \\ |s_2| \\ \vdots \\ |s_n| \end{Vmatrix}$, $\dot{s}$ represents first-

order derivatives of the n sliding surfaces with respect to time. For other parameters, please refer to the above introduction, which will not be repeated here.

In some embodiments, formula 3 and formula 4 are obtained by the robust controller through real-time calculation in the balance control process.

By utilizing the properties of the sliding surface, when the sliding surface is controlled to be equal to 0, the state parameters related to the sliding surface will gradually approach 0 along the sliding surface, that is, the wheel-legged robot will restore to a balanced state. The state parameter value (or the state parameters in the state parameter value) satisfy the following on the sliding surface:

$$s = \emptyset q + \Lambda \dot{\varphi} + \dot{q} = 0$$

The angular velocities of the *n* links may be inversely expressed through the above formula:

$$\dot{q} = -\emptyset q - \Lambda \dot{\varphi}$$

The robust controller determines the first-order derivatives of the angular velocities of the *n* links with respect to time to obtain formula 5 that can represent the angular accelerations of the n links:

$$\ddot{q} = -\emptyset \dot{q} - \Lambda \ddot{\varphi} = \emptyset^2 q + \emptyset \Lambda \dot{\varphi} - \Lambda \ddot{\varphi}$$

Since q is a vector that includes the deflection angles of the n links, q is split: letting $\alpha$ represent $q_1$ (the deflection

angle of the first link), and letting $\beta$ represent $\begin{pmatrix} q_2 \\ \vdots \\ q_n \end{pmatrix}$, that is, letting $\beta$ include the deflection angles of all links except for the first link of the n links, the dynamics equation obtained based on the n-level inverted pendulum model is written as:

$$m_{\varphi\varphi}\ddot{\varphi} + m_{\varphi\alpha}\ddot{\alpha} + m_{\varphi\beta}\ddot{\beta} + c_\varphi = \tau_1$$

$$m_{\varphi\alpha}\ddot{\varphi} + m_{\alpha\alpha}\ddot{\alpha} + m_{\alpha\beta}\ddot{\beta} + c_\alpha + g_\alpha = -\tau_1 - \tau_2$$

$$m_{\varphi\beta}\ddot{\varphi} + m_{\alpha\beta}\ddot{\alpha} + m_{\beta\beta}\ddot{\beta} + c_\beta + g_\beta = \tau_2$$

where in this formula, $\ddot{\alpha}$ represents an angular acceleration of the first link; $\ddot{\beta}$ represents angular accelerations respectively corresponding to other links except for the first link of the n links; $m_{\varphi\varphi}$ represents an inertia quantity related to the moving wheel in the inertia matrix M; $m_{\varphi\alpha}$ represents an inertia quantity related to the first link in $m_{\varphi q}$ in the inertia matrix M; $m_{\varphi\alpha}$ represents an inertia quantity unrelated to the first link in $m_{\varphi q}$ in the inertia matrix M; $m_{\alpha\alpha}$ represents an inertia quantity related to the first link in $m_{qq}$ in the inertia matrix M; $m_{\varphi\alpha}$ represents an inertia quantity unrelated to the first link in $m_{qq}$ in the inertia matrix M; $c_\alpha$ represents a bias force acting on he first link; $c_\beta$ represents eccentric forces respectively acting on other links except for the first link of the n links; $g_\alpha$ represents a gravity acting the first link; $g_\beta$ represents gravities respectively

acting on other links except for the first link of the n links; $\tau_1$ represents a rotation torque of the first rotating joint; and $\tau_2$ represents rotation torques respectively corresponding to other rotating joints except for the first rotating joint of the n rotating joints.

The three formulas included in the above dynamics equation are added up to obtain formula 6:

$$\left(m_{\varphi\varphi} + m_{\varphi\alpha} + m_{\varphi\beta}\right)\ddot{\varphi} + \left(m_{\varphi\alpha} + m_{\alpha\alpha} + m_{\alpha\beta}\right)\ddot{\alpha} + \left(m_{\varphi\beta} + m_{\alpha\beta} + m_{\beta\beta}\right)\ddot{\beta} + c_\varphi + c_\alpha + c_\beta$$
$$+ g_\alpha + g_\beta = 0$$

$\ddot{\alpha}$ and $\ddot{\beta}$ in formula 6 are merged into $\ddot{q}$ to obtain formula 7:

$$\left(m_{\varphi\varphi} + m_{\varphi\alpha} + m_{\varphi\beta}\right)\ddot{\varphi} + \left[m_{\varphi\alpha} + m_{\alpha\alpha} + m_{\alpha\beta}, m_{\varphi\beta} + m_{\alpha\beta} + m_{\beta\beta}\right]\ddot{q} + c_\varphi + c_\alpha + c_\beta + g_\alpha$$
$$+ g_\beta = 0$$

Equivalent replacement is performed on $\ddot{q}$ in formula 7 by using formula 5 to obtain formula 8:

$$\left(m_{\varphi\varphi} + m_{\varphi\alpha} + m_{\varphi\beta} - \left[m_{\varphi\alpha} + m_{\alpha\alpha} + m_{\alpha\beta}, m_{\varphi\beta} + m_{\alpha\beta} + m_{\beta\beta}\right]\Lambda\right)\ddot{\varphi}$$
$$+ \left[m_{\varphi\alpha} + m_{\alpha\alpha} + m_{\alpha\beta}, m_{\varphi\beta} + m_{\alpha\beta} + m_{\beta\beta}\right](\emptyset^2 q + \emptyset\Lambda\dot{\varphi}) + c_\varphi + c_\alpha + c_\beta$$
$$+ g_\alpha + g_\beta = 0$$

A formula 9 for expressing $\ddot{\varphi}$ is obtained through formula 8:

$\ddot{\varphi} = (m_{\varphi\varphi} + m_{\varphi\alpha} + m_{\varphi\beta} - [m_{\varphi\alpha} + m_{\alpha\alpha} + m_{\alpha\beta}, m_{\varphi\beta} + m_{\alpha\beta} + m_{\beta\beta}]\Lambda)^{-1}\{-[m_{\varphi\alpha} + m_{\alpha\alpha} + m_{\alpha\beta}, m_{\varphi\beta} + m_{\alpha\beta} + m_{\beta\beta}](\emptyset^2 q + \emptyset\Lambda\dot{\varphi}) - c_\varphi - c_\alpha - c_\beta - g_\alpha - g_\beta\}$

A formula 10 for expressing $\ddot{q}$ is obtained through formula 5 and formula 9:

$$\ddot{q} = \emptyset^2 q + \emptyset\Lambda\dot{\varphi}$$
$$- \Lambda\big(m_{\varphi\varphi} + m_{\varphi\alpha} + m_{\varphi\beta}$$
$$- \left[m_{\varphi\alpha} + m_{\alpha\alpha} + m_{\alpha\beta}, m_{\varphi\beta} + m_{\alpha\beta} + m_{\beta\beta}\right]\Lambda\big)^{-1}\big\{-\left[m_{\varphi\alpha} + m_{\alpha\alpha}\right.$$
$$\left. + m_{\alpha\beta}, m_{\varphi\beta} + m_{\alpha\beta} + m_{\beta\beta}\right](\emptyset^2 q + \emptyset\Lambda\dot{\varphi}) - c_\varphi - c_\alpha - c_\beta - g_\alpha - g_\beta\big\}$$

Simultaneous establishment is performed on $\dot{q}, \ddot{\varphi}, \ddot{q}$ to obtain a state equation in a matrix form:

$$\begin{bmatrix} \dot{q} \\ \ddot{\varphi} \\ \ddot{q} \end{bmatrix} = \begin{bmatrix} 0 & 0 & I \\ \emptyset^2\Lambda m_1^{-1}m_2 & \emptyset\Lambda m_1^{-1}m_2 & 0 \\ \emptyset^2(1 + \Lambda m_1^{-1}m_2) & \emptyset\Lambda(1 + \Lambda m_1^{-1}m_2) & 0 \end{bmatrix}\begin{bmatrix} q \\ \dot{\varphi} \\ \dot{q} \end{bmatrix} + \begin{bmatrix} 0 \\ c_1 \\ \Lambda c_1 \end{bmatrix}u$$

where $m_1 = (m_{\varphi\varphi} + m_{\varphi\alpha} + m_{\varphi\beta} - [m_{\varphi\alpha} + m_{\alpha\alpha} + m_{\alpha\beta}, m_{\varphi\beta} + m_{\alpha\beta} + m_{\beta\beta}]\Lambda)$, $m_2 = -[m_{\varphi a} + m_{\alpha\alpha} + m_{\alpha\beta}, m_{\varphi\beta} + m_{\alpha\beta} + m_{\beta\beta}]$, $c_1 = -c_\varphi - c_\alpha - c_\beta - g_\alpha - g_\beta$, and $I$ is a unit matrix.

In some embodiments, a system stability criterion is related to the state equation determined according to the dynamics equation and the sliding surface. Exemplarily, the stability criterion is related to the coefficient matrix in the state equation. To ensure that the system stability criterion is satisfied, the sliding mode parameters need to satisfy the coefficient matrix of the state equation:

$$\begin{bmatrix} 0 & 0 & I \\ \emptyset^2\Lambda m_1^{-1}m_2 & \emptyset\Lambda m_1^{-1}m_2 & 0 \\ \emptyset^2(1 + \Lambda m_1^{-1}m_2) & \emptyset\Lambda(1 + \Lambda m_1^{-1}m_2) & 0 \end{bmatrix}$$, whose characteristic roots are distributed in a left half plane of a complex plane. This state equation can serve as a matrix inequality constraint, that is, the values of the sliding mode parameters are distributed in the left half plane of the complex plane of the coefficient matrix.

In some embodiments, in the balance control process in the present disclosure, the robust controller determines the rotation torques of the n rotating joints according to formula 4 and the state equation. In the balance control process, the robust controller calculates the rotation torques $\tau$ of the n rotating joints according to formula 4. Formula 4 involves the n sliding surfaces that form a sliding surface matrix s. Formula 2 involves the sliding mode parameters in addition to the dynamics model parameters.

The robust controller determines the dynamics model parameters and establishes the n sliding surfaces by acquiring the state parameter value at the first time point and substituting the state parameter value at the first time point into the corresponding formula. The sliding mode parameters in the sliding surfaces satisfy the system stability condition. Then, the robust controller ensures that the sliding mode parameters satisfy the matrix inequality constraint formed by the state equation above, and calculates the rotation torques $\tau$ of the n rotating joints based on formula 4.

Exemplarily, in the balance control method provided in the present disclosure, sliding mode parameters that satisfy the matrix inequality constraint are first determined, and then sliding surfaces are established through the sliding mode parameters. The robust controller determines a state equation according to the dynamics equation and the representation form of the sliding surfaces (at this time, the sliding mode parameters in the sliding surfaces are unknown). The robust controller determines values or value ranges of the sliding mode parameters under the system stability condition where the characteristic roots of the coefficient matrix satisfying the state equation are in the left half plane, and obtains the actual values of the sliding mode parameters required in the process of establishing the sliding surfaces. The robust controller substitutes the sliding mode parameters into the sliding surfaces and calculates the rotation torques of the n rotating joints according to the sliding surfaces and the dynamics model parameters.

Exemplarily, in the balance control method provided in the present disclosure, sliding mode parameters corresponding to any n sliding surfaces within a certain value range are first selected, n sliding surfaces are established by using these sliding mode parameters, and rotation torques $\tau$ of the n rotating joints are calculated through formula 4. Then the robust controller verifies whether the four sliding mode parameters satisfy the matrix inequality constraint described above. In a case that the four sliding mode parameters satisfy the matrix inequality constraint described above, the rotation torques $\tau$ of the n rotating joints can be configured for controlling the n rotating joints. In a case that the n sliding mode parameters do not satisfy the matrix inequality constraint described above, the determined rotation torques $\tau$ of the n rotating joints cannot be used.

A method of determining sliding mode parameters will be introduced and described below through several embodiments.

In some embodiments, for the $i^{th}$ sliding surface of the n sliding surfaces, the robust controller determines at least two sliding mode parameters, including: determining a first sliding mode parameter of the at least one sliding mode parameters from a $(2i-1)^{th}$ predicted parameter set, and determining a second sliding mode parameter of the at least one sliding mode parameter from a $(2i)^{th}$ predicted parameter set. Sliding mode parameters respectively included in the $(2i-1)^{th}$ predicted parameter set and the $(2i)^{th}$ predicted parameter set satisfy a constraint condition of a stability criterion.

In this embodiment, after determining the state at the first time point, the computer device first uses the above state equation as a matrix inequality constraint, determines solution sets respectively corresponding to the sliding mode parameters that need to be respectively configured for the n sliding surfaces, and obtains 2n predicted parameter sets. That is to say, for any one of the 2n predicted parameter sets, the sliding mode parameters in the predicted parameter set satisfy the principle of system stability.

In the process of establishing the $i^{th}$ sliding surface, a first sliding mode parameter of the at least two sliding mode parameters is determined from the $(2i-1)^{th}$ predicted parameter set, and a second sliding mode parameter of the at least two sliding mode parameters is determined from the $(2i)^{th}$ predicted parameter set, the $i^{th}$ sliding surface is established according to the state parameter value at the first time and the above at least two sliding mode parameters, and then, the robust controller calculates the rotation torques of the n rotating joints according to formula 4 above.

In this embodiment, taking establishing a sliding surface by using two sliding mode parameters as an example, the method of determining the sliding mode parameters is introduced and described. If k sliding mode parameters need to be configured for establishing a sliding surface, then in the process of establishing the $i^{th}$ sliding surface, a sliding mode parameter needs to be acquired from each of the k predicted parameter sets corresponding to the $i^{th}$ sliding surface, so as to obtain k sliding mode parameters. In a case that k is equal to 2, it is the method introduced in the above embodiment. k is a positive integer greater than or equal to 2, and the maximum value of k is set according to the actual needs, which is not limited in the present disclosure.

This method helps to avoid selecting sliding mode parameters that do not satisfy system stability, which may result in the inability to control the balance of the wheel-legged robot through the rotation torques of the n rotating joints calculated by using these sliding mode parameters, improves the usability of the determined rotation torques of the rotating joints, helps to avoid the calculation performed by the computer device when determining the rotation torques again, and helps to shorten the time required to determine the rotation torques of the n rotating joints.

A method of adjusting the attitude of the wheel-legged robot by using the rotation torques of the n rotating joints will be introduced and described below through several embodiments.

In some embodiments, operation 1150 in the above embodiment, i.e., controlling the n rotating joints according to the rotation torques of the n rotating joints, includes the following sub-operations:

Sub-operation 1150-a: For any rotating joint of the n rotating joints, control a rotating motor corresponding to the rotating joint to rotate according to the rotation torque of the rotating joint.

In this embodiment, after the robust controller calculates the rotation torques of the n rotating joints, it transmits the rotation torques of the n rotating joints respectively to rotating motors corresponding to the rotating joints. For any one of the n rotating joints, the rotating motor corresponding the rotating joint rotates according to the rotation torque of the rotating joint after receiving the rotation torque of the rotating joint, so as to drive at least one link connected to the rotating joint to move, so that the deflection angle and angular velocity of at least one link of the n links change.

In some embodiments, the rotating motors respectively corresponding to the n rotating joints rotate simultaneously at the second time point after receiving the rotation torques of the respective rotating joints, so that the attitude of the wheel-legged robot changes.

By adjusting the position and state of the wheel-legged robot through the n rotating motors, the balance control of the wheel-legged robot is achieved, so that multiple links in the wheel-legged robot can participate in the balance control process, thereby helping to improve the efficiency of adjusting the attitude and motion state of the wheel-legged robot according to the rotation torques.

In the above embodiment, the robust controller directly transmits the rotation torques of the n rotating joints to the rotating motors after determining the rotation torques of the n rotating joints, and controls the rotating motors corresponding to the n rotating joints to change the deflection angles of the n links, thereby changing the attitude of the wheel-legged robot and adjusting the balanced state. Based on the rotation torques of the rotating joints, the rotating motors of the rotating joints are controlled to rotate. After determining the rotation torques of the rotating joints, the balanced state of the wheel-legged robot can be adjusted in time, thereby helping the wheel-legged robot to quickly restore to a balanced state.

After the robust controller determines the rotation torques of the n rotating joints, it may also determine the rotation torques respectively corresponding to the whole body joints of the wheel-legged robot according to the rotation torques of the n rotating joints, so that more links in addition to the n links in the wheel-legged robot can participate in the balance control process, and the combination of the balance control process and the motion process is achieved. This method will be introduced and described below through several embodiments.

In some embodiments, operation 1150, i.e., controlling the rotating motors corresponding to the n rotating joints according to the rotation torques of the n rotating joints at the second time point, may include the following sub-operations:

Sub-operation 1153: Calculate a task acceleration of the wheel-legged robot at the second time point according to the rotation torques of the n rotating joints. The task acceleration includes an acceleration related to a mass center of the wheel-legged robot.

In some embodiments, the mass center of the wheel-legged robot refers to an imaginary point that gathers all the mass of the wheel-legged robot. The mass center of the wheel-legged robot is related to factors such as the mass distribution of each mechanism of the wheel-legged robot and the attitude of the wheel-legged robot.

In some embodiments, the task acceleration includes, but not limited to, at least one of the following: an acceleration of the mass center of the wheel-legged robot in the x-axis, an acceleration of the mass center of the wheel-legged robot in the y-axis, an acceleration of the mass center of the wheel-legged robot in the z-axis, an angular acceleration of the mass center of the wheel-legged robot when rotating around the x-axis direction, an angular acceleration of the mass center of the wheel-legged robot when rotating around the y-axis direction, and an angular acceleration of the mass center of the wheel-legged robot when rotating around the z-axis direction. Exemplarily, the task acceleration is observed in an operation space or in a joint space.

The operation space refers to a space related to an operation task of the wheel-legged robot. Physical quantities in this operation are observed in a Cartesian coordinate system (world coordinate system). The joint space refers to a coordinate system for observing the motion states of joints. Exemplarily, the physical quantities in the operation space and the physical quantities in the task space are convertible. The position information of a certain mechanism in the operation space and the position in the joint space may be converted through a kinematic formula, and the velocity in the operation space and the velocity in the joint space may be converted through a Jacobian matrix. The Jacobian matrix refers to a matrix in which first-order partial derivatives are arranged in a certain way.

In some embodiments, the task acceleration includes an acceleration related to the mass center of the wheel-legged robot when the wheel-legged robot executes an operation space task. In some embodiments, the task acceleration is related to a position of the mass center of the wheel-legged robot relative to the wheel-legged robot. For a method of determining the task acceleration, please refer to the following content.

The operation space task may be understood as a task that the wheel-legged robot needs to perform in the operation space. At a certain moment, the operation task that the wheel-legged robot needs to perform is determined according to the motion scenario of the wheel-legged robot. In some embodiments, at the first time point, the wheel-legged robot may perform multiple operation space tasks.

Exemplarily, the operation space tasks include, but not limited to, at least one of the following: a support wheel task, a vertical torso task, a torso attitude task, a swing wheel task, a mass center task, and the like. The support wheel task refers to a task related to a moving wheel of at least one moving wheel of the wheel-legged robot that is in contact with the contact surface. The vertical torso task refers to a task of the torso mechanism (also known as the body mechanism) of the wheel-legged robot in the z-axis direction of the world coordinate system. The torso attitude task refers to a task related to an Euler angle of the torso mechanism of the wheel-legged robot. The Euler angle includes a roll angle, a pitch angle, and a yaw angle. The swing wheel task refers to a task related to a moving wheel of at least one moving wheel of the wheel-legged robot that is not in contact with the contact surface. The mass center task refers to a task related to the mass center of the wheel-legged robot.

Sub-operation 1156: Determine force and torque instructions for whole body joints of the wheel-legged robot at the second time point according to the task acceleration. The whole body joints include the n rotating joints.

In some embodiments, the whole body joints refer to active joints in the wheel-legged robot. In some embodiments, the whole body joints include a rotating joint and a straight joint. Exemplarily, the rotating joint corresponds to a rotating motor. The deflection angles, angular velocities and the like of the links connected to the rotating joint are changed through the rotation of the rotating motor. The linear joint corresponds to a linear motor. The linear motor is configured to change the length of the mechanism. For example, the leg mechanism (first link) of the wheel-legged robot includes a linear motor, and the length of the leg mechanism can be adjusted through the linear motor.

In some embodiments, after determining the task acceleration, the observation module transmits the task acceleration to the whole body dynamics controller. The whole body dynamics controller determines force and torque instructions respectively corresponding to the whole body joints according to the task acceleration. In some embodiments, if the wheel-legged robot performs multiple operation space tasks at the first time point, in addition to determining the task acceleration related to the mass center of the wheel-legged robot, it is also required to calculate other task accelerations respectively corresponding to other operation space tasks. For the specific content about this process, please refer to the following embodiments.

In some embodiments, the whole body dynamics controller is designed with a whole body dynamics equation of the wheel-legged robot, and the whole body dynamics equation indicates a relationship between the attitude of the wheel-legged robot and a whole body state variable. The whole body dynamics equation is obtained by establishing a whole body dynamics model of the wheel-legged robot and deriving through kinematics.

In some embodiments, the whole body dynamics model may be expressed by the following formula:

$$H\ddot{q} + C = S^T \tau + J_C^T f$$

where $H \in \mathbb{R}^{N_G \times N_G}$ represents a joint space inertia matrix, and the joint space inertia matrix H includes inertia quantities of joint rigid bodies of the whole body joints; $C \in \mathbb{R}^{N_G}$ represents bias forces respectively acting on the whole body joints in the joint space, C matrix includes a sum of the Coriolis force, the centripetal force, and the gravity acting on the complete wheel-legged robot; $S \in \mathbb{R}^{N_J \times N_G}$ represents a selection matrix; $J_C \in \mathbb{R}^{N_C \times N_G}$ represents a Jacobian matrix of contact points; $\tau = \mathbb{R}^{N_J}$; $f = \mathbb{R}^{N_C}$ represents a contact force vector, including at least one contact force acting on the wheel-legged robot; $q, \dot{q}, \ddot{q} \in \mathbb{R}^{N_G}$ respectively represent a generalized position, a generalized velocity, a generalized acceleration; $N_G$ represents a total degree of freedom of the robot, $N_G = N_f + N_J$, $N_f$ is a floating degree of freedom, $N_J$ is a degree of freedom of an active joint, the active joint refers to a joint that can move automatically, $N_C$ represents the number of contact forces, $N_C$ is equal to a product of the number $n_C$ of contact forces and the dimension $N_D$ $\in \{0,1,2,3\}$ of a single contact force. $\tau$ is a vector that includes the force and torque instructions for the whole body joints, and $\tau$ is a vector that includes the rotation torque of the n rotating joints. The meanings of the two are not the same.

In some embodiments, the whole body dynamics equation is obtained by establishing a whole body dynamics model of the wheel-legged robot based on rigid body dynamics, and the whole body dynamics equation is configured for describing a relationship between the attitude of the complete wheel-legged robot and the motion state of each active joint and the external force acting thereon.

In some embodiments, the force and torque instructions include at least one of the following: a force instruction and a torque instruction. In some embodiments, the force and torque instructions for the rotating motor include a torque instruction, and the torque instruction is configured for controlling the rotating motor to rotate according to the torque instruction. The force and torque instructions for the linear motor include a force instruction, and the force instruction is configured for controlling the linear motor to perform linear motion.

Sub-operation 1159: Control the whole body joints according to the force and torque instructions at the second time point.

After determining the force and torque instructions for the whole body joints, the whole body dynamics controller transmits the force and torque instructions to the joint motors respectively corresponding to the whole body joints. The joint motors respectively corresponding to the whole body joints perform linear motion or rotation according to the received force and torque instructions, so that the attitude of the wheel-legged robot changes, thereby adjusting the balanced state of the wheel-legged robot.

In some embodiments, after the rotating motors respectively corresponding to the n rotating joints receive the force and torque instructions, the rotating motors rotate to change the deflection angle, angular velocity, and angular acceleration of at least one wheel-legged robot corresponding to the n-level inverted pendulum model. For the active joints (i.e., other active joints except for the n joints) not considered in the n-level inverted pendulum, these active joints start to perform motion after receiving the force and torque instructions.

Exemplarily, after the linear motors in the leg mechanisms receive the force and torque instructions, the linear motors in the leg mechanisms change the lengths of the leg mechanisms and the height of the wheel-legged robot, so that the position of the mass center of the wheel-legged robot in the z-axis direction changes. Exemplarily, for other rotating motors except for the n rotating motors, the other rotating motors rotate according to the received force and torque instructions.

The rotation torques of the n rotating joints, and the values of the force and torque instructions for the n rotating joints may not be the same. In the process that the whole body dynamics controller determines the force and torque instructions for the whole body joints, a state parameter value related to the operation space task of the wheel-legged robot is used, and more rotating joints are involved.

Balance control is performed according to the force and torque instructions generated by the whole body dynamics controller, so that more links (more than n links) can participate in the balance control, thereby enriching the attitudes of the wheel-legged robot in the balance adjustment process, and achieving the combination of the balance adjustment and the operation space task in the motion process. By combining the robust controller and the whole body dynamics controller to complete the balance adjustment, a new thought for balance control is provided.

A method of determining a task acceleration will be introduced and described below through several embodiments.

In some embodiments, sub-operation 1153: calculate a task acceleration of the wheel-legged robot at the second time point according to the rotation torques of the n rotating joints. Sub-operation 1153 may be completed by an observation module. The observation module is configured to determine the task acceleration. In some embodiments, the observation module is designed with a method of converting the rotation torques of the n rotating joints into the task acceleration.

In some embodiments, sub-operation 1153 may include the following sub-operations:
Sub-operation 1153-a: Determine an angular acceleration at the second time point according to the dynamics equation and the rotation torques of the n rotating joints.

The dynamics equation refers to a dynamics equation obtained based on the n-level inverted pendulum model. The dynamics equation is related to the motion states of the n mechanisms and the rotation torques of the n rotating joints.

In some embodiments, after the robust controller of the wheel-legged robot determines the rotation torques of the n rotating joints based on the state parameter value at the first time point, it transmits the rotation torques of the n rotating joints to the observation module in the control system, and according to formula 2 described above:

$$\begin{pmatrix} \ddot{\varphi} \\ \ddot{q} \end{pmatrix} = \begin{pmatrix} f_\varphi(\varphi, \dot{\varphi}, q, \dot{q}) \\ f_q(\varphi, \dot{\varphi}, q, \dot{q}) \end{pmatrix} + \begin{pmatrix} g_\varphi(\varphi, \dot{\varphi}, q, \dot{q}) \\ g_q(\varphi, \dot{\varphi}, q, \dot{q}) \end{pmatrix} \tau$$

the observation module calculates an angular acceleration of the wheel-legged robot at a second time point.

In some embodiments, the angular acceleration at the second time point refers to an angular acceleration related to the n-level inverted pendulum model. Exemplarily, the angular acceleration at the second time point includes angular accelerations of the n links at the second time point and an angular acceleration of the moving wheel at the second time point.

Sub-operation 1153-b: Determine an expected incremental position and an expected incremental speed of the mass center of the wheel-legged robot at the second time point according to the state parameter value at the first time point and the angular acceleration at the second time point. The expected incremental position indicates a distance between a projection of the mass center of the wheel-legged robot on a contact surface and a virtual contact point in a first direction. The expected incremental speed indicates a changing speed of the distance in the first direction. The virtual contact point refers to a center of each contact point between the wheel-legged robot and the contact surface.

In some embodiments, in a case that at least two moving wheels in the wheel-legged robot are in contact with the contact surface, the virtual contact point refers to a center of a connecting line between contact points of the at least two moving wheels with the contact surface.

In some embodiments, the expected incremental position indicates the position of the mass center of the wheel-legged robot relative to the wheel-legged robot. The expected incremental speed is a first-order derivative of the expected incremental position with respect to time, that is, the expected incremental speed indicates the changing speed of the position of the mass center of the wheel-legged robot relative to the wheel-legged robot.

In some embodiments, the expected incremental position and the expected incremental speed respectively refer to the relative position and relative speed of the mass center of the wheel-legged robot in the first direction. The first direction refers to a forward direction of the wheel-legged robot (i.e., the x-axis direction in the world coordinate system). If the wheel-legged robot involves motion in the left-right direction (i.e., the y-axis direction in the world coordinate system), the expected incremental speed refers to a component of the relative speed of the mass center of the wheel-legged robot in the first direction.

In some embodiments, after determining the angular acceleration at the second time point, the observation module uses a forward kinematics method to determine the expected incremental position and the expected incremental speed of the mass center of the wheel-legged robot at the second time point according to the acceleration at the second time point, the deflection angles of the n links, the rotation angle of the moving wheel, the angular velocities of the n links, and the configuration, model, and parameters of the wheel-legged robot.

In some embodiments, in a case that the state quantities such as the acceleration at the second time point, the deflection angles of the n mechanisms, the rotation angle of the moving wheel, and the angular velocities of the n mechanisms are known, the position and velocity of the end of the wheel-legged robot are calculated according to forward kinematics, that is, the attitude of the wheel-legged robot at the second time point is determined. According to the position of the wheel-legged robot in the operation space and the attitude of the wheel-legged robot, the position of the mass center of the wheel-legged robot in the operation space can be calculated, thereby obtaining the expected incremental position and the expected incremental speed.

Sub-operation 1153-c: Determine the task acceleration of the wheel-legged robot at the second time point according to the expected incremental position and the expected incremental speed.

In some embodiments, the observation module determines a reference state variable group of the mass center of the wheel-legged robot according to the expected incremental position and the expected incremental speed. The observation module determines the task acceleration according to the reference state variable group and an actual state variable group of the mass center of the wheel-legged robot.

The reference state variable group indicates a state variable of the mass center of the wheel-legged robot at the first time point inferred based on kinematics. In some embodiments, the reference state variable group includes an expected incremental position $\Delta x^r$, an expected incremental speed $\Delta \dot{x}^r$, an expected position $x_{com}^r$, and an expected speed $\dot{x}_{com}^r$. The expected position refers to an operation space position of the mass center of the wheel-legged robot at the second time point, or the joint space position at the second time point. The expected speed refers to a first-order derivative of the expected position with respect to time.

The actual state variable group indicates a state variable of the wheel-legged robot observed through sensors. In some embodiments, the actual state variable group includes an actual incremental position $\Delta x^a$, an actual incremental speed $\Delta \dot{x}^a$, an actual position $x_{com}^a$, and an actual speed $\dot{x}_{com}^a$. The actual position refers to an operation space position of the mass center of the wheel-legged robot. The actual speed refers to a first-order derivative of the actual position with respect to time.

In some embodiments, the task acceleration $\ddot{x}_{com}$ of the wheel-legged robot at the second time point may be calculated through the following formula:

$$\ddot{x}_{com} = K(\begin{bmatrix} \Delta x^r \\ \Delta \dot{x}^r \\ x_{com}^r \\ \dot{x}_{com}^r \end{bmatrix} - \begin{bmatrix} \Delta x^a \\ \Delta \dot{x}^a \\ x_{com}^a \\ \dot{x}_{com}^a \end{bmatrix})$$

where $K$ represents a feedback gain matrix. Exemplarily, an objective function of the dynamics equation of the inverted pendulum is established by using LQR, and then iteration with an objective of minimizing the objective function is performed to obtain the feedback gain matrix of the dynamics equation of the inverted pendulum. LQR is constructed based on quadratic programming. Its essence is to find a multi-dimensional vector under a linear constraint, so that a quadratic objective function of this multi-dimensional vector is minimized (or maximized).

In some embodiments, the observation module transmits the calculated task acceleration of the wheel-legged robot to the whole body dynamics controller, the whole body dynamics controller generates force and torque instructions for the whole body joints of the wheel-legged robot according to the task acceleration, and the whole body dynamics controller transmits the force and torque instructions for the whole body joints to the joint motors corresponding to the active joints to control the motion of the whole body joints, thereby adjusting the attitude of the wheel-legged robot to make the wheel-legged robot to maintain a balanced state.

In some embodiments, the observation module generating the force and torque instruction for the whole body joints of the wheel-legged robot according to the task acceleration includes the following operations: the whole body dynamics controller determines an expected operation space task of the wheel-legged robot at the second time point, where the expected operation space task includes a task acceleration corresponding to at least one operation space task; the whole body dynamics controller performs spatial transformation on the expected operation space task to obtain an expected joint space task; and the whole body dynamics controller substitutes the joint space task into the whole body dynamics equation of the wheel-legged robot to obtain the force and torque instructions for the whole body joints.

In some embodiments, the expected operation space task includes the task acceleration at the second time point. The expected operation space task $\ddot{x}_{com}^d$ may be expressed as:

$$\ddot{x}_{com}^d = \begin{bmatrix} \ddot{x}_{t,stance}^d \\ \ddot{x}_{t,base}^d \\ \ddot{x}_{t,euler}^d \\ \ddot{x}_{t,swing}^d \\ \ddot{x}_{t,com}^d \end{bmatrix}$$

where $\ddot{x}_{t,stance}^d$ refers to a first acceleration corresponding to the support wheel task, $\ddot{x}_{t,base}^d$ refers to a second acceleration corresponding to the vertical torso task, $\ddot{x}_{t,euler}^d$ refers to a third acceleration corresponding to the torso attitude task, $\ddot{x}_{t,swing}^d$ refers to a fourth acceleration corresponding to the swing wheel task, and $\ddot{x}_{t,com}^d$ refers to a task acceleration corresponding to the mass center task. In some embodiments, the operation space tasks of the wheel-legged robots are different at different moments, that is, the values of some accelerations included in the expected operation space task may be 0.

In some embodiments, a relationship between the acceleration included in the expected operation space task and the joint space velocity and acceleration included in the joint space task is:

$$\ddot{x}_t = \dot{J}_t \dot{q} + J_t \ddot{q}$$

where $J_t$ represents a Jacobian matrix of the operation space task, and $\dot{J}_t$ represents a derivative of the number of Jacobian matrices of the operation space task.

According to the whole body dynamics equation $\begin{bmatrix} H & -S^T & -J_C^T \\ J_t & 0_{N_T \times N_J} & 0_{N_T \times N_C} \end{bmatrix} \begin{bmatrix} \ddot{q} \\ \tau \\ f \end{bmatrix} = \begin{bmatrix} -C \\ \ddot{x}_t - \dot{J}_t \dot{q} \end{bmatrix}$ and the expected joint space task $\dot{J}_t \dot{q} + J_t \ddot{q}$, $\begin{bmatrix} \ddot{q} \\ \tau \\ f \end{bmatrix}$ can be calculated, where $\tau$ represents the force and torque instructions for the whole body joints.

To improve the rationality of the force and torque instructions for the whole body joints, at least one constraint condition is added in the process of solving the whole body dynamics equation. The constraint condition includes, but not limited to, at least one of the following: a joint physical constraint and a friction constraint.

In some embodiments, the joint physical constraint is used to limit the amplitude of the force and torque instructions according to the characteristics of the joint motors respectively corresponding to the whole body joints of the wheel-legged robot. The joint physical constraint may be expressed as:

$$\tau_{lb} \le \tau \le \tau_{ub}$$

where $\tau$ represents a matrix including the force and torque instructions for the whole body joints, $\tau_{lb}$ represents a matrix including the minimum values of the force and torque instructions respectively corresponding to the active joints, and $\tau_{ub}$

represents a matrix including the maximum values of the force and torque instructions respectively corresponding to the active joints.

In some embodiments, the friction constraint refers to the contact force $f_i$ at the ith contact point satisfying a friction cone constraint. To reduce nonlinearity, a friction cone may be approximated as a friction pyramid, and a friction force inequality constraint may be expressed as:

$$\begin{bmatrix} -\mu_i \boldsymbol{n}_z^T \pm \boldsymbol{n}_x^T \\ -\mu_i \boldsymbol{n}_z^T \pm \boldsymbol{n}_y^T \\ -\boldsymbol{n}_z^T \\ \boldsymbol{n}_z^T \end{bmatrix} \boldsymbol{f}_i \leq \begin{bmatrix} 0 \\ 0 \\ -f_{z,lb} \\ f_{z,ub} \end{bmatrix}$$

where $\boldsymbol{n}_x$, $\boldsymbol{n}_y$ and $\boldsymbol{n}_z$ respectively represent a unit orthogonal basis along a contact surface in an operation space system, $\mu_i$ represents a friction coefficient, and $f_{i,zlb}$ and $f_{i,zub}$ respectively represent the minimum value and maximum value of a non-negative positive pressure perpendicular to the contact surface.

A process of solving the whole body dynamics equation will be introduced and described below. In some embodiments, this process may be completed through an optimizer: the whole body dynamics equation is expressed in an **AX** = **B** form of polynomial solving,

where $\boldsymbol{A} = \begin{bmatrix} \boldsymbol{H} & -\boldsymbol{S}^T & -\boldsymbol{J}_C^T \\ \boldsymbol{J}_t & \boldsymbol{0}_{N_T \times N_J} & \boldsymbol{0}_{N_T \times N_C} \end{bmatrix}$, $\boldsymbol{X} = \begin{bmatrix} \ddot{\boldsymbol{q}} \\ \boldsymbol{\tau} \\ \boldsymbol{f} \end{bmatrix}$, $\boldsymbol{B} = \begin{bmatrix} -\boldsymbol{C} \\ \ddot{\boldsymbol{x}}_t - \dot{\boldsymbol{J}}_t \dot{\boldsymbol{q}} \end{bmatrix}$, an objective function is constructed by using a quadratic programming optimizer, and the objective function may be expressed as: $\boldsymbol{J} = \min(\boldsymbol{AX} - \boldsymbol{B})^T \boldsymbol{Q}(\boldsymbol{AX} - \boldsymbol{B}) + \boldsymbol{X}^T \boldsymbol{R} \boldsymbol{X}$, where $\boldsymbol{Q}, \boldsymbol{R}$ is a weight matrix, and the minimum value of the objective function is calculated through the quadratic programming optimizer to obtain each variable in $\boldsymbol{X} = \begin{bmatrix} \ddot{\boldsymbol{q}} \\ \boldsymbol{\tau} \\ \boldsymbol{f} \end{bmatrix}$, thereby obtaining the force and torque instructions $\tau$ for the

whole body joints.

Through this method, the force and torque instructions respectively corresponding to the whole body joints can be independently determined. In a scenario where multiple real wheels of the wheel-legged robot do not overlap in the first direction, the control of at least one real wheel and at least one real first rotating joint can also be achieved.

Methods for determining each expected acceleration in the expected operation space task will be introduced and described below. The methods for determining each element in the expected operation space task are preset. In some embodiments, the expected acceleration is determined according to the actual acceleration and the reference acceleration.

1. Method for determining first acceleration $\ddot{\boldsymbol{x}}_{t,stance}^d$ corresponding to support wheel task

Since the support wheel rolls on the contact surface and does not slide relative to the contact surface, the expected acceleration $\ddot{\boldsymbol{x}}_{t,stance}^d$ of the support wheel is always equal to 0. The expected acceleration of the support wheel may be expressed as $\ddot{\boldsymbol{x}}_{t,stance}^d = \boldsymbol{0}_{N_C \times 1}$. If the wheel-legged robot works in a four-wheel mode, there are four support wheels, and each support wheel has a task in the x-direction. Assuming that the support wheels do not get off the ground, the height of the support wheels in the z-axis direction of the world coordinate system is constant, so the tasks of four support wheels in the z-axis direction are not considered temporarily. Assuming that the wheel-legged robot does not perform leftward and rightward turning motions or translation motions along the y-axis of the world coordinate system in the four-wheel mode, the tasks of the four support wheels in the y-axis direction are not considered temporarily.

If the wheel-legged robot works in a double-wheel balance mode, there are two support wheels and the other two moving wheels are swing wheels. The tasks of the support wheels are not considered temporarily. The tasks related to the two support wheels are already included in the "mass center task" introduced below. Moreover, the tasks of both swing wheels include two dimensions, i.e., the x-axis direction and the z-axis direction. If the leftward and rightward turning motion of the wheel-legged robot in the double-wheel balance mode and the translation motion of the wheel-legged robot along the y-axis direction are not considered, the tasks of the two swing wheels in the y-axis direction are not considered temporarily.

2. Method for determining second acceleration $\ddot{x}^d_{t,base}$ corresponding to vertical torso task

The camera in the wheel-legged robot captures the height change of the contact surface within the line of sight to obtain position information of the support wheels at multiple future moments. Through a planning method such as spline curve interpolation, an expression formula for the position information at multiple future moments is determined, and the vertical reference position $x^r_{t,base}$, velocity $\dot{x}^r_{t,base}$, and acceleration $\ddot{x}^r_{t,base}$ of the torso mechanism are determined according to this expression formula. According to the IMU sensors and the deflection angles (joint angles) and angular velocities of the mechanisms, the actual vertical position $x^a_{t,base}$ and velocity $\dot{x}^a_{t,base}$ of the torso mechanism through forward kinematics. A Proportional Derivative (PD) feedback controller corresponding to the vertical torso task is constructed to calculate the expected vertical acceleration of the torso, i.e., the second acceleration $\ddot{x}^d_{t,base}$.

$$\ddot{x}^d_{t,base} = \ddot{x}^r_{t,base} + k_{p,base}\left(x^r_{t,base} - x^a_{t,base}\right) + k_{d,base}\left(\dot{x}^r_{t,base} - \dot{x}^a_{t,base}\right)$$

3. Method for determining third acceleration $\ddot{x}^d_{t,euler}$ corresponding to attitude task

In some scenarios (such as going upstairs), the torso mechanism of the wheel-legged robot needs to be kept as vertical as possible, and the torso mechanism does not rotate, that is, Euler angle reference trajectories composed of the roll angle, pitch angle, and yaw angle of the torso mechanism are zero, i.e., $x^r_{t,euler}$, $\dot{x}^r_{t,euler}$, and $\ddot{x}^r_{t,euler}$. The wheel-legged robot calculates the actual Euler angle $x^a_{t,euler}$ and angular velocity $\dot{x}^a_{t,euler}$ according to a forward kinematics formula based on the observation results of the IMU sensors. Through the PD feedback controller corresponding to the torso attitude task, the expected attitude angular acceleration of the torso, i.e., the third acceleration $\ddot{x}^d_{t,euler}$ can be calculated.

$$\ddot{x}^d_{t,euler} = \ddot{x}^r_{t,euler} + k_{p,euler}\left(x^r_{t,euler} - x^a_{t,euler}\right) + k_{d,euler}\left(\dot{x}^r_{t,euler} - \dot{x}^a_{t,euler}\right)$$

4. Method for determining fourth acceleration $\ddot{x}^d_{t,swing}$ corresponding to swing wheel task

In a scenario in the double-wheel balance mode, such as in a scenario that the two swing wheels require to present specific attitudes and motions when two wheels travel on the ground, or there is a shifting process between the support wheel leg and the swinging wheel leg when two wheels step forward on the ground, or there is a shifting process between the support wheel leg and the swing wheel leg when stepping forward to go upstairs or downstairs, there is a corresponding fourth acceleration $\ddot{x}^d_{t,swing}$.

The reference positions $x^r_{t,swing}$, velocity $\dot{x}^r_{t,swing}$, and acceleration $\ddot{x}^r_{t,swing}$ of the swing wheel in the operation space are planned through spline curve interpolation. Based on information such as the observation results of the IMU sensors, the joint angles, and the angular velocity, the actual position $x^a_{t,swing}$ and velocity $\dot{x}^a_{t,swing}$ of the swing wheel are calculated according to forward kinematics. By constructing the PD feedback controller corresponding to the swing wheel task, the expected acceleration of the swing wheel, i.e., the third acceleration $\ddot{x}^d_{t,swing}$ can be calculated. The PD feedback controller calculates the third acceleration $\ddot{x}^d_{t,swing}$ through the following formula:

$$\ddot{x}^d_{t,swing} = \ddot{x}^r_{t,swing} + k_{p,swing}\left(x^r_{t,swing} - x^a_{t,swing}\right) + k_{d,swing}\left(\dot{x}^r_{t,swing} - \dot{x}^a_{t,swing}\right)$$

5. Method for determining task acceleration $\ddot{x}_{com}$ corresponding to mass center task

In some embodiments, the reference position $x^r_{t,com}$ and velocity $\dot{x}^r_{t,com}$ of the mass center along the forward direction are planned through a heuristic or model-based method. During the motion of the wheel-legged robot, the execution mass center of the wheel-legged robot not only needs to continuously move along the forward direction, but also needs to be within a range that the wheel-legged robot maintains a dynamic balance. Based on this, the method for determining the expected acceleration (i.e., task acceleration) of the mass center is designed.

Assuming that the mass of the wheel-legged robot is concentrated at the mass center of the wheel-legged robot and a center of a connecting line between at least two support wheels is a virtual contact point between the inverted pendulum related to the mass center and the contact surface, the mass center is connected to the virtual contact point to construct an inverted pendulum model of the mass center.

FIG. 12 is a schematic diagram of an inverted pendulum related to a mass center according to an exemplary embodiment of the present disclosure.

It shows a mass center 1210 of the wheel-legged robot, and a virtual contact point 1220. A dynamics equation related to the mass center is determined according to the inverted pendulum model related to the mass center:

$$\frac{d}{dx}\begin{bmatrix} \Delta x \\ \Delta \dot{x} \\ x_{com} \\ \dot{x}_{com} \end{bmatrix} = \begin{bmatrix} 0 & 1 & 0 & 0 \\ 0 & 0 & 0 & 0 \\ 0 & 0 & 0 & 0 \\ g/z_{com} & 0 & 0 & 1 \end{bmatrix}\begin{bmatrix} \Delta x \\ \Delta \dot{x} \\ x_{com} \\ \dot{x}_{com} \end{bmatrix} + \begin{bmatrix} 0 \\ 0 \\ 1 \\ 0 \end{bmatrix}\ddot{x}_{com}$$

A feedback gain matrix **K** is determined by using a linear quadratic regulator. An input of the state equation may be obtained based on an LQR controller: $\ddot{x}_{com} = \boldsymbol{K}(\begin{bmatrix} \Delta x^r \\ \Delta \dot{x}^r \\ x_{com}^r \\ \dot{x}_{com}^r \end{bmatrix} - \begin{bmatrix} \Delta x^a \\ \Delta \dot{x}^a \\ x_{com}^a \\ \dot{x}_{com}^a \end{bmatrix})$ , where $\begin{bmatrix} \Delta x^a \\ \Delta \dot{x}^a \\ x_{com}^a \\ \dot{x}_{com}^a \end{bmatrix}$ represents an actual state

variable group, and $\begin{bmatrix} \Delta x^r \\ \Delta \dot{x}^r \\ x_{com}^r \\ \dot{x}_{com}^r \end{bmatrix}$ represents an actual state variable group. For other parameters, please refer to the above introduction, which will not be repeated here.

In some embodiments, the balance control method provided in the present disclosure is continuously executed during the operation of the wheel-legged robot. That is, the robust controller continuously performs the process of acquiring a state parameter value at a current moment, determining dynamics model parameters according to the state parameter value at the current moment, establishing a sliding surface, and determining rotation torques of n rotating joints according to the dynamics model parameters and the sliding surface.

In other embodiments, in a case that the IMU sensors detect a fierce change in the deflection angles of certain links (such as first links) in the wheel-legged robot, the robust controller executes the balance control method starting from operation 1110. For example, in a case the IMU sensor detects that the change in the deflection angle of the corresponding first link is greater than an angle threshold, the IMU sensor transmits detected state parameters to the robust controller to start a balance adjustment process. In some embodiments, the angle threshold is preset.

In some other embodiments, in a case that the moving wheel does not receive a control signal from the controller and the motor encoder detects the movement of the moving wheel, the robust controller starts to execute the balance control method starting from operation 1110.

By using this method to intermittently perform balance control on the wheel-legged robot through the robust controller, without significantly affecting the balance control effect, it helps to reduce the energy consumption of the wheel-legged robot, improve the ability of the wheel-legged robot to resist external interference, and also improve the robustness of balance control.

A process of the balance control method will be introduced and described below through an example. In some embodiments, in a case that the IMU sensor detects that the change in the deflection angle of the corresponding first link is greater than the angle threshold, indicating that under external disturbances, the swing of the wheel-legged robot changes greatly and affects the balance of the wheel-legged robot, the robust controller starts to perform the balance control process.

Operation A10: The robust controller acquires a state parameter value at a first time point $t_i$. The state parameter value includes: deflection angles $q_1, q_2, ..., q_n$ of the n links, an angular velocity $\dot{\varphi}$ of the moving wheel, and angular velocities $\dot{q}_1, \dot{q}_2, ..., \dot{q}_n$ of the n links.

Operation A20: The robot controller substitutes the state parameter value at the first time point into a dynamics equation to determine an inertia matrix, a bias force matrix, and a gravity matrix at the first time point. This operation is completed mainly by using the following formula:

$$\begin{pmatrix} m_{\varphi\varphi} & m_{\varphi q} \\ m_{q\varphi} & m_{qq} \end{pmatrix} \begin{pmatrix} \ddot{\varphi} \\ \ddot{q} \end{pmatrix} + \begin{pmatrix} C_\varphi(\varphi,\dot{\varphi},q,\dot{q}) \\ C_q(\varphi,\dot{\varphi},q,\dot{q}) \end{pmatrix} + \begin{pmatrix} 0 \\ G_q(q) \end{pmatrix} = \begin{pmatrix} -1 & 0 \dots 0 \\ & I_n \end{pmatrix} \tau$$

The robust controller respectively processes a product of an inverse matrix of the inertia matrix and the bias force matrix and a product of the inverse matrix of the inertia matrix and the gravity matrix by using a selection matrix to obtain the offset parameter matrix. The offset parameter matrix is calculated mainly by using the following formula:

$$\begin{pmatrix} f_\varphi(\varphi,\dot{\varphi},q,\dot{q}) \\ f_q(\varphi,\dot{\varphi},q,\dot{q}) \end{pmatrix} = \left[ -M^{-1}(q) \begin{pmatrix} C_\varphi(\varphi,\dot{\varphi},q,\dot{q}) \\ C_q(\varphi,\dot{\varphi},q,\dot{q}) \end{pmatrix} - M^{-1}(q) \begin{pmatrix} 0 \\ G_q(q) \end{pmatrix} \right]$$

The robust controller processes the inverse matrix of the inertia matrix by using the selection matrix to obtain a proportion parameter matrix. The proportion parameter matrix is calculated mainly by using the following formula:

$$\begin{pmatrix} g_\varphi(\varphi,\dot{\varphi},q,\dot{q}) \\ g_q(\varphi,\dot{\varphi},q,\dot{q}) \end{pmatrix} = M^{-1}(q) \begin{pmatrix} -1 & 0 \dots 0 \\ & I_n \end{pmatrix} S^T$$

Operation A30: The robust controller determines sliding mode parameters respectively required for determining n sliding surfaces from predicted parameter sets.

Operation A40: The robust controller respectively establishes the n sliding surfaces: **s = Øq + $\Lambda\dot{\varphi}$ + $\dot{q}$.**

Operation A50: Calculate rotation torques of the n rotating joints according to the sliding surfaces and the dynamics model parameters. In the process of calculating the rotation torques of the n rotating joints, the formulas used are mainly formula 3 and formula 4 described above. The two formulas are specifically formula 3: **$\dot{s}$ = Ø$\dot{q}$ + $\Lambda\ddot{\varphi}$ + $\ddot{q}$ = Ø$\dot{q}$ + $\Lambda f_\varphi$ + $\Lambda g_\varphi\tau$ + $f_q$ + $g_q\tau$**, and formula 4: **$\tau$ = ($\Lambda g_\varphi$ + $g_q$)$^{-1}$(-Ø$\dot{q}$ - $\Lambda f_\varphi$ - f - $k_\eta$sgn(s)).**

In some embodiments, after determining the rotation torques of the n rotating joints, the robust controller may further first determine whether to continuously execute the balance adjustment process; for example, the robust controller determines whether the rotation torques of the n rotating joints are greater than a first threshold; if the rotation torques of the n rotating joints are greater than the first threshold, the robust controller continuously executes operation A60; and if the rotation torques of the n rotating joints are less than the first threshold, the robust controller does not execute operation A60 and the balance control ends.

Operation A60: The wheel-legged robot controls rotating motors of the n rotating joints according to the rotation torques of the n rotating joints at a second time point $t_{i+1}$ to adjust an included angle between a torso link and a leg link. Operation A10 to operation A60 are repeated before the balance control process ends. The formulas in this example are formulas in the above embodiments. For the explanations of the parameters in these formulas, please refer to the above embodiments, which will not be repeated here.

By abstracting the wheel-legged robot into an n-level inverted pendulum model, the joint motors of multiple rotating joints can be adjusted in the balance adjustment process, thereby enriching the attitudes of multiple links in the balance adjustment process, helping to quickly reach a balanced state, and helping to improve the robustness of the balance control method.

A process of the balance control method will be introduced and described below through another example.

In a balance control process, operation B10: the robust controller acquires a state parameter value at a first time point $t_i$. The state parameter value includes: deflection angles $q_1$, $q_2$, ..., $q_n$ of the n links, an angular velocity $\dot{\varphi}$ of the moving wheel, and angular velocities $\dot{q}_1$, $\dot{q}_2$, $\cdots$, $\dot{q}_n$ of the n links.

Operation B20: The robot controller substitutes the state parameter value at the first time point into a dynamics equation to determine an inertia matrix, a bias force matrix, and a gravity matrix at the first time point; and the robust controller respectively processes a product of an inverse matrix of the inertia matrix and the bias force matrix and a product of the inverse matrix of the inertia matrix and the gravity matrix by using a selection matrix to obtain the offset parameter matrix. For the specific content about this process, please refer to the above embodiments, which will not be repeated here.

Operation B30: The robust controller determines sliding mode parameters respectively required for determining n sliding surfaces from predicted parameter sets.

Operation B40: The robust controller establishes the n sliding surfaces according to the sliding mode parameters and the state parameter value: **s = Øq + $\Lambda\dot{\varphi}$ + $\dot{q}$.**

Operation B50: Calculate rotation torques of the n rotating joints according to the sliding surfaces and the dynamics model parameters. In some embodiments, after determining the rotation torques of the n rotating joints, the robust controller determines whether the rotation torques of the n rotating joints are greater than a first threshold; if the rotation torques of the n rotating joints are greater than the first threshold, the robust controller continuously executes operation B50; and if the rotation torques of the n rotating joints are less than the first threshold, the robust controller does not execute operation B50 and the balance control ends.

Operation B60: The robust controller transmits the rotation torques of the n rotating joints to an observation module, and the observation module determines a task acceleration according to the rotation torques of the n rotating joints. The observation module transmits the task acceleration to a whole body dynamics controller, the whole body dynamics controller determines force and torque instructions of the whole body joints according to the task acceleration, and the whole body dynamics controller transmits the corresponding force and torque instructions to joint motors.

Operation B70: The wheel-legged robot controls the motion of the motors respectively corresponding to the whole body joints according to the force and torque instructions at a second time point $t_{i+1}$ to adjust the attitude of the wheel-legged robot. Operation B10 to operation B70 are repeated before the balance control process ends. The formulas used in this example are formulas in the above embodiments. For the explanations of the parameters in these formulas, please refer to the above embodiments, which will not be repeated here.

By abstracting the wheel-legged robot into an n-level inverted pendulum model, calculating the rotation torques of the n rotating joints, and determining the task acceleration of the wheel-legged robot according to the rotation torques of the n rotating joints, the input of the whole body dynamics controller in the balance control process is obtained, so that the whole body dynamics controller can calculate the force and torque instructions for the whole body joints, and various mechanisms in the wheel-legged robot can participate in the balance control process, thereby further enriching the attitudes of the wheel-legged robot in the balance control process, and helping to improve the robustness of the balance control method.

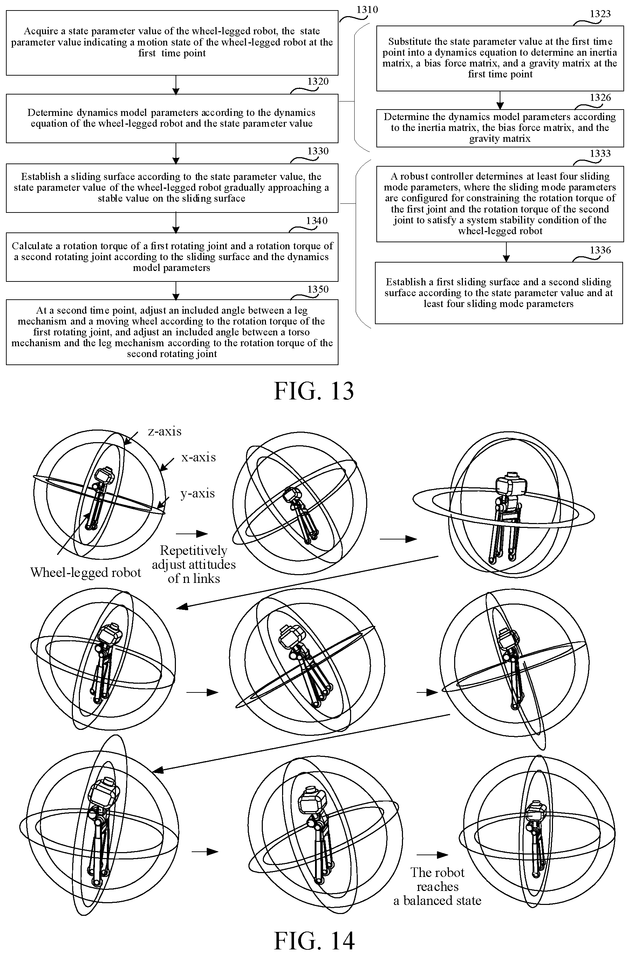

The balance control method will be introduced and described below by taking n being equal to 2 as an example. From FIG. 9, it can be seen that in a case that n is equal to 2, the n-level inverted pendulum model includes a moving wheel, two links, and two rotating joints. In some embodiments, the two links refer to a leg mechanism and a torso mechanism of the wheel-legged robot. If the wheel-legged robot is provided with multiple moving wheels, first moving wheels of the multiple moving wheels in contact with the contact surface overlap in the y-axis direction of the world coordinate system. Leg mechanisms connected to at least one first moving wheel overlap in the y-axis direction. The leg mechanism is connected to the moving wheel through a first rotating joint. The torso mechanism is connected to the leg mechanism through a second rotating joint. Referring to FIG. 13, the balance control method includes the following operations:

Operation 1310: Acquire a state parameter value of the wheel-legged robot, where the state parameter value indicates a motion state of the wheel-legged robot at the first time point.

In some embodiments, the state parameter value at the first time point includes at least one of the following: a deflection angle $\alpha$ of the leg mechanism, a deflection angle $\beta$ of the torso mechanism, an angular velocity $\dot{\varphi}$ of the moving wheel, an angular velocity $\dot{\alpha}$ of the leg mechanism, and an angular velocity $\dot{\beta}$ of the torso mechanism. The state parameter value may be represented by using a symbol $\xi$. The state parameter value $\xi$ may be expressed as $\xi = [\alpha, \beta, \dot{\varphi}, \dot{\alpha}, \dot{\beta}]^T$. Each physical quantity included in the state parameter value is obtained through observation in the world coordinate system. The deflection angle $\alpha$ of the leg mechanism refers to the deflection angle of the leg mechanism relative to the z-axis in the world coordinate system. The deflection angle $\beta$ of the torso mechanism refers to the deflection angle of the torso mechanism relative to the z-axis in the world coordinate system. The angular velocity $\dot{\varphi}$ of the moving wheel refers to the rotation speed of the moving wheel in the anticlockwise (or clockwise) direction on the x-axis in the world coordinate system. The angular velocity $\dot{\alpha}$ of the leg mechanism indicates the changing speed of the deflection angle of the leg mechanism. The angular velocity $\dot{\beta}$ of the torso mechanism is configured for charactering the changing speed of the deflection angle of the torso mechanism.

Each physical quantity in the state parameter value may also be determined through the relative positions of the mechanisms of the wheel-legged robot. For example, the deflection angle $\alpha$ of the leg mechanism refers to the deflection angle of the leg mechanism relative to the z-axis in the world coordinate system. The deflection angle $\beta'$ of the torso mechanism refers to the deflection angle of the torso mechanism relative to the leg mechanism, that is, $\beta = \alpha + \beta'$ (positive directions of $\beta'$ and $\beta$ are the same). The coordinate system configured for observing each physical quantity is determined according to the actual needs, which is not limited here.

In some embodiments, a computer device acquiring a state parameter value of the wheel-legged robot at a first time point includes: determining the deflection angle $\alpha$ of the leg mechanism and the deflection angle $\beta$ of the torso mechanism through an IMU sensor and a motor encoder; and determining the angular velocity $\dot{\varphi}$ of the moving wheel and the angular velocity $\dot{\alpha}$ of the leg mechanism, and the angular velocity $\dot{\beta}$ of the torso mechanism through the motor encoder.

Operation 1320: Determine dynamics model parameters according to a dynamics equation of the wheel-legged robot and the state parameter value.

Operation 1320 may include the following sub-operations: Sub-operation 1323: The robust controller substitutes the state parameter value at the first time point into the dynamics equation to determine an inertia matrix, a bias force matrix, and a gravity matrix at the first time point. The inertia matrix indicates a mass and a moment of inertia of each joint rigid body that composes the wheel-legged robot at the first time point. The bias force matrix indicates a bias force of the wheel-legged robot at the first time point. The gravity matrix indicates a gravity of the wheel-legged robot at the first time point.

Sub-operation 1326: Determine the dynamics model parameters according to the inertia matrix, the bias force matrix, and the gravity matrix.

In a case that n is equal to 2, after abstracting the wheel-legged robot into a double inverted pendulum model, a dynamics equation used in the balance control process is derived based on an Euler-Lagrange equation. The dynamics equation may be expressed as:

$$M(\alpha,\beta)\begin{bmatrix}\ddot{\varphi}\\\ddot{\alpha}\\\ddot{\beta}\end{bmatrix} + C(\alpha,\beta,\dot{\alpha},\dot{\beta}) + G(\alpha,\beta) = \begin{bmatrix}\tau_1\\-\tau_1-\tau_2\\\tau_2\end{bmatrix}$$

In some embodiments, the dynamics model parameters are derived and determined according to the double inverted pendulum model configured for balance control. The dynamics model parameters include a proportion parameter matrix and an offset parameter matrix.

In the design process of the robust controller, partial linearization is performed on dynamics equation

$$M(\alpha,\beta)\begin{bmatrix}\ddot{\varphi}\\\ddot{\alpha}\\\ddot{\beta}\end{bmatrix} + C(\alpha,\beta,\dot{\alpha},\dot{\beta}) + G(\alpha,\beta) = \begin{bmatrix}\tau_1\\-\tau_1-\tau_2\\\tau_2\end{bmatrix}$$

to obtain formula a:

$$\begin{bmatrix}\ddot{\varphi}\\\ddot{\alpha}\\\ddot{\beta}\end{bmatrix} = -M^{-1}(\alpha,\beta)C(\alpha,\beta,\dot{\alpha},\dot{\beta})-M^{-1}(\alpha,\beta)G(\alpha,\beta)+M^{-1}(\alpha,\beta)\begin{bmatrix}\tau_1\\-\tau_1-\tau_2\\\tau_2\end{bmatrix}$$

where $M^{-1}(\alpha,\beta)$ is an inverse matrix of the inertia matrix, $M^{-1}(\alpha,\beta) * M(\alpha,\beta) = E,$ and $E$ is a unit matrix. For physical meanings of other parameters in the equation, please refer to the above embodiment, which will not be repeated here.

Formula a is processed, so that the rotation torque $\tau_1$ of the first rotating joint and the rotation torque $\tau_2$ of the second rotating joint are unified in formula a. Formula a is processed by using a selection matrix to obtain formula b:

$$\begin{bmatrix}\ddot{\varphi}\\\ddot{\alpha}\\\ddot{\beta}\end{bmatrix} = \begin{bmatrix}f_1(\xi)\\f_2(\xi)\\f_3(\xi)\end{bmatrix} + \begin{bmatrix}g_{11}(\xi) & g_{12}(\xi)\\g_{21}(\xi) & g_{22}(\xi)\\g_{31}(\xi) & g_{32}(\xi)\end{bmatrix}\begin{bmatrix}\tau_1\\\tau_2\end{bmatrix}$$

where $\begin{bmatrix}f_1(\xi)\\f_2(\xi)\\f_3(\xi)\end{bmatrix} = \begin{bmatrix}-M^{-1}(\alpha,\beta)C(\alpha,\beta,\dot{\alpha},\dot{\beta})-M^{-1}(\alpha,\beta)G(\alpha,\beta)\end{bmatrix}$, $\begin{bmatrix}f_1(\xi)\\f_2(\xi)\\f_3(\xi)\end{bmatrix}$ is an offset parameter

matrix f[], $\begin{bmatrix}g_{11}(\xi) & g_{12}(\xi)\\g_{21}(\xi) & g_{22}(\xi)\\g_{31}(\xi) & g_{32}(\xi)\end{bmatrix} = M^{-1}(\alpha,\beta) * S^T$, $\begin{bmatrix}g_{11}(\xi) & g_{12}(\xi)\\g_{21}(\xi) & g_{22}(\xi)\\g_{31}(\xi) & g_{32}(\xi)\end{bmatrix}$ is a proportion parameter matrix g

[], $S^T$ is a transpose matrix of matrix S, $S^T$ matrix is a 3*2 selection matrix. For example, $S^T$ matrix is specifically $\begin{bmatrix}-1 & 0\\-1 & 0\\0 & 1\end{bmatrix}$.

Formula b may be designed in advance after abstracting the wheel-legged robot into a double inverted pendulum model. In the process of the balance control method, after acquiring the state parameter value at the first time point, the robust controller substitutes the state parameter value at the first time point into the dynamics equation to determine an inertia matrix, a bias force matrix, and a gravity matrix at the first time point, and determine the dynamics model parameters according to the inertia matrix, the bias force matrix, and the gravity matrix.

In some embodiments, sub-operation 1326 may be implemented through the following operations: the robust controller respectively processes a product of an inverse matrix of the inertia matrix and the bias force matrix and a product of the inverse matrix of the inertia matrix and the gravity matrix by using a selection matrix to obtain the offset parameter matrix, where the selection matrix is configured for extracting the rotation torque of the first rotating joint and the rotation torque of the second rotating joint from the dynamics equation; and the robust controller processes the inverse matrix of the inertia matrix by using the selection matrix to obtain a proportion parameter matrix. For the specific content about this process, please refer to the above embodiments, which will not be repeated here.

That is to say, in the balance control process, the robust controller can calculate the proportion parameter matrix and the dynamics model parameter matrix according to formula b and the various equations in (5) of the content in the description corresponding FIG. 9.

Operation 1330: Establish a sliding surface according to the state parameter value, where the state parameter value of the wheel-legged robot gradually approaches 0 on the sliding surface.

In a case that n is equal to 2, it is necessary to determine the rotation torque of the first rotating joint and the rotation torque of the second rotating joint, and the robust controller needs to establish two sliding surfaces. The two sliding surfaces include: 1. a sliding surface of the first rotating joint, that is, the state parameter value related to the first rotating joint gradually approaching 0 on this sliding surface; and 2. a sliding surface of the second rotating joint, that is, the state parameter value related to the second rotating joint gradually approaching 0 on this sliding surface.

In some embodiments, the first sliding surface is different from the second sliding surface. The purpose of setting the first sliding surface and the second sliding surface is to calculate the rotation torque of the first rotating joint and the rotation torque of the second rotating joint. The first sliding surface and the second sliding surface jointly participate in the calculation process of the rotation torque of the first rotating joint and the rotation torque of the second rotating joint. The definition of the first sliding surface may not be limited to the sliding surface corresponding to the first rotating joint. Similarly, the definition of the second sliding surface may not be limited to the sliding surface corresponding to the second rotating joint. The first sliding surface and the second sliding surface may be defined according to the actual needs, which are not limited in the present disclosure.

From the introduction of the n-level inverted pendulum model above, it can be seen that to ensure the calculation of a certain rotation torque, establishing a sliding surface requires at least three state parameters and at least two sliding mode parameters in the state parameter value. The state parameter value is written as $\xi = [\alpha, \beta, \dot{\varphi}, \dot{\alpha}, \dot{\beta}]^T$, and $\alpha, \beta, \dot{\varphi}, \dot{\alpha}, \dot{\beta}$ are state parameters.

In some embodiment, operation 1330 includes sub-operation 1333: The robust controller determines at least four sliding mode parameters, where the sliding mode parameters are configured for constraining the rotation torque of the first rotating joint and the rotation torque of the second rotating joint to satisfy the system stability condition of the wheel-legged robot.

In some embodiments, establishing different sliding surfaces require respectively using different state parameters and different sliding mode parameters. Exemplarily, establishing the first sliding surface at least requires the deflection angle of the leg mechanism, the angular velocity of the moving wheel, and the angular velocity of the leg mechanism in the state parameter value; and establishing the second sliding surface at least requires the deflection angle of the torso mechanism, the angular velocity of the moving wheel, and the angular velocity of the torso mechanism in the state parameter value at the first time point. In this case, the at least two sliding mode parameters included in the first sliding surface are respectively a sliding mode parameter corresponding to the deflection angle of the leg mechanism and a sliding mode parameter corresponding to the angular velocity of the moving wheel. The at least two sliding mode parameters included in the second sliding surface are respectively a sliding mode parameter corresponding to the deflection angle of the torso mechanism and a sliding mode parameter corresponding to the angular velocity of the moving wheel.

In some embodiments, operation 1330 further includes sub-operation 1336: The robust controller establishes a first sliding surface and a second sliding surface according to the state parameter value and at least four sliding mode parameters.

In some embodiments, the robust controller establishes a first sliding surface according to a first sliding mode parameter, a second sliding mode parameter, the deflection angle of the leg mechanism, the angular velocity of the moving wheel, and the angular velocity of the leg mechanism; and establishes a second sliding surface according to a third sliding mode parameter, a fourth sliding mode parameter, the deflection angle of the torso mechanism, the angular velocity of the torso mechanism, and the angular acceleration of the leg mechanism.

Exemplarily, the robust controller processes the deflection angle of the leg mechanism through the first sliding mode parameter to obtain a processing result of the leg mechanism; and processes the angular velocity of the moving wheel through the second sliding mode parameter to obtain a processing result of the moving wheel. The robust controller determines the first sliding surface according to the processing result of the leg mechanism, the processing result of the moving wheel, and the angular velocity of the leg mechanism. In some embodiments, the first sliding surface is proportional to the processing result of the leg mechanism, the first sliding surface is proportional to the processing result of the moving wheel, and the first sliding surface is proportional to the angular velocity of the leg mechanism.

For example, the robust controller adds up the processing result of the leg mechanism, the processing result of the moving wheel, and the angular velocity of the leg mechanism to obtain the first sliding surface.

Exemplarily, the robust controller processes the deflection angle of the torso mechanism through the third sliding mode parameter to obtain a processing result of the torso mechanism; and processes the angular velocity of the moving wheel through the fourth sliding mode parameter to obtain a processing result of the moving wheel. The robust controller determines the second sliding surface according to the processing result of the torso mechanism, the processing result of the moving wheel, and the angular velocity of the torso mechanism. In some embodiments, the second sliding surface is proportional to the processing result of the torso mechanism, the second sliding surface is proportional to the processing result of the moving wheel, and the second sliding surface is proportional to the angular velocity of the leg mechanism.

For example, the robust controller adds up the processing result of the torso mechanism, the processing result of the moving wheel, and the angular velocity of the torso mechanism to obtain the second sliding surface.

In some embodiments, the robust controller establishes the first sliding surface $s_1$ and the second sliding surface $s_2$ according to the following two formulas in the balance control process:

$$s_1 = \lambda_1 \xi_1 + \lambda_2 \xi_3 + \xi_4$$

$$s_2 = \lambda_3 \xi_2 + \lambda_4 \xi_3 + \xi_5$$

where $\lambda_1$ represents the first sliding mode parameter, $\lambda_2$ represents the second sliding mode parameter, $\lambda_3$ represents the third sliding mode parameter, $\lambda_4$ represents the fourth sliding mode parameter, $\xi_1$ represents a first element $\alpha$ in the state parameter value $\xi = [\alpha, \beta, \dot{\varphi}, \dot{\alpha}, \dot{\beta}]^T$, $\xi_2$ represents a second element $\beta$ in the state parameter value $\xi = [\alpha, \beta, \dot{\varphi}, \dot{\alpha}, \dot{\beta}]^T$, $\xi_3$ represents a third element $\dot{\varphi}$ in the state parameter value $\xi = [\alpha, \beta, \dot{\varphi}, \dot{\alpha}, \dot{\beta}]^T$, and $\xi_4$ represents a fourth element $\dot{\alpha}$ in the state parameter value $\xi = [\alpha, \beta, \dot{\varphi}, \dot{\alpha}, \dot{\beta}]^T$, and $\zeta_5$ represents a fifth element $\dot{\beta}$ in the state parameter value $\xi = [\alpha, \beta, \dot{\varphi}, \dot{\alpha}, \dot{\beta}]^T$.

By establishing the first sliding surface and the second sliding surface in this way, and controlling the number of the sliding mode parameters in the first sliding surface and the second sliding surface, the rotation torque of the first rotating joint and the rotation torque of the second rotating joint that satisfy the system stability principle can be determined at small computation overhead, thereby helping to improve the speed of determining the rotation torque and achieve the balance control of the robot.

Operation 1340: Calculate a rotation torque of the first rotating joint and a rotation torque of the second rotating joint according to the sliding surfaces and the dynamics model parameters.

After determining the first sliding surface and the second sliding surface, the robust controller calculates a first-order derivative formula of the first sliding surface $s_1$ with respect to time and a first-order derivative formula of the second sliding surface $s_2$ with respect to time:

$$\dot{s}_1 = \lambda_1 \dot{\alpha} + \lambda_2 f_1 + f_2 + (\lambda_2 g_{11} + g_{21})\tau_1 + (\lambda_2 g_{12} + g_{22})\tau_2$$

$$\dot{s}_2 = \lambda_3 \dot{\beta} + \lambda_4 f_1 + f_3 + (\lambda_4 g_{11} + g_{31})\tau_1 + (\lambda_4 g_{12} + g_{32})\tau_2$$

where $\dot{s}_1$ represents a first-order derivative of the first sliding surface $s_1$ with respect to time, $\dot{s}_2$ represents a first-order derivative of the second sliding surface $s_2$ with respect to time, $f_k$ (k ∈ (1, 2, 3)) is an element in the offset parameter matrix f [] in formula 2 above, and $g_{mn}$ (m ∈ (1, 2, 3), n E (1, 2, 3)) is an element in the proportion parameter matrix g[] in formula 2 above.

The first-order derivative formula of the first sliding surface $s_1$ with respect to time and the first-order derivative formula of the second sliding surface $s_2$ with respect to time are sorted into a matrix form to obtain formula c:

$$\begin{pmatrix} \dot{s}_1 \\ \dot{s}_2 \end{pmatrix} = \begin{pmatrix} \lambda_1 \dot{\alpha} + \lambda_2 f_1 + f_2 \\ \lambda_3 \dot{\beta} + \lambda_4 f_1 + f_3 \end{pmatrix} + \begin{pmatrix} (\lambda_2 g_{11} + g_{21}) & (\lambda_2 g_{12} + g_{22}) \\ (\lambda_4 g_{11} + g_{31}) & (\lambda_4 g_{12} + g_{32}) \end{pmatrix} \begin{pmatrix} \tau_1 \\ \tau_2 \end{pmatrix}$$

Transposition processing is performed on formula c to obtain formula d:

$$\begin{pmatrix} \tau_1 \\ \tau_2 \end{pmatrix} = g_s^{-1} \left( -f_s - \eta \begin{pmatrix} sgn(s_1) \\ sgn(s_2) \end{pmatrix} \right)$$

where $f_s = \begin{pmatrix} \lambda_1\dot{\alpha} + \lambda_2 f_1 + f_2 \\ \lambda_3\dot{\beta} + \lambda_4 f_1 + f_3 \end{pmatrix}$ , $g_s = \begin{pmatrix} (\lambda_2 g_{11} + g_{21}) & (\lambda_2 g_{12} + g_{22}) \\ (\lambda_4 g_{11} + g_{31}) & (\lambda_4 g_{12} + g_{32}) \end{pmatrix}$ , $g_s^{-1}$ is an inverse matrix of

$g_s$, and **s gn()** is a symbol function, $\eta \begin{pmatrix} sgn(s_1) \\ sgn(s_2) \end{pmatrix} = \begin{pmatrix} \dot{s}_1 \\ \dot{s}_2 \end{pmatrix}$ .

Formula d may be further written as formula e:

$$\begin{pmatrix} s_1\dot{s}_1 \\ s_2\dot{s}_2 \end{pmatrix} = -\eta \begin{pmatrix} |s_1| \\ |s_2| \end{pmatrix}$$

That is, in a case that n of the n-level inverted pendulum model is equal to 2, formula 4 above is implemented as formula d, and formula 5 is implemented as formula e. In the balance control method based on the double inverted pendulum model, the calculation process of the rotation torque of the first rotating joint and the rotation torque of the second rotating joint requires using formula d and formula e.

In some embodiments, in the process of calculating the rotation torque, the robust controller needs to consider the system stability condition. For the method of satisfying the system stability condition in the balance control process of the double inverted pendulum model, please refer to the following embodiments.

Operation 1350: At a second time point, adjust an included angle between the leg mechanism and the moving wheel according to the rotation torque of the first rotating joint, and adjust an included angle between the torso mechanism and the leg mechanism according to the rotation torque of the second rotating joint.

In an implementation, the robust controller transmits the rotation torque of the first rotating joint and the rotation torque of the second rotating joint to a joint motor of the first rotating joint and a joint motor of the second rotating joint. That is, operation 1350 is implemented as: The robust controller adjusts an included angle between the leg mechanism and the moving wheel according to the rotation torque of the first rotating joint through the rotating motor of the first rotating joint; and the robust controller adjusts an included angle between the torso mechanism and the leg mechanism according to the rotation torque of the second rotating joint through the rotating motor of the second rotating joint.

In another implementation, after determining the rotation torque of the first rotating joint and the rotation torque of the second rotating joint, the robust controller transmits the rotation torque of the first rotating joint and the rotation torque of the second rotating joint to an observation module; the observation module calculates an angular acceleration at the first time point according to the rotation torque of the first rotating joint, the rotation torque of the second rotating joint, and the dynamics equation, and calculates a task acceleration of the wheel-legged robot according to the angular acceleration at the first time point; the observation module transmits the task acceleration to the whole body dynamics controller; the whole body dynamics controller determines force and torque instructions for the whole body joints of the wheel-legged robot according to the task acceleration; the whole body dynamics controller controls the joint motor of the first rotating joint to adjust the included angle between the leg mechanism and the moving wheel according to the force and torque instructions for the first rotating joint in the force and torque instructions for the whole body joints; and the whole body dynamics controller controls the joint motor of the second rotating joint to adjust the included angle between the torso mechanism and the leg mechanism based on the force and torque instructions for the second rotating joint in the force and torque instructions for the whole body joints.

In some embodiments, the whole body dynamics controller may also control the motion of other joints except for the first rotating joint and the second rotating joints in the wheel-legged robot according to the force and torque instructions for the whole body joints, so that more active joints can participate in the balance control process, thereby enriching the attitudes of the wheel-legged robot in the balance control process.

For the specific introduction to the content about this, please refer to the relevant content in the n-level inverted pendulum model described above, which will not be repeated here.

To sum up, by abstracting the wheel-legged robot into a double inverted pendulum model, in the balance control process, the included angle between the moving wheel and the leg mechanism can be adjusted, and the included angle between the torso mechanism and the leg mechanism can be adaptively adjusted, thereby enriching the attitudes of the robot in the balance adjustment process, making the attitude of the robot changes more flexibly, helping to quickly adjust the robot to a balanced state, improving the ability of the robot to restore to a balanced state under different disturbance forces, and improving the robustness of the balance control process of the robot.

A process of satisfying the system stability criterion in the calculation of the rotation torque of the first rotating joint and the rotation torque of the second rotating joint will be introduced and described below through an embodiment.

According to the definition and property of the sliding surface, the state parameters on the sliding surface satisfy:

$$s_1 = \lambda_1\xi_1 + \lambda_2\xi_3 + \xi_4 = 0$$

$$s_2 = \lambda_3\xi_2 + \lambda_4\xi_3 + \xi_5 = 0$$

Through the above two formulas, $\xi_4$ and $\zeta_5$ may be reversely expressed as:

$$\xi_4 = -\lambda_1\xi_1 - \lambda_2\xi_3$$

$$\xi_5 = -\lambda_3\xi_2 - \lambda_4\xi_3$$

So, a first-order derivative $\dot{\xi}_4$ of $\xi_4$ with respect to time and first-order derivative $\dot{\zeta}_5$ of $\xi_5$ with respect to time may be expressed as:

$$\dot{\xi}_4 = -\lambda_1\dot{\xi}_1 - \lambda_2\dot{\xi}_3 = -\lambda_1\xi_4 - \lambda_2\dot{\xi}_3$$

$$\dot{\xi}_5 = -\lambda_3\dot{\xi}_2 - \lambda_4\dot{\xi}_3 = -\lambda_3\xi_5 - \lambda_4\dot{\xi}_3$$

Since $\xi_4$ represents $\dot{\alpha}$ , $\xi_1$ represents $\alpha$ , $\xi_5$ represents $\dot{\beta}$ , and $\xi_2$ represents $\beta$,$\xi_1$ and $\xi_2$ may be expressed through the following formulas:

$$\dot{\xi}_1 = \xi_4 = -\lambda_1\xi_1 - \lambda_2\xi_3$$

$$\dot{\xi}_2 = \xi_5 = -\lambda_3\xi_2 - \lambda_4\xi_3$$

$$\dot{\xi}_2 = \xi_5 = -\lambda_3\xi_2 - \lambda_4\xi_3$$

Reviewing the dynamics equation of the double inverted pendulum model in a polynomial form described above:

$$m_{\varphi\varphi}\ddot{\varphi} + m_{\varphi\alpha}\ddot{\alpha} + m_{\varphi\beta}\ddot{\beta} + c_\varphi = \tau_1$$

$$m_{\varphi\alpha}\ddot{\varphi} + m_{\alpha\alpha}\ddot{\alpha} + m_{\alpha\beta}\ddot{\beta} + c_\alpha + g_\alpha = -\tau_1 - \tau_2$$

$$m_{\varphi\beta}\ddot{\varphi} + m_{\alpha\beta}\ddot{\alpha} + m_{\beta\beta}\ddot{\beta} + c_\beta + g_\beta = \tau_2$$

the three formulas included in the dynamics equation in the polynomial form are added up to obtain formula f:

$$\left(m_{\varphi\varphi} + m_{\varphi\alpha} + m_{\varphi\beta}\right)\dot{\xi}_3 + \left(m_{\varphi\alpha} + m_{\alpha\alpha} + m_{\alpha\beta}\right)\dot{\xi}_4 + \left(m_{\varphi\beta} + m_{\alpha\beta} + m_{\beta\beta}\right)\dot{\xi}_5 + c_\varphi + c_\alpha$$
$$+ c_\beta + g_\alpha + g_\beta = 0$$

$\dot{\xi}_4,\dot{\xi}_5$ in formula f is replaced to obtain formula g:

$$\left(m_{\varphi\varphi} + m_{\varphi\alpha} + m_{\varphi\beta}\right)\dot{\xi}_3 - \lambda_1\left(m_{\varphi\alpha} + m_{\alpha\alpha} + m_{\alpha\beta}\right)\xi_4 - \lambda_2\left(m_{\varphi\alpha} + m_{\alpha\alpha} + m_{\alpha\beta}\right)\dot{\xi}_3$$
$$- \lambda_3\left(m_{\varphi\beta} + m_{\alpha\beta} + m_{\beta\beta}\right)\xi_5 - \lambda_4\left(m_{\varphi\beta} + m_{\alpha\beta} + m_{\beta\beta}\right)\dot{\xi}_3 + c_\varphi + c_\alpha + c_\beta$$
$$+ g_\alpha + g_\beta = 0$$

Formula g is sorted to obtain formula h:

$$\left[\left(m_{\varphi\varphi} + m_{\varphi\alpha} + m_{\varphi\beta}\right) - \lambda_2\left(m_{\varphi\alpha} + m_{\alpha\alpha} + m_{\alpha\beta}\right) - \lambda_4\left(m_{\varphi\beta} + m_{\alpha\beta} + m_{\beta\beta}\right)\right]\dot{\xi}_3$$

$$= \lambda_1\left(m_{\varphi\alpha} + m_{\alpha\alpha} + m_{\alpha\beta}\right)\xi_4 + \lambda_3\left(m_{\varphi\beta} + m_{\alpha\beta} + m_{\beta\beta}\right)\xi_5 - c_\varphi - c_\alpha - c_\beta$$

$$- g_\alpha - g_\beta$$

$$= -\lambda_1^2\left(m_{\varphi\alpha} + m_{\alpha\alpha} + m_{\alpha\beta}\right)\xi_1 - \lambda_1\lambda_2\left(m_{\varphi\alpha} + m_{\alpha\alpha} + m_{\alpha\beta}\right)\xi_3$$

$$- \lambda_3^2\left(m_{\varphi\beta} + m_{\alpha\beta} + m_{\beta\beta}\right)\xi_2 - \lambda_3\lambda_4\left(m_{\varphi\beta} + m_{\alpha\beta} + m_{\beta\beta}\right)\xi_3 - c_\varphi - c_\alpha - c_\beta$$

$$- g_\alpha - g_\beta$$

$\dot{\xi}_3$ is reversely expressed through formula h to obtain:

$$\dot{\xi}_3 = \left[\left(m_{\varphi\varphi} + m_{\varphi\alpha} + m_{\varphi\beta}\right) - \lambda_2\left(m_{\varphi\alpha} + m_{\alpha\alpha} + m_{\alpha\beta}\right)\right.$$

$$\left. - \lambda_4\left(m_{\varphi\beta} + m_{\alpha\beta} + m_{\beta\beta}\right)\right]^{-1}\left[-\lambda_1^2\left(m_{\varphi\alpha} + m_{\alpha\alpha} + m_{\alpha\beta}\right)\xi_1\right.$$

$$- \lambda_1\lambda_2\left(m_{\varphi\alpha} + m_{\alpha\alpha} + m_{\alpha\beta}\right)\xi_3 - \lambda_3^2\left(m_{\varphi\beta} + m_{\alpha\beta} + m_{\beta\beta}\right)\xi_2$$

$$\left. - \lambda_3\lambda_4\left(m_{\varphi\beta} + m_{\alpha\beta} + m_{\beta\beta}\right)\xi_3 - c_\varphi - c_\alpha - c_\beta - g_\alpha - g_\beta\right]$$

Simultaneous establishment is performed on the three formulas respectively including $\dot{\xi}_1, \dot{\xi}_2, \dot{\xi}_3$ to obtain equation set 1:

$$\begin{cases} \dot{\xi}_1 = -\lambda_1\xi_1 - \lambda_2\xi_3 \\ \dot{\xi}_2 = -\lambda_3\xi_2 - \lambda_4\xi_3 \\ \dot{\xi}_3 = \left[\begin{array}{c}\left(m_{\varphi\varphi} + m_{\varphi\alpha} + m_{\varphi\beta}\right) - \lambda_2\left(m_{\varphi\alpha} + m_{\alpha\alpha} + m_{\alpha\beta}\right) \\ -\lambda_4\left(m_{\varphi\beta} + m_{\alpha\beta} + m_{\beta\beta}\right)\end{array}\right]^{-1} * \\ \left[\begin{array}{c}-\lambda_1^2\left(m_{\varphi\alpha} + m_{\alpha\alpha} + m_{\alpha\beta}\right)\xi_1 - \lambda_1\lambda_2\left(m_{\varphi\alpha} + m_{\alpha\alpha} + m_{\alpha\beta}\right)\xi_3 \\ -\lambda_3^2\left(m_{\varphi\beta} + m_{\alpha\beta} + m_{\beta\beta}\right)\xi_2 - \lambda_3\lambda_4\left(m_{\varphi\beta} + m_{\alpha\beta} + m_{\beta\beta}\right)\xi_3 \\ -c_\varphi - c_\alpha - c_\beta - g_\alpha - g_\beta\end{array}\right] \end{cases}$$

Due to space constraints, the expression form of the right side of $\dot{\xi}_3$ in equation set 1 is somewhat distorted. "[]" represents an algebraic expression and does not represent a matrix or have any other meaning. Please refer to the expression form of $\dot{\xi}_3$ above equation set 1 to understand the expression form of $\dot{\xi}_3$ in equation set 1.

Equation set 1 may be written as a state equation with respect to a state variable of $(\xi_1, \xi_2, \xi_3)$. In some embodiments, the state equation refers to an equation related to the state parameter value.

For the convenience of reading, $a_1$ is configured for representing $[(m_{\varphi\varphi} + m_{\varphi\alpha} + m_{\varphi\beta}) - \lambda_2(m_{\varphi\alpha} + m_{\alpha\alpha} + m_{\alpha\beta}) - \lambda_4(m_{\varphi\beta} + m_{\alpha\beta} + m_{\beta\beta})]^{-1}$, $m_1$ is configured for representing $-\lambda_1^2(m_{\varphi\alpha} + m_{\alpha\alpha} + m_{\alpha\beta})$, $m_2$ is configured for representing $-\lambda_3^2(m_{\varphi\beta} + m_{\alpha\beta} + m_{\beta\beta})$, $m_3$ is configured for representing $-\lambda_1\lambda_2(m_{\varphi\alpha} + m_{\alpha\alpha} + m_{\alpha\beta}) - \lambda_3\lambda_4(m_{\varphi\beta} + m_{\alpha\beta} + m_{\beta\beta})$, and the state equation may be written as:

$$\begin{bmatrix} \dot{\xi}_1 \\ \dot{\xi}_2 \\ \dot{\xi}_3 \end{bmatrix} = \begin{bmatrix} -\lambda_1 & 0 & -\lambda_2 \\ 0 & -\lambda_3 & -\lambda_4 \\ a_1 m_1 & a_2 m_2 & a_3 m_3 \end{bmatrix}\begin{bmatrix} \xi_1 \\ \xi_2 \\ \xi_3 \end{bmatrix} + \begin{bmatrix} 0 \\ 0 \\ \left(-c_\varphi - c_\alpha - c_\beta - g_\alpha - g_\beta\right)a_1 \end{bmatrix}u$$

In some embodiments, the system stability criterion refers to characteristic root of a coefficient matrix in the state equation determined according to the sliding surface and the dynamics equation being negative, that is, the characteristic roots being distributed in a left half plane of a phase plane.

To ensure that the system satisfies the stability criterion, it is necessary to satisfy that the characteristic roots of

the coefficient matrix $\begin{bmatrix} -\lambda_1 & 0 & -\lambda_2 \\ 0 & -\lambda_3 & -\lambda_4 \\ a_1 m_1 & a_2 m_2 & a_3 m_3 \end{bmatrix}$ are distributed in a left half plane of a complex plane. This state equation can serve as a matrix inequality constraint, that is, the values of the sliding mode parameters need to make the characteristic roots of the coefficient matrix negative.

In some embodiments, in the balance control process in the present disclosure, the robust controller determines the rotation torque of the first rotating joint and the rotation torque of the second rotating joint according to formula d and equation set 1.

In the balance control process, the robust controller calculates the rotation torque $\tau_1$ of the first rotating joint and the rotation torque $\tau_2$ of the second rotating joint according to formula d. Formula d involves the sliding surface $s_1$ and the second sliding surface $s_2$. Formula 2 involves the dynamics model parameters and the sliding mode parameters. The robust controller acquires the state parameter value at the first time point from the sensors, substitutes the state parameter value at the first time point into the corresponding formula to determine the sliding surface $s_1$, the second sliding surface $s_2$, and the dynamics model parameters, finds the sliding mode parameters that satisfy the system stability condition, then calculates the rotation torque $\tau_1$ of the first rotating joint and the rotation torque $\tau_2$ of the second rotating joint through formula d, and simultaneously ensures that the sliding mode parameters satisfy the matrix inequality constraint formed by the state equation above.

In the balance control method provided in the present disclosure, four sliding mode parameters that satisfy the matrix inequality constraint may be first determined, and then a first sliding surface and a second sliding surface are established through the sliding mode parameters.

Alternatively, any four sliding mode parameters may be first selected within a certain value range, a first sliding surface and a second sliding surface are established by using these four sliding mode parameters, and the rotation torque $\tau_1$ of the first rotating joint and the rotation torque $\tau_2$ of the second rotating joint are calculated through formula d, and then whether the four sliding mode parameters satisfy the matrix inequality constraint described above is verified.

In some embodiments, in a case that the four sliding mode parameters satisfy the matrix inequality constraint described above, the determined rotation torque $\tau_1$ of the first rotating joint and rotation torque $\tau_2$ of the second rotating joint can be used; and in a case that the four sliding mode parameters do not satisfy the matrix inequality constraint described above, the determined rotation torque $\tau_1$ of the first rotating joint and rotation torque $\tau_2$ of the second rotating joint cannot be used.

A method of determining sliding mode parameters will be introduced and described below through several embodiments.

In some embodiments, determining at least four sliding mode parameters includes the following operation: the computer device determines a first sliding mode parameter from a first predicted parameter set, a second sliding mode parameter from a second predicted parameter set, a third sliding mode parameter from a third predicted parameter set, and a fourth sliding mode parameter from a fourth predicted parameter set. The sliding mode parameters respectively included in the first predicted parameter set, the second predicted parameter set, the third predicted parameter set, and the fourth predicted parameter set satisfy a constraint condition of a stability criterion.

In this embodiment, after determining the state at the first time point, the robust controller first uses the above state equation as a matrix inequality constraint to determine solution sets respectively corresponding to $\lambda_1$, $\lambda_2$, $\lambda_3$ and $\lambda_4$, i.e., a first predicted parameter set, a second predicted parameter set, a third predicted parameter set, and a fourth predicted parameter set, then selects a first sliding mode parameter, a second sliding mode parameter, a third sliding mode parameter, and a fourth sliding mode parameter respectively from the parameter sets, establishes a first sliding surface and a second sliding surface through the first sliding mode parameter, the second sliding mode parameter, the third sliding mode parameter, the fourth sliding mode parameter and the state parameter value at the first time point, and calculates a rotation torque of the first rotating joint and a rotation torque of the second rotating joint according to formula d above.

In some embodiments, a process of determining any one predicted parameter set of the above four predicted parameter sets includes: calculating characteristic roots of the coefficient matrix $\begin{bmatrix} -\lambda_1 & 0 & -\lambda_2 \\ 0 & -\lambda_3 & -\lambda_4 \\ a_1 m_1 & a_2 m_2 & a_3 m_3 \end{bmatrix}$, and using all characteristic roots corresponding to the coefficient matrix as a predicted parameter set.

This method can avoid selecting sliding mode parameters that do not satisfy system stability, which may result in the inability to control the balance of the wheel-legged robot through the rotation torque of the first rotating joint and the rotation torque of the second rotating joint calculated by using these sliding mode parameters, prevent the computer device from performing ineffective calculation, and help to shorten the time required to determine the rotation torque corresponding to the first rotating joint and the rotation torque corresponding to the second rotating joint.

Next, the robustness control effect of the balance control of the wheel-legged robot under the action of the

44

balance control method provided in this embodiment will be experimentally verified.

FIG. 14 is a schematic simulation diagram of a double-wheel balance control method according to an exemplary embodiment of the present disclosure.

The background of FIG. 14 is as follows. The wheel-legged robot is in a double-wheel mode and is subjected to a lateral disturbance force; after abstracting the wheel-legged robot into an n-level inverted pendulum, a state parameter value of the wheel-legged robot is acquired through a robust controller; a rotation torque of an $n^{th}$ rotating joint is calculated by using the methods in the above embodiments. In addition, the attitudes of leg mechanisms and the attitude of a torso mechanism of the wheel-legged robot are adjusted through the rotation torques of the n rotating joints. Referring to FIG. 14, in a case of being subjected to the lateral disturbance force, the wheel-legged robot simultaneously adjusts the attitudes of the n links of the wheel-legged robot, so that the wheel-legged robot swings forwards and backwards. Moving wheels connected to two outer leg mechanisms maintain balance on a contact surface, and the torso mechanism also moves properly to adjust the gravity center of and the force acting on the wheel-legged robot, so as to help the wheel-legged robot to quickly restore to a balanced state on the whole.

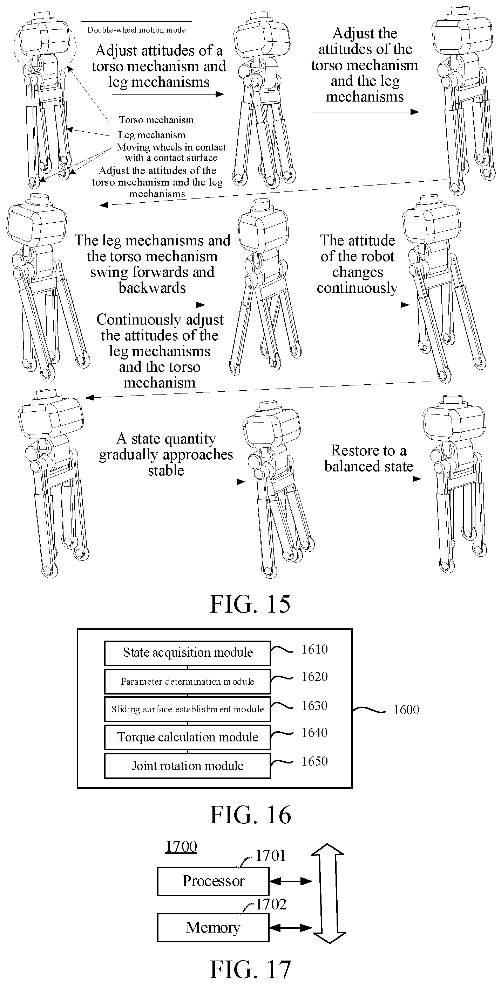

FIG. 15 is a schematic simulation diagram of a double-wheel balance control method according to another exemplary embodiment of the present disclosure. The background of FIG. 15 is as follows. The wheel-legged robot is in a double-wheel motion mode. In this embodiment, n is equal to 2, that is, the balance control of the wheel-legged robot is performed based on a double inverted pendulum model. The wheel-legged robot falls from a high position. When coming into contact with a contact surface, there is an initial angle between the leg mechanism and the z-axis. When the wheel-legged robot starts moving from an initial position relatively far from a balance point and falls to the ground, the two outer leg mechanisms act like springs. Due to the significant impact received, the first rotating joints control the two outer leg mechanisms to shake forwards and backwards significantly to maintain the balance attitude of the robot. The (n-1) links above the leg mechanisms (i.e., the first mechanisms) also move significantly and properly to adjust the gravity center and the force, so as to help the robot to quickly restore a balanced state on the whole.

What is described below is an apparatus embodiment of the present disclosure, which may be configured for executing the method embodiment of the present disclosure. For details that are not disclosed in the apparatus embodiment of the present disclosure, please refer to the method embodiment of the present disclosure.

Please refer to FIG. 16. It shows a block diagram of a balance control apparatus for a wheel-legged robot according to an embodiment of the present disclosure. This apparatus has a function of implementing the balance control method for the wheel-legged robot described above. The function may be implemented by hardware or by executing corresponding software through hardware. This apparatus may be the computer device introduced above or may be arranged in the computer device. The wheel-legged robot includes a moving wheel, n links, and n rotating joints, the moving wheel being connected to a first link of the n links through a first rotating joint of the n rotating joints, the n links being connected in series through n-1 rotating joints other than the first rotating joint, n being a positive integer greater than or equal to 3.

Referring to FIG. 16, the apparatus 1600 may include a state acquisition module 1610, a parameter determination module 1620, a sliding surface establishment module 1630, a torque calculation module 1640, and a joint rotation module 1650.

The state acquisition module 1610 is configured to acquire a state parameter value of the wheel-legged robot at a first time point. The state parameter value at the first time point indicates a motion state of the wheel-legged robot at the first time point.

The parameter determination module 1620 is configured to determine dynamics model parameters according to a dynamics equation of the wheel-legged robot and the state parameter value at the first time point. The dynamics model parameters are configured for defining a mapping relationship between an angular acceleration at the first time point and a rotation torque at a second time point. The angular acceleration at the first time point includes angular accelerations of the n links and an angular acceleration of the moving wheel. The rotation torque at the second time point includes rotation torques of the n rotating joints.

The sliding surface establishment module 1630 is configured to establish a sliding surface according to the state parameter value at the first time point. The state parameter value of the wheel-legged robot gradually approaches a stable value on the sliding surface.

The torque calculation module 1640 is configured to calculate the rotation torques of the n rotating joints according to the sliding surface and the dynamics model parameters.

The joint rotation module 1650 is configured to control the n rotating joints according to the rotation torques of the n rotating joints at the second time point.

In some embodiments, the parameter determination module 1620 includes: a matrix calculation unit configured to substitute the state parameter value at the first time point into the dynamics equation to determine an inertia matrix, a bias force matrix, and a gravity matrix at the first time point, where the inertia matrix indicates masses and moments of inertia of the n rotating joints at the first time point, the bias force matrix indicates a bias force of the wheel-legged robot at the first time point, and the gravity matrix indicates a gravity of the wheel-legged robot at the first time point; and a parameter determination unit configured to determine the dynamics model parameters according to the inertia matrix, the bias force matrix, and the gravity matrix.

In some embodiments, the dynamics model parameters include a proportion parameter matrix and an offset parameter matrix. The proportion parameter matrix indicates a proportional relationship between the angular acceleration at the first time point and the rotation torque at the second time point. The offset parameter matrix indicates an offset relationship between the angular acceleration at the first time point and the rotation torque at the second time point. The parameter determination unit is configured to respectively process a product of an inverse matrix of the inertia matrix and the bias force matrix and a product of the inverse matrix of the inertia matrix and the gravity matrix by using a selection matrix to obtain the offset parameter matrix, where the selection matrix is configured for extracting the rotation torques of the n rotating joints from the dynamics equation; and process the inverse matrix of the inertia matrix by using the selection matrix to obtain the proportion parameter matrix.

In some embodiments, the dynamics equation of the robot is obtained by abstracting the wheel-legged robot into an n-level inverted pendulum model and performing derivation based on an Euler-Lagrange equation.

In some embodiments, the sliding surface includes n sliding surfaces, and the n sliding surfaces are configured for constraining the rotation torques of the n rotating joints; the sliding surface establishment module 1630 includes: a sliding mode parameter determination unit configured to determine at least two sliding mode parameters for an $i^{th}$ sliding surface of the n sliding surfaces, where i is a positive integer less than or equal to n; and a sliding surface establishment unit configured to establish the $i^{th}$ sliding surface according to the at least two sliding mode parameters and the state parameter value at the first time point.

In some embodiments, the sliding mode parameter determination unit is configured to determine a first sliding mode parameter of the at least one sliding mode parameters from a $(2i-1)^{th}$ predicted parameter set, and determine a second sliding mode parameter of the at least one sliding mode parameters from a $(2i)^{th}$ predicted parameter set. Sliding mode parameters respectively included in the $(2i-1)^{th}$ predicted parameter set and the $(2i)^{th}$ predicted parameter set satisfy a constraint condition of a stability criterion.

In some embodiments, the state parameter value at the first time point includes deflection angles of the n links, angular velocities of the n links, and an angular velocity of the moving wheel; the sliding surface establishment unit is configured to process the deflection angle of an $i^{th}$ link according to the first sliding mode parameter of the at least two sliding mode parameters to obtain a processing result of the $i^{th}$ link; process the angular velocity of the moving wheel according to the second sliding mode parameter of the at least two sliding mode parameters to obtain a processing result of the moving wheel; and establish the $i^{th}$ sliding surface according to the processing result of the $i^{th}$ link, the processing result of the moving wheel, and the angular velocity of the $i^{th}$ link.

In some embodiments, the joint rotation module 1650 is configured to, for any rotating joint of the n rotating joints, control a rotating motor corresponding to the rotating joint to rotate according to the rotation torque of the rotating joint.

In some embodiments, the joint rotation module 1650 is configured to calculate a task acceleration of the wheel-legged robot at the second time point according to the rotation torques of the n rotating joints, where the task acceleration is an acceleration related to a mass center of the wheel-legged robot; determine force and torque instructions for whole body joints of the wheel-legged robot at the second time point according to the task acceleration, where the whole body joints includes the n rotating joints; and control the whole body joints according to the force and torque instructions at the second time point.

In some embodiments, the joint rotation module 1650 is configured to determine an angular acceleration at the second time point according to the dynamics equation and the rotation torques of the n rotating joints; determine an expected incremental position and an expected incremental speed of the mass center of the wheel-legged robot at the second time point according to the state parameter value at the first time point and the angular acceleration at the second time point, where the expected incremental position indicates a distance between a projection of the mass center of the wheel-legged robot on a contact surface and a virtual contact point in a first direction, the expected incremental speed indicates a changing speed of the distance in the first direction, and the virtual contact point refers to a center of each contact point between the wheel-legged robot and the contact surface; and determine the task acceleration of the wheel-legged robot at the second time point according to the expected incremental position and the expected incremental speed.

In some embodiments, the state parameter value includes deflection angles of the n links, angular velocities of the n links, and an angular velocity of the moving wheel; the state acquisition module 1610 is configured to determine the deflection angles of the n links through an inertial measurement unit and a motor encoder of the wheel-legged robot; and determine the angular velocities of the n links and the angular velocity of the moving wheel through the motor encoder.

In some embodiments, the moving wheel refers to a virtual wheel formed by the superposition of at least two real wheels of the wheel-legged robot that do not overlap in a first direction, the first link refers to a virtual first link formed by the superposition of at least two real first links of the wheel-legged robot that do not overlap in the first direction, and the first direction refers to a forward direction of the wheel-legged robot.

In some embodiments, the state parameter value includes deflection angles of the n links, angular velocities of the n links, and an angular velocity of the moving wheel; the state acquisition module 1610 is configured to determine the deflection angles of other links except for the first link of the n links and the deflection angle of each real first link through an inertial measurement unit and a motor encoder of the wheel-legged robot; and determine the angular velocities of other links except for the first link of the n links, the angular velocity of each real first link, and the angular velocity of each real wheel through the motor encoder; determine the angular velocity of the moving wheel according to the angular velocity of each real wheel; and determine the deflection angle and angular velocity of the first link according to the length, deflection angle and angular velocity of each real first link.

When the apparatus provided in the above embodiment implements the functions of the apparatus, only division of the above functional modules is described by using examples. In a practical application, the functions may be completed by different functional modules as required. To be specific, a content structure of a device is divided into different functional modules to complete all or part of the functions described above. In addition, the apparatus and method embodiments provided in the above embodiments belong to the same conception. For the specific implementation process, a reference may be made to the method embodiments, which will not be repeated here.

FIG. 17 is a structural block diagram of a computer device 1700 according to an embodiment of the present disclosure. The computer device 1700 may be any electronic device having data computing, processing, and storage functions. The computer device 1700 may be configured to implement the balance control method for the wheel-legged robot provided in the above embodiments.

Generally, the computer device 1700 includes: a processor 1701 and a memory 1702.

The processor 1701 may include one or more processing cores, for example, a 4-core processor or an 8-core processor. The processor 1701 may be implemented in at least one hardware form of a Digital Signal Processor (DSP), a Field-Programmable Gate Array (FPGA), and a Programmable Logic Array (PLA). The processor 1701 may also include a main processor and a coprocessor. The main processor is configured to process data in an active state, also referred to as a Central Processing Unit (CPU). The coprocessor is a low power consumption processor configured to process data in a standby state. In some embodiments, the processor 1701 may be integrated with a Graphics Processing Unit (GPU). The GPU is configured to render and draw content that needs to be displayed on a display screen. In some embodiments, the processor 1701 may also include an Artificial Intelligence (AI) processor. The AI processor is configured to process a computing operation related to machine learning.

The memory 1702 may include one or more computer-readable storage media. The computer-readable storage medium may be non-transient. The memory 1702 may further include a high-speed random access memory and a nonvolatile memory, for example, one or more disk storage devices or flash storage devices. In some embodiments, the non-transient computer-readable storage medium in the memory 1702 is configured to store a computer program. The computer program is configured to be executed by one or more processors to implement the above balance control method for the wheel-legged robot.

A person skilled in the art may understand that the structure shown in FIG. 17 constitutes no limitation on the computer device 1700, it may include more or fewer components than those shown in the figure, or some components may be combined, or a different component deployment may be adopted.

In an exemplary embodiment, a computer-readable storage medium is further provided. The computer-readable storage medium has a computer program stored therein. The computer program, when executed by a processor of a computer device, implements the above balance control method for the wheel-legged robot. In some embodiments, the computer-readable storage medium may be a Read-Only Memory (ROM), a Random Access Memory (RAM), a Compact Disc Read-Only Memory (CD-ROM), a magnetic tape, a floppy disk, an optical data storage device, or the like.

In an exemplary embodiment, a computer program product is further provided. The computer program product includes a computer program. The computer program is stored in a computer-readable storage medium. A processor of a computer device reads the computer program from the computer-readable storage medium. The processor executes the computer program to cause the computer device to perform the above balance control method for the wheel-legged robot.

"Plurality of" mentioned in the specification means two or more. "And/or" describes an association relationship for describing associated objects, and represents that three relationships may exist. For example, A and/or B may represent the following three cases: only A exists, both A and B exist, and only B exists. The character "/" in this specification generally indicates an "or" relationship between the associated objects. In addition, the operation numbers described in this specification merely exemplarily show a possible execution sequence of the operation s. In some other embodiments, the operation s may not be performed according to the number sequence. For example, two operation s with different numbers may be performed simultaneously, or two operation s with different numbers may be performed according to a sequence contrary to the sequence shown in the figure. This is not limited in the embodiments of the present disclosure.

**Claims**

1. A balance control method for a wheel-legged robot, the method being executed by a computer device, the wheel-legged robot comprising: a moving wheel, n links, and n rotating joints, the moving wheel being connected to a first link of the n links through a first rotating joint of the n rotating joints, and the n links being connected in series through n-1 rotating joints other than the first rotating joint, where n being a positive integer greater than or equal to 2; the method comprising:

    acquiring a state parameter value of the wheel-legged robot, the state parameter value indicating a motion state of the wheel-legged robot at the first time point;
    determining dynamics model parameters for the wheel-legged robot according to a dynamics motion model and the state parameter value, the dynamics model parameters defining a mapping relationship between an angular acceleration at the first time point and a rotation torque at a second time point, the angular acceleration at the first time point comprising angular accelerations of the n links and an angular acceleration of the moving wheel, and the rotation torque at the second time point comprising rotation torques of the n rotating joints;
    establishing a sliding surface according to the state parameter value, the state parameter value of the wheel-legged robot approaching a stable value on the sliding surface;
    calculating the rotation torques of the n rotating joints according to the sliding surface and the dynamics model parameters; and
    controlling the n rotating joints according to the rotation torques of the n rotating joints at the second time point.

2. The method according to claim 1, wherein the determining dynamics model parameters according to a dynamics motion model and the state parameter value comprises:

    substituting the state parameter value at the first time point into the dynamics motion model to determine an inertia matrix, a bias force matrix, and a gravity matrix at the first time point, the inertia matrix indicating masses and moments of inertia of the n rotating joints at the first time point, the bias force matrix indicating a bias force of the wheel-legged robot at the first time point, the gravity matrix indicating a gravity of the wheel-legged robot at the first time point; and
    determining the dynamics model parameters according to the inertia matrix, the bias force matrix, and the gravity matrix.

3. The method according to claim 2, wherein the dynamics model parameters comprise: a proportion parameter matrix and an offset parameter matrix, the proportion parameter matrix indicating a proportional relationship between the angular acceleration at the first time point and the rotation torque at the second time point, the offset parameter matrix indicating an offset relationship between the angular acceleration at the first time point and the rotation torque at the second time point;
the determining the dynamics model parameters according to the inertia matrix, the bias force matrix, and the gravity matrix comprises:

    processing, by using a selection matrix, a product of an inverse matrix of the inertia matrix and the bias force matrix and a product of the inverse matrix of the inertia matrix and the gravity matrix respectively, to obtain the offset parameter matrix , the selection matrix being configured for extracting the rotation torques of the n rotating joints from the dynamics motion model; and
    processing the inverse matrix of the inertia matrix by using the selection matrix to obtain the proportion parameter matrix.

4. The method according to any one of claims 1 to 3, wherein the dynamics motion model of the robot is obtained by abstracting the wheel-legged robot into an n-level inverted pendulum model and performing derivation based on an Euler-Lagrange equation.

5. The method according to any one of claims 1 to 4, wherein the sliding surface comprises n sliding surfaces, and the n sliding surfaces are configured for constraining the rotation torques of the n rotating joints;
the establishing a sliding surface according to the state parameter value comprises:

    determining at least two sliding mode parameters for an $i^{th}$ sliding surface of the n sliding surfaces, i being a positive integer less than or equal to n; and
    establishing the $i^{th}$ sliding surface according to the at least two sliding mode parameters and the state parameter value.

6. The method according to claim 5, wherein the determining at least two sliding mode parameters for an $i^{th}$ sliding surface of the n sliding surfaces comprises:

determining a first sliding mode parameter of the at least two sliding mode parameters from a $(2i-1)^{th}$ predicted parameter set, and determining a second sliding mode parameter of the at least two sliding mode parameters from a $(2i)^{th}$ predicted parameter set, wherein

sliding mode parameters respectively comprised in the $(2i-1)^{th}$ predicted parameter set and the $(2i)^{th}$ predicted parameter set satisfy a constraint condition of a stability criterion.

7. The method according to claim 5 or 6, wherein the state parameter value comprises: deflection angles of the n links, angular velocities of the n links, and an angular velocity of the moving wheel;

the establishing the $i^{th}$ sliding surface according to the at least two sliding mode parameters and the state parameter value comprises:

processing the deflection angle of an $i^{th}$ link according to the first sliding mode parameter of the at least two sliding mode parameters to obtain a processing result of the $i^{th}$ link;

processing the angular velocity of the moving wheel according to the second sliding mode parameter of the at least two sliding mode parameters to obtain a processing result of the moving wheel; and

establishing the $i^{th}$ sliding surface according to the processing result of the $i^{th}$ link, the processing result of the moving wheel, and the angular velocity of the $i^{th}$ link.

8. The method according to any one of claims 1 to 7, wherein the controlling the n rotating joints according to the rotation torques of the n rotating joints comprises:

for a rotating joint of the n rotating joints, controlling a rotating motor corresponding to the rotating joint to rotate according to the rotation torque of the rotating joint.

9. The method according to any one of claims 1 to 7, wherein the controlling the n rotating joints according to the rotation torques of the n rotating joints comprises:

calculating a task acceleration of the wheel-legged robot at the second time point according to the rotation torques of the n rotating joints, the task acceleration comprising an acceleration related to a mass center of the wheel-legged robot;

determining force and torque instructions for whole body joints of the wheel-legged robot at the second time point according to the task acceleration, the whole body joints comprising the n rotating joints; and

controlling the whole body joints according to the force and torque instructions at the second time point.

10. The method according to claim 9, wherein the calculating a task acceleration of the wheel-legged robot at the second time point according to the rotation torques of the n rotating joints comprises:

determining an angular acceleration at the second time point according to the dynamics motion model and the rotation torques of the n rotating joints;

determining an expected incremental position and an expected incremental speed of the mass center of the wheel-legged robot at the second time point according to the state parameter value and the angular acceleration at the second time point, the expected incremental position indicating a distance between a projection of the mass center of the wheel-legged robot on a contact surface and a virtual contact point in a first direction, the expected incremental speed indicating a changing speed of the distance in the first direction, the virtual contact point referring to a center of each contact point between the wheel-legged robot and the contact surface; and

determining the task acceleration of the wheel-legged robot at the second time point according to the expected incremental position and the expected incremental speed.

11. The method according to any one of claims 1 to 10, wherein the state parameter value comprises: the deflection angles of the n links, the angular velocities of the n links, and the angular velocity of the moving wheel;

the acquiring a state parameter value of the wheel-legged robot comprises:

determining the deflection angles of the n links through an inertial measurement unit and a motor encoder of the wheel-legged robot; and

determining the angular velocities of the n links and the angular velocity of the moving wheel through the motor encoder.

12. A balance control apparatus for a wheel-legged robot, the wheel-legged robot comprising: a moving wheel, n links, and n rotating joints, the moving wheel being connected to a first link of the n links through a first rotating joint of the n rotating joints, and the n links being connected in series through n-1 rotating joints other than the first rotating joint, where n being a positive integer greater than or equal to 2; the apparatus comprising:

a state acquisition module configured to acquire a state parameter value of the wheel-legged robot, the state parameter value indicating a motion state of the wheel-legged robot at the first time point;

a parameter determination module configured to determine dynamics model parameters for the wheel-legged robot according to a dynamics motion model and the state parameter value, the dynamics model parameters defining a mapping relationship between an angular acceleration at the first time point and a rotation torque at a second time point, the angular acceleration at the first time point comprising angular accelerations of the n links and an angular acceleration of the moving wheel, and the rotation torque at the second time point comprising rotation torques of the n rotating joints;

a sliding surface establishment module configured to establish a sliding surface according to the state parameter value, the state parameter value of the wheel-legged robot approaching a stable value on the sliding surface;

a torque calculation module configured to calculate the rotation torques of the n rotating joints according to the sliding surface and the dynamics model parameters; and

a joint rotation module configured to control the n rotating joints according to the rotation torques of the n rotating joints at the second time point.

13. A computer device, comprising a processor and a memory, the memory having a computer program stored therein, the computer program being loaded and executed by the processor to implement the balance control method for the wheel-legged robot according to any one of claims 1 to 11.

14. A computer-readable storage medium, the computer-readable storage medium having a computer program stored therein, the computer program being loaded and executed by a processor to implement the balance control method for the wheel-legged robot according to any one of claims 1 to 11.

15. A computer program product, comprising a computer program, the computer program being loaded and executed by a processor to implement the balance control method for the wheel-legged robot according to any one of claims 1 to 11.

FIG. 1

FIG. 2

FIG. 3

FIG. 4

FIG. 5

First state    Second state    Third state    Fourth state

First phase    Second phase    Third phase

FIG. 6

Go upstairs

Go downstairs

FIG. 7

FIG. 8

FIG. 9

FIG. 10

| | |
|---|---|
| Acquire a state parameter value of a wheel-legged robot, the state parameter value indicating a motion state of the wheel-legged robot at the first time point | 1110 |
| Determine dynamics model parameters for the wheel-legged robot according to a dynamics motion model and the state parameter value, the dynamics model parameters defining a mapping relationship between an angular acceleration at the first time point and a rotation torque at a second time point; the angular acceleration at the first time point including angular accelerations of n links and an angular acceleration of a moving wheel; and the rotation torque at the second time point including rotation torques of n rotating joints | 1120 |
| Establish a sliding surface according to the state parameter value, the state parameter value of the wheel-legged robot gradually approaching a stable value on the sliding surface | 1130 |
| Calculate the rotation torques of the n rotating joints according to the sliding surface and the dynamics model parameters | 1140 |
| Control the n rotating joints according to the rotation torques of the n rotating joints at the second time point | 1150 |

FIG. 11

FIG. 12

1310

Acquire a state parameter value of the wheel-legged robot, the state parameter value indicating a motion state of the wheel-legged robot at the first time point

1320

Determine dynamics model parameters according to the dynamics equation of the wheel-legged robot and the state parameter value

1330

Establish a sliding surface according to the state parameter value, the state parameter value of the wheel-legged robot gradually approaching a stable value on the sliding surface

1340

Calculate a rotation torque of a first rotating joint and a rotation torque of a second rotating joint according to the sliding surface and the dynamics model parameters

1350

At a second time point, adjust an included angle between a leg mechanism and a moving wheel according to the rotation torque of the first rotating joint, and adjust an included angle between a torso mechanism and the leg mechanism according to the rotation torque of the second rotating joint

1323

Substitute the state parameter value at the first time point into a dynamics equation to determine an inertia matrix, a bias force matrix, and a gravity matrix at the first time point

1326

Determine the dynamics model parameters according to the inertia matrix, the bias force matrix, and the gravity matrix

1333

A robust controller determines at least four sliding mode parameters, where the sliding mode parameters are configured for constraining the rotation torque of the first joint and the rotation torque of the second joint to satisfy a system stability condition of the wheel-legged robot

1336

Establish a first sliding surface and a second sliding surface according to the state parameter value and at least four sliding mode parameters

FIG. 13

z-axis

x-axis

y-axis

Wheel-legged robot

Repetitively adjust attitudes of n links

The robot reaches a balanced state

FIG. 14

57

Double-wheel motion mode

Adjust attitudes of a torso mechanism and leg mechanisms

Adjust the attitudes of the torso mechanism and the leg mechanisms

Torso mechanism
Leg mechanism
Moving wheels in contact with a contact surface
Adjust the attitudes of the torso mechanism and the leg mechanisms

The leg mechanisms and the torso mechanism swing forwards and backwards

The attitude of the robot changes continuously

Continuously adjust the attitudes of the leg mechanisms and the torso mechanism

A state quantity gradually approaches stable

Restore to a balanced state

FIG. 15

| | |
|---|---|
| State acquisition module | 1610 |
| Parameter determination module | 1620 |
| Sliding surface establishment module | 1630 |
| Torque calculation module | 1640 |
| Joint rotation module | 1650 |

1600

FIG. 16

1700

Processor 1701

Memory 1702

FIG. 17

## INTERNATIONAL SEARCH REPORT

International application No.

**PCT/CN2023/134493**

### A. CLASSIFICATION OF SUBJECT MATTER

G05D1/00(2024.01)i

According to International Patent Classification (IPC) or to both national classification and IPC

### B. FIELDS SEARCHED

Minimum documentation searched (classification system followed by classification symbols)

IPC:G05D1 B25J9 B62D57

Documentation searched other than minimum documentation to the extent that such documents are included in the fields searched

Electronic data base consulted during the international search (name of data base and, where practicable, search terms used)

CNTXT; CNKI; ENTXTC; VEN; ENTXT; IEEE: 腾讯, 机器人, 轮, 腿, 足, 连杆, 关节, 倒立摆, 动力学, 模型, 方程, 逆, 变换, 速度, 角度, 加速度, 力矩, 转矩, 滑模, 惯性, 选择矩阵, 质心, 重心, robot, walking, balance, wheel, leg+, joint, link, acceleratio n, position, dynamics, matrix, torque, sliding surface

### C. DOCUMENTS CONSIDERED TO BE RELEVANT

| Category* | Citation of document, with indication, where appropriate, of the relevant passages | Relevant to claim No. |
|---|---|---|
| A | CN 115291514 A (ZHEJIANG LAB) 04 November 2022 (2022-11-04) description, paragraphs [0003]-[0101], and figures 1-4 | 1-15 |
| A | CN 102452077 A (SONY CORP.) 16 May 2012 (2012-05-16) entire document | 1-15 |
| A | CN 110764413 A (INSTITUTE OF AUTOMATION, CHINESE ACADEMY OF SCIENCES) 07 February 2020 (2020-02-07) entire document | 1-15 |
| A | CN 111522243 A (HEBEI UNIVERSITY OF TECHNOLOGY) 11 August 2020 (2020-08-11) entire document | 1-15 |
| A | CN 113753150 A (TENCENT TECHNOLOGY (SHENZHEN) CO., LTD.) 07 December 2021 (2021-12-07) entire document | 1-15 |
| A | CN 115903874 A (UBTECH ROBOTICS CORP.) 04 April 2023 (2023-04-04) entire document | 1-15 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 March 2024** | **05 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/134493** |

**C.    DOCUMENTS CONSIDERED TO BE RELEVANT**

| Category* | Citation of document, with indication, where appropriate, of the relevant passages | Relevant to claim No. |
|---|---|---|
| A | KR 20120069923 A (SAMSUNG ELECTRONICS CO., LTD.) 29 June 2012 (2012-06-29) entire document | 1-15 |
| A | US 2016016308 A1 (HONDA MOTOR CO., LTD.) 21 January 2016 (2016-01-21) entire document | 1-15 |

Form PCT/ISA/210 (second sheet) (July 2022)

## INTERNATIONAL SEARCH REPORT
### Information on patent family members

International application No.

**PCT/CN2023/134493**

| Patent document cited in search report | | | Publication date (day/month/year) | Patent family member(s) | | | Publication date (day/month/year) |
|---|---|---|---|---|---|---|---|
| CN | 115291514 | A | 04 November 2022 | None | | | |
| CN | 102452077 | A | 16 May 2012 | CN | 102452077 | B | 25 November 2015 |
| CN | 110764413 | A | 07 February 2020 | None | | | |
| CN | 111522243 | A | 11 August 2020 | None | | | |
| CN | 113753150 | A | 07 December 2021 | None | | | |
| CN | 115903874 | A | 04 April 2023 | None | | | |
| KR | 20120069923 | A | 29 June 2012 | KR | 101778027 | B1 | 13 September 2017 |
| US | 2016016308 | A1 | 21 January 2016 | US | 9481083 | B2 | 01 November 2016 |

Form PCT/ISA/210 (patent family annex) (July 2022)

**REFERENCES CITED IN THE DESCRIPTION**

**Patent documents cited in the description**

- CN 202310876039